# EUROPÄISCHE PATENTSCHRIFT

(11) **EP 3 888 911 B1**
(45) Veröffentlichungstag und Bekanntmachung des Hinweises auf die Patenterteilung: **16.02.2022**
(21) Anmeldenummer: 20190864.7
(22) Anmeldetag: 13.08.2020
(51) Int. Cl.: B32B 27/08, B32B 27/32, C08J 11/04, B32B 15/08

(54) **METALLISIERTE VERPACKUNGSFOLIEN AUS RECYCLING-KUNSTSTOFFEN**
METALLIZED PACKAGING FILMS MADE FROM RECYCLED PLASTICS
FEUILLES D'EMBALLAGE MÉTALLISÉES EN MATIÈRES PLASTIQUES RECYCLÉES

(30) Priorität: 03.04.2020 DE 102020109370; 23.04.2020 DE 102020111086
(43) Veröffentlichungstag der Anmeldung: 06.10.2021
(73) Patentinhaber: KBG Kunststoff Beteiligungen GmbH, 58840 Plettenberg (DE)
(72) Erfinder: RIEKER, Frank, 59077 Hamm (DE)
(74) Vertreter: Strehlke, Ingo Kurt

(56) Entgegenhaltungen:
- EP-A1- 0 653 454

## Beschreibung

Die vorliegende Erfindung betrifft das Gebiet des Abfallrecycling, insbesondere das Recycling (Rezyklierung) von Kunststoffabfällen, insbesondere zur Herstellung von Kunststofffolien, insbesondere Verpackungsfolien, auf Basis von Kunststoffrezyklat (vorzugsweise Kunststoffrezyklat in Form von sogenanntem Post-Consumer-Kunststoffrezyklat, synonym auch als PCR-Kunststoffrezyklat bezeichnet, insbesondere Kunststoffrezyklat in Form von PCR-Recyclingfolien), wobei die Kunststofffolien zusätzlich Sperrschichteigenschaften (d. h. Barriereeigenschaften), insbesondere gegenüber Wasserdampf und/oder Gasen (vorzugsweise Sauerstoff), bevorzugt gegenüber Wasserdampf und Gasen (vorzugsweise Sauerstoff), aufweisen.

Insbesondere betrifft die vorliegende Erfindung eine mehrschichtige Kunststofffolie, insbesondere eine mehrschichtige Kunststoffverbundfolie, vorzugsweise eine mehrschichtige Kunststoffverpackungsfolie, auf Basis von Kunststoffrezyklat (Recyclingkunststoff), insbesondere auf Basis von aus Abfall stammendem Kunststoffrezyklat (vorzugsweise Kunststoffrezyklat in Form von sogenanntem Post-Consumer-Kunststoffrezyklat, synonym auch als PCR-Kunststoffrezyklat bezeichnet, insbesondere Kunststoffrezyklat in Form von PCR-Recyclingfolien), wobei die Kunststofffolie zudem Sperrschichteigenschaften (d. h. Barriereeigenschaften), insbesondere gegenüber Wasserdampf und/oder Gasen (vorzugsweise Sauerstoff), bevorzugt gegenüber Wasserdampf und Gasen (vorzugsweise Sauerstoff), aufweist.

Des Weiteren betrifft die vorliegende Erfindung die Verwendung einer mehrschichtigen Kunststofffolie gemäß der vorliegenden Erfindung zur Herstellung von Verpackungsmaterial und/oder als Verpackungsmaterial.

Schließlich betrifft die vorliegende Erfindung ein Verpackungsmaterial, welches mindestens eine mehrschichtige Kunststofffolie gemäß der vorliegenden Erfindung umfasst.

In Deutschland fallen jährlich in etwa 2,5 Millionen Tonnen Verpackungsmüll bzw. Kunststoffabfall (Plastikabfall) an, wobei ein Großteil hiervon auf Deponien gelagert wird oder in Müllverbrennungsanlagen thermisch entsorgt wird. Für die Fertigung von Produkten, welche auf Kunststoff (synonym auch als "Plastik" bezeichnet) basieren, werden hauptsächlich aus zumeist fossilen Rohstoffen (wie z. B. Erdöl, Erdgas, Kohle etc.) neu hergestellte Kunststoffe (sogenannte "Neumaterialien" oder "Primärkunststoffe") verwendet; d. h. zur Herstellung derartiger kunststoffbasierter Produkte werden üblicherweise keine Kunststoffabfälle bzw. Rezyklatkunststoffe verwendet, sondern hauptsächlich aus endlichen natürlichen Rohstoffen, wie beispielsweise Erdöl, Kohle oder Erdgas, durch chemische Syntheseverfahren hergestellte Neukunststoffe bzw. Primärkunststoffe.

Auch können Altkunststoffe nicht durch biologische Abbauprozesse oder anderweitig wieder in ihre Ausgangsstoffe umgewandelt werden, so dass durch die ständige Neuproduktion von Kunststoffen die Rohstoffvorräte der Erde maßgeblich reduziert werden, weshalb eine Wiederverwertung bzw. Recycling (Rezyklierung) einen immer größeren Stellenwert in der Gesellschaft einnimmt. Auch kann die stetig steigende Menge an Abfällen, insbesondere kunststoffbasierten Abfällen, nicht mehr ohne Weiteres gelagert oder anderweitig entsorgt werden, so dass auch durch die hierdurch bedingte Umweltbelastung eine Rezyklierung notwendig ist.

Unter dem Begriff "Recycling" bzw. "Recyclingprozessen" (synonym auch "Rezyklierung" bzw. "Rezyklierungsprozesse") werden insbesondere solche Verfahren bzw. Prozesse verstanden, bei welchen Rohstoffe aus Abfällen gewonnen werden, die wiederum in den Wirtschaftskreislauf zurückgeführt werden, insbesondere zu neuen Produkten verarbeitet werden; diese Prozesse werden auch als stoffliche Verwertung bezeichnet. Durch solche Prozesse werden die anfallenden Abfallmengen, insbesondere die andernfalls zu verbrennenden bzw. zu deponierenden Abfallmengen, maßgeblich vermindert, während gleichzeitig die endlichen Rohstoffvorräte der Erde geschont werden. In diesem Zusammenhang ist zu beachten, dass der Begriff "Recycling" die (Rück-)Gewinnung von Neurohstoffen durch tatsächlichen Abfall bezeichnet, nicht aber beispielsweise die Wiederverwendung bzw. Weiterverwendung von Produktionsresten. Insbesondere kann es sich bei dem zu rezyklierenden Kunststoffabfall beispielsweise um Folien oder Verpackungen handeln, welche z. B. schon im Drittgebrauch waren und dem Endkundennutzen zugeführt wurden.

Der Begriff der Rezyklierung (Recycling) steht also in diesem Zusammenhang insbesondere für eine Wiederverwertung oder Wiederaufbereitung und beschreibt insbesondere ein Verwertungsverfahren, durch welches kunststoffbasierte Abfälle (Kunststoffabfälle) zu Erzeugnissen, Materialien oder Stoffen entweder für den ursprünglichen Zweck oder für andere Zwecke aufbereitet werden (vgl. hierzu auch § 3 Absatz 25 des deutsches Kreislaufwirtschaftsgesetzes). Der Begriff schließt also insbesondere auch die Aufbereitung organischer Materialien ein, nicht aber die energetische Verwertung und die Aufbereitung zu Materialien, welche für die Verwendung als Brennstoff oder zu Verfüllung bestimmt sind.

Der Begriff der Rezyklate bezeichnet in diesem Zusammenhang insbesondere Sekundärstoffe als Basis für die Herstellung von (Qualitäts-)Neuprodukten, d. h. wiederverwertete Kunststoffe aus kunststoffbasierten Abfällen (Kunststoffabfällen), insbesondere aus sogenannten Post-Consumer-Abfällen.

Der Begriff der Regenerate dagegen, welcher gegenüber Rezyklaten abzugrenzen ist, bezeichnet insbesondere Materialmengen, welche aus innerbetrieblichen Produktionsabfällen stammen und, üblicherweise nach einer geeigneten Zerkleinerung, direkt wieder in den Verarbeitungsprozess zurückgeführt werden können. Derartige Materialien sind also nicht unter den Begriff der Rezyklate zu subsumieren.

Speziell das sogenannte Post-Consumer-Recycling (PCR) bezeichnet insbesondere die Wiederaufbereitung von sogenannten Post-Consumer-Abfällen, insbesondere also Kunststoffabfällen, welche bei Verbrauchern und insbesondere in Haushalten, Büros und dem stationären Handel entstehen.

Die Rezyklierung von Kunststoffabfällen wird insbesondere in Deutschland seit dem Jahr 1990 dadurch erleichtert, dass eine getrennte Abfallsammlung eingeführt wurde (duales Abfallsammel- und -verwertungssystem bzw. "Grüner Punkt"), wodurch bereits eine Vorsortierung durch den Verbraucher stattfindet. Denn zur Wiederverwendung der Abfälle in der Neuproduktion ist ein möglichst sortenreiner Abfall bzw. ein möglichst sortenreines Abfallmaterial notwendig.

Im Recyclingprozess müssen dann die trotz einer ersten Vortrennung bzw. Vorsortierung durch den Verbraucher noch sortenunreinen Abfälle weiterführend sortiert bzw. getrennt werden. Beispielsweise liegt im Fall von kunststoffbasierten Abfällen (Kunststoffabfällen) ein unbestimmtes Gemenge einer Vielzahl unterschiedlicher bzw. verschiedener Kunststoffsorten vor. In diesem Zusammenhang sind einige zum Teil automatisierte Verfahren bekannt, welche die Kunststoffabfälle entweder nach Farbe oder aber nach anderen physikalisch-chemischen Eigenschaften weiterführend sortieren (beispielsweise mittels Laser- oder Intrarottechnik, Dichtebestimmung etc.), um nach Möglichkeit die Sortenreinheit der jeweiligen Kunststoffsorte zu erhöhen, da zueinander inkompatible Kunststoffsorten nicht ohne Weiteres einer weiterführenden Verarbeitung zu einem neuen Wertstoff bzw. Produkt zugeführt werden können.

Zielsetzung eines derartigen Recyclingprozesses für Kunststoffabfälle ist der Erhalt von möglichst sortenreinem (d. h. kunststoffsortenreinem) Kunststoffabfallmaterial, da nur ein solches kunststoffsortenreines Kunststoffabfallmaterial zu einem hochwertigen Kunststoffrezyklat für die weitere Verarbeitung zu Kunststoffprodukten aufbereitet werden kann. Zu diesem Zweck werden die Kunststoffabfälle meist aufgeschmolzen oder gesintert, insbesondere im Rahmen von Extrusions-, Spritzgieß- , Spritzpress-, Sinterpress-, Intrusionsverfahren etc., weshalb nur miteinander kompatible, sortengleiche Kunststoffe auf diese Weise verarbeitet werden können. Der Begriff der Sortenreinheit (d. h. Kunststoffsortenreinheit) bezeichnet dabei insbesondere gleiche Kunststoffe bzw. gleiche Kunststoffsorten mit gleicher Kennzeichnung (d. h. Kennzeichnung gemäß DIN EN ISO 11469 und/oder gemäß VDA Norm 260). Die in der Norm DIN EN ISO 11469 (2017) vorgenommene (kunststoff-)sortenspezifische Identifizierung und Kennzeichnung verwendet für die Bezeichnung der jeweiligen Kunststoffsorte jeweils die Kennbuchstaben und Kurzzeichen gemäß DIN EN ISO 1043 (2016), wobei letztere die Kunststoffbasispolymere bezeichnet (z. B. PE für Polyethylen, PP für Polypropylen, PET für Polyethylenterephthalat etc.). Innerhalb einer (einzigen) Kunststoffsorte können zwar noch weiterführende Unterteilungen bzw. Unterklassifizierungen vorgenommen werden, dennoch liegt nur eine einzige Kunststoffsorte im Sinne von DIN EN ISO 11469 und/oder VDA Norm 260 vor (z. B. Unterteilung bzw. Unterklassifizierung im Fall von Polyethylen z. B. LDPE, LLDPE, HDPE etc.); Entsprechendes gilt auch für unterschiedliche Molekulargewichte innerhalb einer einzigen Kunststoffsorte.

In diesem Zusammenhang werden die durch den Verbraucher vorsortierten kunststoffbasierten Abfälle (Kunststoffabfälle) weiterführend sortiert, zerkleinert und anschließend gegebenenfalls nochmals weiterführend sortiert und gewaschen. Dann werden die möglichst sortenrein vorsortierten und gesäuberten Abfälle zu Kunststoffrezyklaten weiterverarbeitet, insbesondere in Granulier-, Extrusions-, Spritzgieß-, Spritzpress-, Sinterpress-, Intrusionsverfahren etc. Erst das auf diese Weise erhaltene Kunststoffrezyklat kann wieder in der Produktion von neuen Kunststoffprodukten verwendet werden.

Aber selbst im Fall sortenreiner Kunststoffabfälle bzw. Rezyklatkunststoffe ist eine Wiederverwendung, insbesondere bei der Herstellung neuer Kunststoffprodukte, nicht immer ohne Weiteres möglich, da die hierin noch enthaltenen Verunreinigungen (z. B. unerwünschte Geruchsstoffe, Fette und Öle, Metalle und Schwermetalle, Fremdkörper wie Holz, Papier und Pappe etc.) das herzustellende Endprodukt beeinträchtigen können.

Darüber hinaus wurde aber auch die Wiederverwendung bzw. Wiederverwertung von sortenunreinen Kunststoffen in Betracht gezogen: Beispielsweise wird in der europäischen Patentschrift EP 0 906 365 B1 ein Verfahren beschrieben, welches unsortierte Kunststoffabfälle wiederverwertet, wobei in diesem Zusammenhang ein Trägermaterial aus einem weiteren Material, wie beispielsweise Holz, Papier, Pappe, Sperrmüll etc., notwendig ist und somit insgesamt ein mehrschichtiges Produkt aus verschiedenartigen Materialien gebildet wird. Dies ist insbesondere problematisch, da derartige Mischprodukte aus verschiedenartigen Materialien nicht erneut rezykliert werden können, da eine Trennung der verschiedenartigen Materialien nicht bzw. zumindest nicht ohne Weiteres erfolgen kann; ein solches Verfahren erlaubt also nur ein einmaliges Rezyklieren von unsortierten Kunststoffabfällen, wobei ein erneutes Rezyklieren aber nicht mehr möglich ist.

In diesem Zusammenhang sind auch noch vergleichbare Verfahren bekannt, welche sortenunreine Kunststoffabfälle in Kombination mit weiteren Fremdstoffen, insbesondere Füllstoffen bzw. Trägersubstanzen, verarbeiten (vgl. z. B. DE 698 15 401 T2, EP 2 937 199 B1 und DE 37 15 646 A1), so dass - wie zuvor aufgeführt - in Bezug auf derartige Mischprodukte aus einer Vielzahl verschiedenartiger Materialien kein erneutes Rezyklieren möglich ist.

Weiterhin ist auch die Verwendung bzw. Verwertung von sortenreinen Kunststoffabfällen für die Neuproduktion (d. h. für die Produktion neuer kunststoffbasierter Produkte) bekannt, wobei in diesem Zusammenhang jedoch zumeist signifikante Mengen an Neukunststoffen zugesetzt werden müssen, um die geforderten Qualitäten zu gewährleisten, wie beispielsweise in der WO 92/15640 A1 beschrieben.

Folglich fehlt es im Stand der Technik nach wie vor an Möglichkeiten, Kunststoffabfälle derart wiederzuverwerten bzw. zu rezyklieren, dass leistungsstarke kunststoffbasierte Neumaterialien bereitgestellt bzw. hergestellt werden können, welche zumindest maßgeblich bzw. im Wesentlichen ausschließlich aus den betreffenden aus den Kunststoffabfällen gewonnenen Kunststoffrezyklaten bestehen. Weiterhin fehlt es dem Stand der Technik auch daran, solche Neukunststoffe bereitzustellen, welche maßgeblich bzw. im Wesentlichen aus Kunststoffabfällen bestehen, welche erneut rezykliert werden können, so dass ein langfristiger und nachhaltiger Wirtschaftskreislauf gebildet wird.

Aber selbst die Herstellung von Kunststofffolien nach dem Stand der Technik unter teilweiser Verwendung von rezyklierten sortenreinen Kunststoffabfällen mit Zusatz signifikanter Mengen an Neukunststoffen (vgl. z. B. zuvor diskutierte WO 92/15640 A1) führt nicht zu Kunststofffolien, welche auch sogenannte Sperrschichteigenschaften (d. h. Barriereeigenschaften) gegenüber Wasserdampf und Sauerstoff aufweisen. Derartige Sperrschichteigenschaften von Kunststofffolien sind aber oftmals erforderlich, insbesondere bei der Verpackung von feuchtigkeitsempfindlichen, sauerstoffempfindlichen und/oder geruchsfreisetzenden Produkten (wie z. B. Waschmittelpulvern etc., welche infolge des Eindringens von Wasserdampf bzw. Feuchtigkeit beeinträchtigt würden, z. B. durch Verklumpung, und gleichzeitig unerwünschte Stoffe, z. B. Duftstoffe, freisetzen würden).

Zur Bereitstellung von Kunststofffolien mit Sperrschichteigenschaften (d. h. Barriereeigenschaften) gegenüber Wasserdampf und Sauerstoff werden nach dem Stand der Technik üblicherweise Mehrschichtfolien bzw. Verbundfolien mit unterschiedlichen Folienschichten auf Basis verschiedenartiger Kunststoffsorten eingesetzt. Insbesondere sind hier Folienlaminate bzw. Verbundfolien (Mehrschichtfolien) mit Polyesterfolienschicht(en) einerseits und Polyethylenfolienschicht(en) andererseits zu nennen, wobei die Polyesterfolienschicht(en) Barriereeigenschaften gegenüber Wasserdampf und Sauerstoff und die Polyethylenfolienschicht(en) Siegelfähigkeit bereitstellen sollen.

Besonders problematisch bei derartigen Mehrschicht- bzw. Verbundfolien (z. B. Polyester/Polyethylen-Verbundfolien) ist, dass diese nicht rezyklierfähig sind, da gemischte Kunststofftypen bzw. -sorten (nämlich Polyester einerseits und Polyethylen andererseits) vorliegen.

Daher ist es insbesondere aus wirtschaftlichen, ökologischen und gesellschaftlichen Gründen nicht nur wünschenswert, sondern vielmehr auch erforderlich, Kunststoffabfälle für die Neuproduktion von kunststoffbasierten Produkten einzusetzen, wobei in diesem Zusammenhang - um einen nachhaltigen Wirtschaftskreislauf zu ermöglichen - die Endeigenschaften der unter Verwendung von Kunststoffabfällen hergestellten Produkte sich im Vergleich zu entsprechenden aus Primärkunststoffen hergestellten Produkten zumindest im Wesentlichen nicht verschlechtern sollten.

Die EP 0 653 454 A1 betrifft eine Harzfolie, welche zumindest teilweise aus einem rezyklierten Harz gebildet ist und einen Dampfphasen-Korrosionsinhibitor enthält, wobei die Harzfolie als Einzelschichtfolie ausgebildet ist, welche aus drei Komponenten formuliert ist, wobei die erste Komponente ein rezykliertes Harz wie Polyethylen, die zweite Komponente ein frisches Harz, welches mit dem ersten identisch ist, und die dritte Komponente ein Dampfphasen-Korrosionsmittel umfasst, wobei ebenfalls Mehrschichtfolie möglich sind, und wobei die Folien über einen bestimmten Zeitraum das Korrosionsschutzmittel abgeben, um dadurch von der Folie umhüllte Gegenstände zu schützen.

Das der vorliegenden Erfindung zugrundeliegende Problem besteht daher in der Bereitstellung von Kunststofffolien, insbesondere Verpackungsfolien, auf Basis von Kunststoffrezyklat, wobei die zuvor geschilderten Nachteile des Standes der Technik zumindest weitestgehend vermieden oder aber wenigstens abgeschwächt werden sollen.

Insbesondere sollen solche Kunststofffolien, insbesondere Verpackungsfolien, auf Basis von Kunststoffrezyklat, bereitgestellt werden, welche zumindest im Wesentlichen aus aus Kunststoffabfällen rezyklierten Materialien (d. h. Kunststoffrezyklat) gebildet sind oder hieraus bestehen und gleichzeitig Sperrschichteigenschaften (d. h. Barriereeigenschaften), insbesondere gegenüber Wasserdampf und/oder Gasen (vorzugsweise Sauerstoff), bevorzugt gegenüber Wasserdampf und Gasen (vorzugsweise Sauerstoff), aufweisen.

Insbesondere besteht eine weitere der vorliegenden Erfindung zugrundeliegende Aufgabe in der Bereitstellung von Kunststofffolien, insbesondere Verpackungsfolien, auf Basis von Kunststoffrezyklat, welche zumindest im Wesentlichen gleichwertige oder allenfalls geringfügig bzw. unmaßgeblich schlechtere Eigenschaften (z. B. mechanische und/oder optische und/oder haptische etc. Eigenschaften) aufweisen wie Kunststofffolien auf Basis von Primärkunststoffen und gleichzeitig Sperrschichteigenschaften (d. h. Barriereeigenschaften), insbesondere gegenüber Wasserdampf und/oder Gasen (vorzugsweise Sauerstoff), bevorzugt gegenüber Wasserdampf und Gasen (vorzugsweise Sauerstoff), aufweisen.

Weiterhin besteht eine weitere der vorliegenden Erfindung zugrundeliegende Aufgabe insbesondere in der Bereitstellung solcher Kunststofffolien, insbesondere Verpackungsfolien, auf Basis von Kunststoffrezyklat, welche maßgeblich aus einem (einzigen bzw. einheitlichen) Material, insbesondere einer (einzigen bzw. einheitlichen) Kunststoffsorte, bestehen und gleichzeitig Sperrschichteigenschaften (d. h. Barriereeigenschaften), insbesondere gegenüber Wasserdampf und/oder Gasen (vorzugsweise Sauerstoff), bevorzugt gegenüber Wasserdampf und Gasen (vorzugsweise Sauerstoff), aufweisen. Insbesondere sollen die Kunststofffolien keine Produkte aus einer Vielzahl verschiedenartiger Materialien (z. B. verschiedenartiger Kunststoffsorten) darstellen.

Zudem besteht eine weitere der vorliegenden Erfindung zugrundeliegende Aufgabe in der Bereitstellung von Sperrschichteigenschaften (d. h. Barriereeigenschaften), insbesondere gegenüber Wasserdampf und/oder Gasen (vorzugsweise Sauerstoff), bevorzugt gegenüber Wasserdampf und Gasen (vorzugsweise Sauerstoff), aufweisenden Kunststofffolien, insbesondere Verpackungsfolien, auf Basis von Kunststoffrezyklat, welche sich automatisiert bzw. in automatisierten Abfüll- und/oder Verpackungsanlagen (z. B. FFS- oder VFFS-Anlagen) verarbeiten lassen.

Schließlich sollen insbesondere solche Kunststofffolien, insbesondere Verpackungsfolien, auf Basis von Kunststoffrezyklat, bereitgestellt werden, welche für ein erneutes Rezyklierungsverfahren geeignet ist und gleichzeitig Sperrschichteigenschaften (d. h. Barriereeigenschaften), insbesondere gegenüber Wasserdampf und/oder Gasen (vorzugsweise Sauerstoff), bevorzugt gegenüber Wasserdampf und Gasen (vorzugsweise Sauerstoff), aufweisen.

In vollkommen überraschender Weise hat die Anmelderin nunmehr herausgefunden, dass zur Lösung der zuvor geschilderten Problem- bzw. Aufgabenstellung insbesondere mehrschichtig (mehrlagig) ausgebildete Kunststofffolien, insbesondere Kunststoffverbundfolien, vorzugsweise Kunststoffverpackungsfolien, auf Basis von Kunststoffrezyklat (Recyclingkunststoff), insbesondere auf Basis von aus Abfall stammendem Kunststoffrezyklat, geeignet sind, welche aus mehreren miteinander verbundenen Folienschichten gebildet sind und einen Kunststoffrezyklat-Anteil von mindestens 80 Gew.-%, bezogen auf die Kunststofffolie, aufweisen und zudem eine zusätzliche Metallschicht (welche die gewünschten Sperrschichteigenschaften bereitstellt) aufweisen.

Zur Lösung des zuvor geschilderten Problems schlägt die vorliegende Erfindung daher - gemäß einem **ersten** Aspekt der vorliegenden Erfindung - eine mehrschichtige Kunststofffolie mit Sperrschichteigenschaften gegenüber Wasserdampf und/oder Gasen, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, gemäß Anspruch 1 vor; weitere, insbesondere besondere und/oder vorteilhafte Ausgestaltungen des erfindungsgemäßen Verfahrens sind Gegenstand der diesbezüglichen Unteransprüche.

Weiterhin betrifft die vorliegende Erfindung - gemäß einem **zweiten** Aspekt der vorliegenden Erfindung - die erfindungsgemäße Verwendung einer mehrschichtigen Kunststofffolie nach der vorliegenden Erfindung zur Herstellung von Verpackungsmaterial und/oder als Verpackungsmaterial gemäß dem diesbezüglichen unabhängigen Verwendungsanspruch; weitere, insbesondere besondere und/oder vorteilhafte Ausgestaltungen dieses Erfindungsaspekts sind Gegenstand der diesbezüglichen fakultativen Merkmale des betreffenden Verwendungsanspruchs.

Gleichermaßen betrifft die vorliegende Erfindung - gemäß einem **dritten** Aspekt der vorliegenden Erfindung - ein erfindungsgemäßes, mindestens eine mehrschichtige Kunststofffolie nach der vorliegenden Erfindung umfassendes Verpackungsmaterial gemäß dem diesbezüglichen unabhängigen Anspruch; weitere, insbesondere besondere und/oder vorteilhafte Ausgestaltungen dieses Erfindungsaspekts sind Gegenstand des diesbezüglichen fakultativen Merkmale des betreffenden Anspruchs.

Es versteht sich bei den nachfolgenden Ausführungen von selbst, dass Ausgestaltungen, Ausführungsformen, Vorteile und dergleichen, welche nachfolgend zu Zwecken der Vermeidung von Wiederholungen nur zu einem Erfindungsaspekt ausgeführt sind, selbstverständlich auch in Bezug auf die übrigen Erfindungsaspekte entsprechend gelten, ohne dass dies einer gesonderten Erwähnung bedarf.

Des Weiteren versteht es sich von selbst, dass einzelne Aspekte und Ausführungsformen der vorliegenden Erfindung auch in beliebiger Kombination mit anderen Aspekten und Ausführungsformen der vorliegenden Erfindung als offenbart gelten und insbesondere auch eine beliebige Kombination von Merkmalen und Ausführungsformen, wie sie sich aus den Rückbezügen aller Patentansprüche ergibt, umfangreich als offenbart gilt, und zwar im Hinblick auf alle sich ergebenden Kombinationsmöglichkeiten.

Bei allen nachstehend genannten relativen bzw. prozentualen gewichtsbezogenen Angaben, insbesondere relativen Mengen- oder Gewichtsangaben, ist weiterhin zu beachten, dass diese im Rahmen der vorliegenden Erfindung vom Fachmann derart auszuwählen sind, dass sie sich in der Summe unter Einbeziehung aller Komponenten bzw. Inhaltsstoffe, insbesondere wie nachfolgend definiert, stets zu 100 % bzw. 100 Gew.-% ergänzen bzw. addieren; dies versteht sich aber für den Fachmann von selbst.

Im Übrigen gilt, dass der Fachmann - anwendungsbezogen oder aber einzelfallbedingt - von den nachfolgend angeführten Bereichsangaben erforderlichenfalls abweichen kann, ohne dass er den Rahmen der vorliegenden Erfindung verlässt. Zudem gilt, dass alle im Folgenden genannten Werte- bzw. Parameterangaben oder dergleichen grundsätzlich mit genormten bzw. standardisierten oder explizit angegebenen Bestimmungsverfahren oder andernfalls mit dem Fachmann auf diesem Gebiet an sich geläufigen Bestimmungs- bzw. Messmethoden ermittelt bzw. bestimmt werden können.

Dies vorausgeschickt, wird die vorliegende Erfindung nunmehr nachfolgend im Detail erläutert.

Gegenstand der vorliegenden Erfindung - gemäß einem **ersten** Aspekt der vorliegenden Erfindung - ist somit eine mehrschichtige Kunststofffolie, insbesondere mehrschichtige Kunststoffverbundfolie, auf Basis von Kunststoffrezyklat (Recyclingkunststoff) und mit Sperrschichteigenschaften gegenüber Wasserdampf und/oder Gasen,
wobei die mehrschichtige Kunststofffolie einen Schichtverbund von mehreren, insbesondere mindestens drei, miteinander verbundenen Schichten umfasst,
wobei die mehrschichtige Kunststofffolie eine erste äußere Folie und eine zweite äußere Folie und eine zwischen der ersten äußeren Folie und der zweiten äußeren Folie angeordnete Metallschicht umfasst,
wobei die mehrschichtige Kunststofffolie einen Kunststoffrezyklat-Anteil von mindestens 80 Gew.-%, bezogen auf die mehrschichtige Kunststofffolie, aufweist,
wobei die mehrschichtige Kunststofffolie zumindest im Wesentlichen nur eine einzige Kunststoffsorte gemäß DIN EN ISO 11469 aufweist, wobei die Kunststoffsorte mit einer Sortenreinheit von mindestens 90 Gew.-%, bezogen auf den Kunststoffanteil der mehrschichtigen Kunststofffolie, vorliegt,
wobei die erste äußere Folie einen Schichtverbund von mindestens drei miteinander verbundenen, insbesondere mittels Koextrusion verbundenen und/oder koextrudierten, Folienschichten umfasst,
wobei die zweite äußere Folie einen Schichtverbund von mindestens drei miteinander verbundenen, insbesondere mittels Koextrusion verbundenen und/oder koextrudierten, Folienschichten umfasst oder aber als eine Einzelschichtfolie ausgebildet ist,
wobei die Metallschicht auf der Innenseite der ersten äußeren Folie und/oder auf der der zweiten äußeren Folie zugewandten Seite der ersten äußeren Folie aufgebracht und/oder hieran befestigt ist,
wobei die Metallschicht mittels Metallisierung und/oder Dünnschichttechniken, vorzugsweise mittels Gasphasenabscheidung, erzeugt ist und
wobei die Metallschicht mit einer Schichtdicke im Bereich von 0,001 µm bis 50 µm ausgebildet ist.

Wie zuvor ausgeführt, hat die Anmelderin nämlich vollkommen überraschend herausgefunden, dass sich auf diese Weise eine Kunststofffolie auf Basis von aus Abfall stammendem Kunststoffrezyklat mit einem Kunststoffrezyklat-Anteil von mindestens 80 Gew.-%, bezogen auf die Kunststofffolie, bereitstellen lässt, welche einerseits zumindest im Wesentlichen gleichwertige oder allenfalls geringfügig bzw. unmaßgeblich schlechtere Eigenschaften (z. B. mechanische bzw. optische bzw. haptische etc. Eigenschaften) wie Kunststofffolien auf Basis von Primärkunststoffen aufweist und darüber hinaus andererseits gleichermaßen Sperrschichteigenschaften (= Barriereeigenschaften) gegenüber Wasserdampf und/oder Gasen (vorzugsweise Sauerstoff), bevorzugt mit Sperrschichteigenschaften (Barriereeigenschaften) gegenüber Wasserdampf und Gasen (vorzugsweise Sauerstoff), aufweist.

Es resultiert im Ergebnis erfindungsgemäß eine selbst wiederum rezyklierfähige Kunststofffolie, welche als Folienverbund auf Basis von Kunststoffrezyklat (insbesondere Polyethylen-Rezyklat) mit mindestens 80 % Rezyklatanteil ausgebildet ist und durch die Metallschicht (insbesondere Metallisierung) Sperrschicht- bzw. Barriereeigenschaften, insbesondere gegenüber Wasserdampf und Sauerstoff, aufweist. Dabei ist der durch die Metallschicht resultierende Metallanteil der Kunststofffolie derart gering, dass die erfindungsgemäße Kunststofffolie als solche bzw. eigenständig rezyklierfähig ist (zumal im Rahmen der üblichen Kunststoffrezyklat-Aufbereitung die Metallschicht im Rahmen des Rezyklierprozess ohne zusätzliche Maßnahmen bzw. Prozessschritte abgetrennt werden kann).

Mit dem erfindungsgemäßen Konzept gelingt es, einerseits aufgrund der Verwendung von Kunststoffrezyklat die erhöhten Anforderungen des Umweltschutzes, insbesondere der ökologischen Kompatibilität, in Bezug auf die Herstellung von Kunststofffolien zu erfüllen, andererseits dennoch leistungsstarke Kunststofffolien bereitzustellen, welche im Hinblick auf ihre Leistungsfähigkeit vergleichbar sind mit aus Primärkunststoffen hergestellten Kunststofffolien. Auch vereinen die erfindungsgemäßen Kunststofffolien die oftmals an Kunststofffolien gestellten diametralen Anforderungen, nämlich in Bezug auf Siegelfähigkeit einerseits und Sperrschichteigenschaften (insbesondere gegenüber Wasserdampf bzw. Luftfeuchtigkeit und/oder Gasen, insbesondere Sauerstoff) andererseits.

Auf Grundlage des erfindungsgemäßen Konzepts können die vorgenannten Sperrschichteigenschaften erreicht werden, obwohl Kunststoffrezyklat einer einzigen Kunststoffsorte verwendet wird (wohingegen der Stand der Technik, wie zuvor geschildert, unterschiedliche Kunststoffsorten, wie z. B. Polyethylen und Polyester, in unterschiedlichen Folienschichten kombinieren muss, um die geforderte Siegelbarkeit bei gleichzeitiger Barrierewirkung zu erreichen). Folglich sind die erfindungsgemäßen Kunststofffolien als solche bzw. eigenständig rezyklierfähig und können auf diese Weise nach ihrer Verwendung erneut dem Wertschöpfungskreislauf zugeführt werden. Die im Allgemeinen sehr dünn ausgebildete Metallschicht steht, wie zuvor geschildert, einer Rezyklierung nicht entgegen, sichert aber dennoch verlässliche Sperrschichteigenschaften.

Darüber hinaus zeichnen sich die erfindungsgemäßen Kunststofffolien durch eine Vielzahl weiterer Vorteile und Besonderheiten aus, wie sie nachfolgend beschrieben sind, wobei die nachfolgende Schilderung keinen Anspruch auf Vollständigkeit erhebt.

Insbesondere hat die Anmelderin überraschend herausgefunden, dass unter diesen Voraussetzungen leistungsstarke Kunststofffolien trotz des sehr hohen Kunststoffrezyklat-Anteils bereitgestellt werden können.

Insbesondere werden die erfindungsgemäßen Kunststofffolien zumindest im Wesentlichen aus aus Kunststoffabfällen rezyklierten Materialien bzw. Kunststoffrezyklat gebildet bzw. bestehen hieraus. Gleichzeitig ist es möglich die erfindungsgemäßen Kunststofffolien, insbesondere Verpackungsfolien, auf Basis von Kunststoffrezyklat, welche maßgeblich aus einem einzigen bzw. einheitlichen Kunststoffmaterial (d. h. zumindest im Wesentlichen aus einer einzigen bzw. einheitlichen Kunststoffsorte) bestehen, nach ihrer Verwendung wieder einer erneuten Rezyklierung zu unterziehen bzw. in ein erneutes Rezyklierungsverfahren einzubringen, um hieraus letztendlich wieder neues Kunststoffrezyklat zu gewinnen. Mit anderen Worten sind die erfindungsgemäßen Kunststofffolien selbst wieder rezyklierfähig bzw. recyclingfähig (recycelbar).

Der Begriff "Rezyklat" bzw. "Kunststoffrezyklat", wie er erfindungsgemäß verwendet wird, bezieht sich insbesondere auf solche Kunststoffe, welche durch Rezyklierung, d. h. insbesondere Trennung nach Kunststoffsorte, Reinigung und Zerkleinern, aus kunststoffbasierten Abfällen bereitgestellt werden. In diesem Zusammenhang können insbesondere solche Abfälle verwendet werden, wie sie beispielsweise in dem System *"Grüner Punkt"* bereits durch den Verbraucher im Haushalt vorsortiert werden und vorzugsweise im gelben Sack bzw. der gelben Tonne entsorgt werden. Diese Materialien werden meistens einem Waschprozess unterzogen (vgl. auch obige und noch nachfolgende Ausführungen).

Insbesondere kann im Rahmen der vorliegenden Erfindung als Kunststoffrezyklat insbesondere ein Kunststoffrezyklat in Form von sogenanntem Post-Consumer-Kunststoffrezyklat, synonym auch als PCR-Kunststoffrezyklat bezeichnet, insbesondere Kunststoffrezyklat in Form von PCR-Recyclingfolien, zum Einsatz kommen. Die dann erhaltene erfindungsgemäße Kunststofffolie ist folglich eine sogenannte PCR-Kunststofffolie (Post-Consumer-Recycling-Kunststofffolie).

Der Begriff der Sortenreinheit, wie er erfindungsgemäß verwendet wird, bezieht sich auf die Kunststoffsortenreinheit, d. h. der Begriff der Sortenreinheit meint erfindungsgemäß insbesondere, dass zumindest im Wesentlichen nur eine (einzige) Kunststoffsorte bzw. nur gleiche Kunststoffe/Kunststoffsorten vorliegen. In diesem Zusammenhang sind gleiche Kunststoffsorten solche Kunststoffe, welche die gleiche Kennzeichnung gemäß DIN EN ISO 11469 und/oder VDA-Norm 260 aufweisen (wobei in der Norm DIN EN ISO 11469 (2017) die kunststoffsortenspezifische Identifizierung und Kennzeichnung für die Bezeichnung der jeweiligen Kunststoffsorten auf den Kennbuchstaben bzw. Kurzzeichen gemäß DIN EN ISO 1043 (2016) basiert). In der DIN EN ISO 1043 werden die Kunststoffbasispolymere mit Kennbuchstaben bzw. Kurzzeichen bezeichnet (z. B. PE für Polyethylen, PP für Polypropylen, PET für Polyethylenterephthalat etc.); dabei können zwar in diesem Zusammenhang die Kunststoffsorten noch einer weiterführenden Unterteilung bzw. Unterklassifizierung (z. B. Unterteilung bzw. Unterklassifizierung nach Dichte, Vernetzung, Molekulargewicht etc.) unterliegen, entsprechen aber trotzdem einer einzigen Kunststoffsorte im Sinne von DIN EN ISO 11469 bzw. VDA-Norm 260 und somit im Sinne der vorliegenden Erfindung.

Durch den besonders hohen Rezyklat-Anteil der erfindungsgemäßen Kunststofffolien von mindestens 80 Gew.-% sind diese Kunststofffolien besonders rohstoff- bzw. ressourcenschonend, da Abfallmaterialien verwendet und auf dieser Weise einer neuen Wertschöpfung zugeführt werden und folglich gerade keine bzw. nur sehr geringe Mengen an neuen Rohstoffen aus fossilen Ausgangsmaterialien bzw. -rohstoffen (z. B. Erdöl, Kohle, Erdgas etc.) gewonnen werden müssen. Zudem liegt in diesem Zusammenhang eine hohe Energieeffizienz in Bezug auf die Verwendung von Rohstoffen vor, insbesondere da die entsprechenden Kunststoffe nicht aus den entsprechenden fossilen Ausgangsmaterialien/-rohstoffen als sogenannte Primärkunststoffe (neu) hergestellt werden müssen, sondern bereits vorhandene Kunststoffmaterialien entsprechend ihrer Kunststoffsorte sortiert bzw. (auf)getrennt und aufgereinigt werden, um dann nach weiterführender Aufbereitung (z. B. Zerkleinerung, Verarbeitung zu Granulaten etc.) als Kunststoffrezyklat wiederverwendet werden zu können. Insgesamt liegt daher in Bezug auf die erfindungsgemäßen Kunststofffolien eine hohe Umweltkompatibilität vor, insbesondere eine hohe Kompatibilität in Bezug auf den Umweltschutz insbesondere durch Ressourcen- bzw. Rohstoffeinsparungen bzw. durch Ressourcen- und Rohstoffmanagement.

In vollkommen überraschender Weise hat die Anmelderin herausgefunden, dass die Kunststofffolien gemäß der vorliegenden Erfindung trotz eines Rezyklat-Anteils von mindestens 80 Gew.-% im Vergleich zu "neuen" Kunststofffolien (d. h. im Vergleich zu aus Primärkunststoffen hergestellten Kunststofffolien) wenigstens gleichartige bzw. vergleichbare Leistungseigenschaften aufweisen, nämlich vor allem gleichartige bzw. vergleichbare mechanische Eigenschaften, darüber hinaus aber auch gleichartige bzw. vergleichbare weitere Eigenschaften, wie z. B. optische Eigenschaften, Verarbeitungseigenschaften wie Bedruckbarkeit, Versiegelbarkeit bzw. Siegelfähigkeit etc., Verarbeitungsfähigkeit zu Verpackungen, Schläuchen, Beuteln, Tüten, Säcken etc., Verarbeitungsfähigkeit in automatisierten Abfüll- und/oder Verpackungsanlagen, insbesondere FFS- oder VFFS-Anlagen, etc. Weiterhin sind die erfindungsgemäßen Kunststofffolien auf Basis von Kunststoffrezyklat mit einem Anteil von mindestens 80 Gew.-% gleichzeitig zumindest im Wesentlichen preisgleich zu "neuen" Kunststofffolien (d. h. Kunststofffolien, welche unter Verwendung von Kunststoffprimärmaterialien hergestellt werden).

Gleichermaßen tragen die erfindungsgemäßen Kunststofffolien auch dazu bei, die anfallenden und ansonsten zu entsorgenden Mengen an Kunststoffabfall zu reduzieren und den Kunststoffabfall einer ökonomisch wie ökologisch effizienten und kompatiblen Neuverwertung bzw. Neuverwendung zuzuführen.

Darüber hinaus weisen die erfindungsgemäßen Kunststofffolien nicht nur gleichartige bzw. vergleichbare Leistungseigenschaften wie Primärkunststofffolien auf, sondern sind darüber hinaus nach ihrer Verwendung auch erneut rezyklierbar, wodurch eine Kreislauffahrweise möglich ist. Durch eine solche Kreislauffahrweise wird die Umweltkompatibilität der erfindungsgemäßen Kunststofffolien weiterführend gesteigert, insbesondere ist eine langanhaltende Verwertung bzw. Verwendung der zugrundeliegenden Materialien ohne bzw. nur durch minimale Zugabe an Neu- bzw. Primärkunststoffen möglich, so dass fossile Ausgangsmaterialien (d. h. die endlichen Rohstoffvorräte) nachhaltig geschützt bzw. geschont werden können.

In vollkommen überraschender Weise hat die Anmelderin herausgefunden, dass die erfindungsgemäße Kunststofffolie auf Basis von mindestens 80 Gew.-% Kunststoffrezyklat durch die Ausbildung in Form eines Schichtverbundes bzw. als Schichtverbund im Vergleich zu entsprechenden einschichtigen Folien (Monofolien) maßgeblich verbesserte Eigenschaften, insbesondere bezüglich Anwendung, Anpassbarkeit und der mechanischen Eigenschaften, aufweist.

In diesem Zusammenhang können die unterschiedlichen Schichten der mehrschichtig ausgebildeten erfindungsgemäßen Kunststofffolie - obwohl die einzelnen Schichten, insbesondere äußeren Schichten, jeweils auf einer gleichen Kunststoffrezyklatsorte basieren - mit unterschiedlichen Eigenschaften ausgerüstet werden (vgl. noch nachfolgende Ausführungen). Durch die unterschiedlichen Eigenschaften der einzelnen Schichten der mehrschichtig ausgebildeten erfindungsgemäßen Kunststofffolie ist insgesamt eine Anpassbarkeit bzw. ein Maßschneidern der Gesamteigenschaften der mehrschichtigen Kunststofffolie (beispielsweise der optischen Eigenschaften durch Einfärbung und/oder Homogenisierung über den Folienverbund, oder mechanischen Eigenschaften, der Siegelfähigkeit bzw. Versiegelbarkeit etc.) möglich, da die einzelnen Schichten mit unterschiedlichen Eigenschaften (z. B. mit unterschiedlichen Dicken, unterschiedlichen Inhaltsstoffen, wie Additiven, Pigmenten etc.) ausgebildet werden können und die einzelnen Schichten auf diese Weise jeweils einen unterschiedlichen Beitrag innerhalb des Schichtverbundes leisten können.

Weiterhin ist es durch die Ausbildung der erfindungsgemäßen Kunststofffolien in Form eines Schichtverbundes möglich, dass die beiden Außenseiten unterschiedlich eingefärbt sind, was abhängig von der gewünschten Anwendung bzw. Verwendung vorteilhaft ist. Auch ist es beispielsweise möglich, die beiden äußeren Kunststofffolien und die Innen- und Außenseite der betreffenden Folie mit unterschiedlichen Eigenschaften, z. B. Oberflächeneigenschaften, wie insbesondere Rauhigkeiten, auszurüsten (z. B. Bedruckbarkeit einer Folienfläche, Antihaftschutz einer anderen Folienfläche etc.).

In diesem Zusammenhang können insbesondere im Fall von opaken Folien verbesserte optische Eigenschaften bereitgestellt werden, da Inhomogenitäten, welche beispielsweise durch im Kunststoffrezyklat verbliebene Verunreinigungen (z. B. Fremdstoffe, wie Metallpartikel, Holzpartikel, Öle, Kunststoffpartikel etc.) vorliegen können, über die verschiedenen Schichten vergleichmäßigt bzw. nivelliert bzw. ausgeglichen werden können. Diese Vergleichmäßigung bzw. Nivellierung kann unter anderem durch unterschiedliche Farbpigmente in den einzelnen bzw. verschiedenen Schichten erfolgen. Weiterhin können auch verbesserte Opazitätsgrade erreicht werden, was insbesondere zur Verhinderung von Algen- und Keimbildung im Fall verpackter organischer Materialien maßgeblich bzw. notwendig sein kann, oder aber es kann auf diese Weise ein verbesserter Sichtschutz für Verpackungsgüter bereitgestellt werden.

Darüber hinaus hat die Anmelderin überraschend festgestellt, dass durch den mehrschichtigen Aufbau, insbesondere mit unterschiedlichen Eigenschaften und/oder unterschiedlichen weiteren Inhaltsstoffen bzw. Additiven in den jeweiligen einzelnen Schichten, eine verbesserte Unterdrückung von unerwünschter Migration der Inhaltsstoffe (z. B. von UV-Stabilisatoren) oder von Verunreinigungen möglich ist.

Weiterhin ist es auch möglich, nur eine bestimmte Schicht mit notwendigen Additiven auszustatten, wie beispielsweise im Fall von Schlauchfolien, bei welchen nur die Innenseite mit einem Antihaftmittel oder Antiblockiermittel, wie beispielsweise Kreide, ausgestattet werden kann, um ein Blockieren oder Zusammenhaften der aufeinanderliegenden Innenschichten effizient zu verhindern.

Insgesamt können durch die Ausbildung der erfindungsgemäßen Kunststofffolie in Form eines Schichtverbundes bei identischer Gesamtschichtdicke im Vergleich zu entsprechenden Monoschichten (d. h. insbesondere Monoschichten auf Basis von Kunststoffrezyklat) verbesserte mechanische Eigenschaften, insbesondere bessere Stabilität, Zugfestigkeit, Reißdehnung, Durchstoßfestigkeit etc., und/oder verbesserte optische Eigenschaften und/oder verbesserte weitere Eigenschaften erzielt werden. Darüber hinaus ist die als Schichtverbund ausgebildete erfindungsgemäße Kunststofffolie im Vergleich zu entsprechenden Monofolien besser anpassbar bzw. maßschneiderbar in Bezug auf die benötigten oder gewünschten Gesamteigenschaften bzw. Anwendungseigenschaften der Kunststofffolie.

Darüber hinaus zeichnet sich die vorliegende Erfindung durch weitere Vorteile aus, wie nachfolgend angeführt:
Insbesondere führt der hohe Rezyklat-Anteil, insbesondere mit hoher eigenständiger Sortenreinheit, der erfindungsgemäßen Kunststofffolie zu einer besonders guten eigenständigen Rezyklierbarkeit.

Die erfindungsgemäße mehrschichtige Kunststofffolie kann universell verarbeitet werden, insbesondere kann die mehrschichtige Kunststofffolie als Flachfolie ausgebildet und verwendet werden und bei Bedarf beispielsweise zu Rollenware für den Transport und/oder die Verarbeitung, beispielsweise in der Verpackungsindustrie, aufgewickelt werden. Darüber hinaus kann die erfindungsgemäße mehrschichtige Kunststofffolie aber auch zu einer Halbschlauchfolie oder Schlauchfolie oder aber in Form von Beuteln, Tüten etc. verarbeitet bzw. ausgebildet werden.

Darüber hinaus kann die erfindungsgemäße mehrschichtige Kunststofffolie auch universell verwendet werden. Insbesondere geeignet ist die erfindungsgemäße mehrschichtige Kunststofffolie als Verpackungsmaterial im Nichtlebensmittelbereich (Non-Food-Bereich), insbesondere für industrielle Verpackungen beispielsweise von Schüttgütern, (Pflanz-)Erden, Düngern, Mulch, Humus etc., Waschmitteln, Klebstoffen, Pellets und Granulaten, Haushaltsgütern und -waren oder aber für Hygieneanwendungen. In diesem Zusammenhang ist die erfindungsgemäße mehrschichtige Kunststofffolie für die Verarbeitung in bekannten und üblichen industriellen und automatisierten Abfüll- und/oder Verpackungsanlagen (z. B. FFS- oder VFFS-Anlagen oder herkömmliche Konfektionsanlagen) geeignet, so dass keine Umrüstung für die Verwendung der erfindungsgemäßen Kunststofffolien erforderlich ist. Es kann also insgesamt auf die herkömmlichen Bestandsanlagen zurückgegriffen werden.

Insbesondere können mit der vorliegenden Erfindung erstmals Kunststofffolien, insbesondere Verpackungsfolien, auf Basis von Kunststoffrezyklat bereitgestellt werden, welche sich ohne Weiteres automatisiert bzw. in automatisierten Abfüll- und/oder Verpackungsanlagen verarbeiten lassen (z. B. in sogenannten FFS- oder VFFS-Anlagen [d. h. Form-Fill-Seal-Anlagen bzw. vertikale Form-Fill-Seal-Anlagen]).

Weiterhin sind, wie zuvor ausgeführt, die Eigenschaften der erfindungsgemäßen mehrschichtigen Kunststofffolie einfach und effizient anpassbar bzw. maßschneiderbar.

Insbesondere weisen die erfindungsgemäßen mehrschichtigen Kunststofffolien sehr gute Folieneigenschaften, insbesondere gute mechanische, optische, haptische und sonstige Eigenschaften auf.

Darüber hinaus sind die erfindungsgemäßen Kunststofffolien kompatibel in Bezug auf andere Kunststoffe, z. B. zum Verbinden mit anderen Kunststoffen.

Die erfindungsgemäße mehrschichtige Kunststofffolie ist im Rahmen von üblichen Veredelungsverfahren, wie beispielsweise Bedruckung, Beschichtung etc., weiterführend verarbeitbar.

Weiterhin hat die Anmelderin überraschend herausgefunden, dass durch die Inkorporierung einer Metallschicht in die erfindungsgemäße Kunststofffolie auch feuchtigkeitsempfindliche Produkte und Waren, insbesondere Pulver, langfristig gelagert werden können. Vor allem ist eine Lagerung dieser Produkte und Waren auch in Umgebungen mit hoher Luftfeuchtigkeit ohne Weiteres möglich.

Darüber hinaus hat die Anmelderin weiterhin überraschend herausgefunden, dass durch das Vorhandensein der Metallschicht in der erfindungsgemäßen Kunststofffolie auch Produkte mit geruchsfreisetzenden Substanzen, wie beispielsweise Waschpulver, Reinigungsmittel und Hygieneprodukte, langfristig gelagert werden können, insbesondere ohne dass eine unerwünschte Freisetzung der geruchsintensiven Substanzen erfolgt.

Die Bereitstellung einer Kunststofffolie, insbesondere zur Verwendung als Verpackung, in welcher auch feuchtigkeitsempfindliche und geruchsintensive Produkte gelagert, insbesondere auch langfristig gelagert werden können ist nur durch die erfindungsgemäße Ausgestaltung möglich, wonach eine Metallschicht, insbesondere Aluminiumschicht, zwischen zwei Kunststofffolien bzw. Kunststoffschichten angeordnet ist. Überraschenderweise hat die Anmelderin in diesem Zusammenhang herausgefunden, dass die erfindungsgemäß eingesetzte Metallschicht die Rezyklierfähigkeit der Kunststofffolie an sich nicht beeinflusst.

Durch die Anordnung der Metallschicht zwischen den äußeren Folien wird zudem erreicht, dass die Metallschicht vor Abnutzung bzw. Verschleiß bzw. Beschädigung geschützt wird und somit die Barriereeigenschaften auch bei mechanischer Belastung nicht verringert werden.

Weiterhin kann die Metallschicht sichtbar oder auch nicht sichtbar für den Verbraucher sein, insbesondere abhängig von den entsprechenden verwendeten äußeren (Kunststoff-)Folien (d. h. opake oder transparente Kunststofffolien).

Insbesondere kann die Metallschicht die optischen Eigenschaften beeinflussen und in diesem Zusammenhang beispielsweise die Bedruckung in den Vordergrund stellen bzw. akzentuieren. Auch kann die metallische Farbe der Metallschicht in die optische Gestaltung integriert werden. In diesem Zusammenhang kann die exakte farbliche Gestaltung der Metallschicht durch die Art der verwendeten Metalle und die Schichtdicke beeinflusst werden.

Auch die Sperrschicht- bzw. Barriereeigenschaften der erfindungsgemäßen Kunststofffolie können durch die Metallschicht, insbesondere durch die Schichtdicke und die Auswahl des Metalls bzw. der Metalle, gezielt eingestellt bzw. angepasst bzw. maßgeschneidert werden.

Ein entscheidender Vorteil gegenüber dem Stand der Technik, welcher zur Bereitstellung von Sperrschicht- bzw. Barriereeigenschaften üblicherweise einen Verbund mehrerer Folienschichten aus verschiedenen Kunststoffsorten einsetzt, ist im Fall der vorliegenden Erfindung, dass der Verbund zwischen der Metallschicht und den äußeren Kunststoffschichten im Rahmen einer späteren Rezyklierung wieder trennbar bzw. lösbar ist, sodass die Rezyklierfähigkeit der erfindungsgemäßen Kunststofffolie an sich erhalten bleibt. Insbesondere kann die Metallschicht im Rahmen der üblichen Rezyklierungsverfahren abgelöst werden, ohne dass ein weiterer bzw. zusätzlicher Verfahrensschritt notwendig ist. Zudem ist der Metallanteil in der Gesamtfolie derart gering, dass selbst als Verunreinigung verbleibendes Metall die Rezyklierung nicht beeinträchtigt.

Insgesamt können somit im Rahmen der vorliegenden Erfindung Kunststofffolien bereitgestellt werden, welche aus kunststoffbasierten Abfallstoffen gebildet werden und somit wieder ein für den Wirtschaftskreislauf werthaltiges und somit nachhaltiges Produkt unter Ressourcenschonung ausbilden, welches selbst wieder eine hohe Umweltkompatibilität aufweist, da es eigenständig rezyklierbar bzw. rezyklierfähig ist und weiterhin hohe Barriereeigenschaften, insbesondere gegenüber Wasserdampf und Sauerstoff, aufweist.

Nachfolgend werden bevorzugte Ausgestaltungen der erfindungsgemäßen Kunststofffolie näher beschrieben und erläutert:
Wie zuvor ausgeführt, ist die Kunststofffolie nach der vorliegenden Erfindung eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, und mit Sperrschichteigenschaften (= Barriereeigenschaften) gegenüber Wasserdampf und/oder Gasen (vorzugsweise Sauerstoff), bevorzugt mit Sperrschichteigenschaften (Barriereeigenschaften) gegenüber Wasserdampf und Gasen (vorzugsweise Sauerstoff), wobei die Kunststofffolie einen Schichtverbund von mehreren, insbesondere mindestens drei, miteinander verbundenen Schichten umfasst, wobei die Kunststofffolie und/oder der Schichtverbund eine erste äußere Folie (= Trägerfolie) und eine zweite äußere Folie (= Kaschier- oder Deckfolie) und eine zwischen der ersten äußeren Folie und der zweiten äußeren Folie angeordnete Metallschicht umfasst, wobei die Kunststofffolie einen Kunststoffrezyklat-Anteil von mindestens 80 Gew.-%, bezogen auf die Kunststofffolie, aufweist, wobei die mehrschichtige Kunststofffolie zumindest im Wesentlichen nur eine einzige Kunststoffsorte gemäß DIN EN ISO 11469 aufweist, wobei die Kunststoffsorte mit einer Sortenreinheit von mindestens 90 Gew.-%, bezogen auf den Kunststoffanteil der mehrschichtigen Kunststofffolie, vorliegt, wobei die erste äußere Folie einen Schichtverbund von mindestens drei miteinander verbundenen, insbesondere mittels Koextrusion verbundenen und/oder koextrudierten, Folienschichten umfasst, wobei die zweite äußere Folie einen Schichtverbund von mindestens drei miteinander verbundenen, insbesondere mittels Koextrusion verbundenen und/oder koextrudierten, Folienschichten umfasst oder aber als eine Einzelschichtfolie ausgebildet ist, wobei die Metallschicht auf der Innenseite der ersten äußeren Folie und/oder auf der der zweiten äußeren Folie zugewandten Seite der ersten äußeren Folie aufgebracht und/oder hieran befestigt ist, wobei die Metallschicht mittels Metallisierung und/oder Dünnschichttechniken, vorzugsweise mittels Gasphasenabscheidung, erzeugt ist und wobei die Metallschicht mit einer Schichtdicke im Bereich von 0,001 µm bis 50 µm ausgebildet ist.

Gemäß der vorliegenden Erfindung weist das Kunststoffrezyklat eine (Kunststoff-) Sortenreinheit, insbesondere Sortenreinheit der Kunststoffsorte gemäß DIN EN ISO 11469, von mindestens 90 Gew.-%, insbesondere mindestens 95 Gew.-%, bezogen auf das Kunststoffrezyklat, auf.

In Bezug auf den zuvor und nachfolgend genannten Begriff der Sortenreinheit bzw. Kunststoffsortenreinheit bezeichnet dieser insbesondere gleiche Kunststoffe bzw. gleiche Kunststoffsorten mit gleicher Kennzeichnung (d.h. Kennzeichnung gemäß DIN EN ISO 11469 und/oder gemäß VDA Norm 260). Die in der Norm DIN EN ISO 11469 vorgenommene (kunststoff-)sortenspezifische Identifizierung bzw. Kennzeichnung verwendet für die Bezeichnung der jeweiligen Kunststoffsorten die Kennbuchstaben und Kurzzeichen gemäß DIN EN ISO 1043, wobei letztere Norm die Kunststoffbasispolymere bezeichnet (z. B. PE für Polyethylen, PP für Polypropylen und PET für Polyethylenterephtalat etc.). Innerhalb einer (einzigen) Kunststoffsorten können zwar noch weiterführende Unterteilungen bzw. Unterklassifizierungen vorgenommen werden (z. B. nach Molekulargewicht, Dichte etc.), dennoch liegt nur eine einzige Kunststoffsorte im Sinne der DIN EN ISO 11469 bzw. VDA Norm 260 vor (z. B. Unterteilung bzw. Unterklassifizierungen im Fall von Polyethylen: LDPE, LLDPE, HDPE etc.). Auch liegt im Sinne der DIN EN ISO 11469 bzw. der VDA Norm 260 eine (einzige) Kunststoffsorte bei unterschiedlichen Molekulargewichten innerhalb einer zuvor definierten Kunststoffsorte vor.

Gemäß der vorliegenden Erfindung ist das Kunststoffrezyklat zumindest im Wesentlichen (kunststoff-)sortenrein ausgebildet. Dabei weist das Kunststoffrezyklat eine (Kunststoff-) Sortenreinheit, insbesondere Sortenreinheit der Kunststoffsorte gemäß DIN EN ISO 11469, von mindestens 90 Gew.-%, insbesondere mindestens 95 Gew.-%, bezogen auf das Kunststoffrezyklat, auf.

Es ist erfindungsgemäß vorgesehen, dass das Kunststoffrezyklat zumindest im Wesentlichen nur eine (einzige) Kunststoffsorte, insbesondere nur eine (einzige) Kunststoffsorte gemäß DIN EN ISO 11469, aufweist, wobei die Kunststoffsorte mit einer (Sorten-)Reinheit von mindestens 90 Gew.-%, insbesondere mindestens 95 Gew.-%, bezogen auf das Kunststoffrezyklat, vorliegt.

Darüber hinaus ist es erfindungsgemäß vorgesehen, dass das Kunststoffrezyklat zumindest im Wesentlichen nur sortenreinen Kunststoff aufweist, wobei die (Kunststoff-)Sortenreinheit, insbesondere die Sortenreinheit der Kunststoffsorte gemäß DIN EN ISO 11469, mindestens 90 Gew.-%, insbesondere mindestens 95 Gew.-%, bezogen auf das Kunststoffrezyklat, beträgt.

Durch die Verwendung von sortenreinem Kunststoffrezyklat für die Herstellung der erfindungsgemäßen Kunststofffolien eignet sich die Kunststofffolie für die erneute Rezyklierung und kann wieder zu neuem Kunststoffrezyklat und anschließend zu neuen kunststoffbasierten Produkten verarbeitet werden.

In diesem Zusammenhang ist es gemäß der vorliegenden Erfindung daher vorgesehen, dass auch die erfindungsgemäße Kunststofffolie sortenrein vorliegt.

Erfindungsgemäß weist die erfindungsgemäße mehrschichtige Kunststofffolie eine (Kunststoff-)Sortenreinheit, insbesondere Sortenreinheit der Kunststoffsorte gemäß DIN EN ISO 11469, von mindestens 90 Gew.-%, insbesondere mindestens 95 Gew.-%, bezogen auf den Kunststoff(anteil) der mehrschichtigen Kunststofffolie, auf.

Erfindungsgemäß ist die erfindungsgemäße mehrschichtige Kunststofffolie zumindest im Wesentlichen (kunststoff-)sortenrein ausgebildet. Erfindungsgemäß weist die mehrschichtige Kunststofffolie eine (Kunststoff-)Sortenreinheit, insbesondere Sortenreinheit der Kunststoffsorte gemäß DIN EN ISO 11469, von mindestens 90 Gew.-%, insbesondere mindestens 95 Gew.-%, bezogen auf den Kunststoff(anteil) der mehrschichtigen Kunststofffolie, auf.

Die erfindungsgemäße mehrschichtige Kunststofffolie weist zumindest im Wesentlichen nur eine einzige Kunststoffsorte gemäß DIN EN ISO 11469 auf, wobei die Kunststoffsorte erfindungsgemäß mit einer (Sorten-)Reinheit von mindestens 90 Gew.-%, insbesondere mindestens 95 Gew.-%, bezogen auf den Kunststoff(anteil) der mehrschichtigen Kunststofffolie, vorliegt.

Erfindungsgemäß weist die erfindungsgemäße mehrschichtige Kunststofffolie zumindest im Wesentlichen nur sortenreinen Kunststoff auf, wobei die (Kunststoff-)Sortenreinheit, insbesondere die Sortenreinheit der Kunststoffsorte gemäß DIN EN ISO 11469, mindestens 90 Gew.-%, insbesondere mindestens 95 Gew.-%, bezogen auf den Kunststoff(anteil) der mehrschichtigen Kunststofffolie, beträgt.

Da die gesamte erfindungsgemäße mehrschichtige Kunststofffolie zumindest im Wesentlichen aus sortenreinem Kunststoff besteht bzw. zumindest im Wesentlichen nur sortenreinen Kunststoff aufweist, eignet sich die erfindungsgemäße Kunststofffolie nach Ihrer Verwendung für die Rezyklierung, so dass ein nachhaltiger Wirtschaftskreislauf gebildet wird, die anfallenden und zu entsorgenden Abfallmengen reduziert werden und der Umweltschutz sowie das Ressourcenmanagement der Erde unterstützt werden.

Darüber hinaus ist es im Rahmen der vorliegenden Erfindung vorgesehen, dass die erfindungsgemäße mehrschichtige Kunststofffolie nur Kunststoffrezyklat(e) einer (einzigen) Kunststoffsorte, insbesondere Kunststoffrezyklat(e) einer (einzigen) Kunststoffsorte gemäß DIN EN ISO 11469, aufweist.

In diesem Zusammenhang ist es bevorzugt, wenn die erfindungsgemäße mehrschichtige Kunststofffolie außer dem Kunststoffrezyklat und der Metallschicht zumindest im Wesentlichen nur Inhaltsstoffe aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Klebstoffen, Primärkunststoffen der gleichen Kunststoffsorte gemäß DIN EN ISO 11469 wie das Kunststoffrezyklat, Hilfsstoffen und Additiven sowie deren Mischungen und Kombinationen aufweist.

Insbesondere kann es gemäß einer besonderen Ausführungsform der vorliegenden Erfindung vorgesehen sein, dass die erfindungsgemäße mehrschichtige Kunststofffolie kein andersartiges und/oder weiteres und/oder zusätzliches Kunststoffrezyklat aufweist.

In diesem Zusammenhang kann im Rahmen der vorliegenden Erfindung nur Kunststoffrezyklat einer Kunststoffsorte, wie zuvor definiert, eingesetzt werden, wobei Kunststoffrezyklate aus verschiedenen Chargen eingesetzt werden können, solang es sich um eine (einzige) Kunststoffsorte, insbesondere um eine (einzige) Kunststoffsorte gemäß DIN EN ISO 11469, handelt.

Insbesondere ist es erfindungsgemäß bevorzugt, wenn die erfindungsgemäße mehrschichtige Kunststofffolie keine andersartige und/oder weitere und/oder zusätzliche Kunststoffsorte, insbesondere keine andersartige und/oder weitere und/oder zusätzliche Kunststoffsorte gemäß DIN EN ISO 11469, aufweist.

Insgesamt wird somit im Rahmen der vorliegenden Erfindung eine mehrschichtige Kunststofffolie bereitgestellt, welche zumindest im Wesentlichen aus einer einzigen Kunststoffsorte besteht und sich somit - unter anderem aus diesem Grund - besonders gut für die erneute Rezyklierung eignet.

Erfindungsgemäß kann es insbesondere vorgesehen sein, dass die erfindungsgemäße mehrschichtige Kunststofffolie einen (Gesamt-)Kunststoffanteil im Bereich von 80 Gew.-% bis 99,95 Gew.-%, insbesondere im Bereich von 82,5 Gew.-% bis 99,5 Gew.-%, vorzugsweise im Bereich von 85 Gew.-% bis 99 Gew.-%, besonders bevorzugt im Bereich von 87 Gew.-% bis 98 Gew.-%, bezogen auf die mehrschichtige Kunststofffolie, aufweist.

In diesem Zusammenhang bezieht sich der (Gesamt-)Kunststoffanteil sowohl auf das Kunststoffrezyklat als auch auf gegebenenfalls vorhandene Primärkunststoffe der gleichen Kunststoffsorte gemäß DIN EN ISO 11469 wie das verwendete Kunststoffrezyklat. Insgesamt besteht die erfindungsgemäße Kunststofffolie gemäß dieser Ausführungsform somit im Wesentlichen aus Kunststoff, wobei nur ein geringer Anteil an weiteren Stoffen, abhängig von dem Anwendungsbereich und den entsprechenden Anforderungen, in der Kunststofffolie enthalten ist (wobei diese weiteren Kunststoffe keinen Kunststoff umfassen, welcher nicht der gleichen Sorte wie das Kunststoffrezyklat entspricht).

Erfindungsgemäß kann es weiterhin vorgesehen sein, dass die erfindungsgemäße mehrschichtige Kunststofffolie einen Metallanteil, insbesondere in Form der Metallschicht, in Mengen im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie, aufweist.

In diesem Zusammenhang stellt insbesondere der zuvor genannte Metallanteil zuverlässige Sperrschicht- bzw. Barriereeigenschaften für die erfindungsgemäße mehrschichtige Kunststofffolie bereit, insbesondere ohne die Rezyklierfähigkeit zu beeinträchtigen.

Weiterhin kann, im Rahmen der vorliegenden Erfindung, die erfindungsgemäße mehrschichtige Kunststofffolie Inhaltsstoffe, ausgewählt aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Klebstoffen, Hilfsstoffen und Additiven sowie deren Mischungen und Kombinationen, insbesondere in Mengen im Bereich von 0,1 Gew.-% bis 20 Gew.-%, insbesondere im Bereich von 0,2 Gew.-% bis 17,5 Gew.-%, vorzugsweise im Bereich von 0,2 Gew.-% bis 15 Gew.-%, bezogen auf die mehrschichtige Kunststofffolie, aufweisen.

Durch die Zugabe von solchen weiteren Hilfsstoffen - zusätzlich zu dem Kunststoffrezyklat, dem gegebenenfalls vorhandenen Primärkunststoff derselben Kunststoffsorte und dem Metall der Metallschicht - können die Eigenschaften, insbesondere die mechanischen, optischen, haptischen etc. Eigenschaften, der erfindungsgemäßen mehrschichtigen Kunststofffolie angepasst bzw. eingestellt werden. Die erfindungsgemäße Kunststofffolie kann somit für ihre entsprechende Verwendung bzw. Anwendung maßgeschneidert werden.

Gemäß einer besonderen Ausführungsform der vorliegenden Erfindung kann es vorgesehen sein, dass die erfindungsgemäße mehrschichtige Kunststofffolie
- Kunststoffrezyklat in Mengen im Bereich von 80 Gew.-% bis 97 Gew.-%, insbesondere in Mengen im Bereich von 82 Gew.-% bis 96 Gew.-%, vorzugsweise in Mengen im Bereich von 84 Gew.-% bis 95 Gew.-%;
- gegebenenfalls Primärkunststoff(e) der gleichen Kunststoffsorte gemäß DIN EN ISO 11469 wie das Kunststoffrezyklat, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%;
- Metall(e), insbesondere in Form der Metallschicht, in Mengen im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%; Inhaltsstoffe, ausgewählt aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Klebstoffen, Hilfsstoffen und Additiven sowie deren Mischungen und Kombinationen, in Mengen im Bereich von 0,1 Gew.-% bis 20 Gew.-%, insbesondere im Bereich von 0,2 Gew.-% bis 17,5 Gew.-%, vorzugsweise im Bereich von 0,2 Gew.-% bis 15 Gew.-%,
aufweist oder hieraus besteht, wobei die vorstehenden Gewichtsprozentangaben jeweils auf die mehrschichtige Kunststofffolie bezogen sind und derart zu kombinieren und/oder auszuwählen sind, dass 100 Gew.-% resultieren.

Kunststofffolien mit diesen Inhaltsstoffen in den entsprechenden Mengen eignen sich besonders gut als Verpackungsmaterial bzw. zur Verwendung als Verpackungsmaterial, weisen weiterhin Sperrschicht- bzw. Barriereeigenschaften auf und sind darüber hinaus für eine erneute Rezyklierung geeignet.

Die Schichtdicke der erfindungsgemäßen mehrschichtigen Kunststofffolie kann in breiten Bereichen variieren:
Insbesondere kann die erfindungsgemäße mehrschichtige Kunststofffolie eine Schichtdicke im Bereich von 10 µm bis 300 µm, insbesondere im Bereich von 15 µm bis 200 µm, bevorzugt im Bereich von 20 µm bis 180 µm, besonders bevorzugt im Bereich von 25 µm bis 175 µm, aufweisen.

Weiterhin kann die erfindungsgemäße mehrschichtige Kunststofffolie eine Schichtdicke von mindestens 10 µm, insbesondere mindestens 15 µm, bevorzugt mindestens 20 µm, besonders bevorzugt mindestens 25 µm, aufweisen.

Darüber hinaus kann die erfindungsgemäße mehrschichtige Kunststofffolie eine Schichtdicke von bis zu 300 µm, insbesondere bis zu 200 µm, bevorzugt bis zu 180 µm, besonders bevorzugt bis zu 175 µm, aufweisen.

Die Schichtdicke der erfindungsgemäßen mehrschichtigen Kunststofffolie kann in breiten Bereichen variieren und ist daher besonders gut an ihre entsprechende Anwendung anpassbar. Insbesondere sind die mechanischen Eigenschaften, wie beispielsweise Zugfestigkeit, Reißdehnung und dynamische Durchstoßfestigkeit, abhängig von der entsprechenden Schichtdicke. Darüber hinaus verändert sich aber auch die Verarbeitbarkeit und die Stabilität mit der Schichtdicke. Insbesondere bei der Verwendung der erfindungsgemäßen mehrschichtigen Kunststofffolie als Verpackungsmaterial können unterschiedliche Anforderungen (beispielsweise je nach zu verpackendem Gut bzw. zu verpackender Ware) vorliegen, so dass die mehrschichtige Kunststofffolie entsprechend ihres Einsatzes angepasst werden muss.

Im Rahmen der vorliegenden Erfindung ist es gemäß einer besonderen Ausführungsform bevorzugt, wenn die Metallschicht und/oder das Metall der Metallschicht ausgewählt ist aus der Gruppe von reinen Metallen einer Metallsorte, Legierungen von Metallen, Mischungen von Metallen, Metallverbindungen, insbesondere Metalloxiden, und Mischungen von Metallverbindungen sowie deren Kombinationen, bevorzugt aus der Gruppe von reinen Metallen einer Metallsorte, Legierungen von Metallen, Mischungen von Metallen sowie deren Kombinationen, besonders bevorzugt aus reinen Metallen einer Metallsorte.

Insbesondere kann es bevorzugt sein, wenn die Metallschicht zumindest im Wesentlichen aus einem reinen Metall einer Metallsorte besteht oder hieraus gebildet ist, insbesondere einem Übergangsmetall oder einem Leichtmetall, vorzugsweise Aluminium.

In diesem Zusammenhang kann es insbesondere bevorzugt sein, wenn die Metallschicht zumindest im Wesentlichen aus Aluminium besteht oder hieraus gebildet ist, insbesondere wobei der Aluminiumanteil der Metallschicht, bezogen auf die Metallschicht, mindestens 95 Gew.-%, insbesondere mindestens 96 Gew.-%, vorzugsweise mindestens 97 Gew.-%, besonders bevorzugt mindestens 98 Gew.-%, ganz besonders bevorzugt mindestens 99 Gew.-%, beträgt.

In diesem Zusammenhang kann der restliche Bestandteil der Metallschicht gegebenenfalls aus üblichen Verunreinigungen bzw. Fremdmetalle, wie beispielsweise Zink, Zinn, Kupfer, Nickel, Titan, Silicium etc. bestehen, wobei es im Rahmen der vorliegenden Erfindung vorteilhaft ist, wenn eine möglichst reine Aluminiumschicht vorliegt (d.h. ein möglichst geringer Anteil an Verunreinigungen bzw. ein möglichst geringer Fremdmetallanteil in der Metallschicht bzw. Aluminiumschicht vorliegt).

Auch die Schichtdicke der erfindungsgemäßen Metallschicht kann in breiten Bereichen variieren:
Erfindungsgemäß weist die Metallschicht eine Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, auf.

Erfindungsgemäß weist die Metallschicht eine Schichtdicke von mindestens 0,001 µm, insbesondere von mindestens 0,0015 µm, bevorzugt von mindestens 0,002 µm, besonders bevorzugt von mindestens 0,003 µm, auf.

Darüber hinaus weist die Metallschicht erfindungsgemäß eine Schichtdicke von bis zu 50 µm, insbesondere von bis zu 35 µm, bevorzugt von bis zu 20 µm, besonders bevorzugt von bis zu 10 µm, auf.

Gleichermaßen kann auch der Anteil der Metallschicht bezogen auf die erfindungsgemäße mehrschichtige Kunststofffolie in breiten Bereichen variieren:
Insbesondere kann das Metall der Metallschicht, bezogen auf die mehrschichtige Kunststofffolie, in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, vorliegen.

Darüber hinaus kann das Metall der Metallschicht, bezogen auf die mehrschichtige Kunststofffolie, in Mengen und/oder mit einem Anteil von mindestens 0,05 Gew.-%, insbesondere von mindestens 0,1 Gew.-%, vorzugsweise von mindestens 0,2 Gew.-%, besonders bevorzugt von mindestens 0,3 Gew.-%, vorliegen.

Weiterhin kann das Metall der Metallschicht, bezogen auf die mehrschichtige Kunststofffolie, in Mengen und/oder mit einem Anteil von bis zu 20 Gew.-%, insbesondere von bis zu 15 Gew.-%, vorzugsweise von bis zu 10 Gew.-%, besonders bevorzugt von bis zu 5 Gew.-%, vorliegen.

Im Rahmen einer bevorzugten Ausführungsform der vorliegenden Erfindung, kann die Metallschicht als eine zumindest im Wesentlichen vollflächige Schicht und/oder als eine zumindest im Wesentlichen durchgängige Schicht und/oder als eine zumindest im Wesentlichen kontinuierliche Schicht und/oder als eine zumindest im Wesentlichen unterbrechungsfreie Schicht und/oder als eine zumindest im Wesentlichen zusammenhängende Schicht ausgebildet sein.

Gemäß einer weiteren bevorzugten Ausführungsform, kann die Metallschicht zumindest im Wesentlichen ohne Lücken und/oder zumindest im Wesentlichen lückenfrei ausgebildet sein.

Durch die Ausbildung der Metallschicht als eine zumindest im Wesentlichen vollflächige bzw. durchgängige bzw. kontinuierliche bzw. unterbrechungsfreie bzw. zusammenhängende Schicht, welche somit zumindest im Wesentlichen ohne Lücken bzw. lückenfrei ausgebildet ist, werden besonders hohe Sperrschicht- bzw. Barriereeigenschaften über die gesamt Oberfläche der erfindungsgemäßen mehrschichtigen Kunststofffolie bereitgestellt.

Gemäß einer besonderen Ausführungsform der vorliegenden Erfindung kann die Metallschicht Sperrschichteigenschaften (Barriereeigenschaften) gegenüber Wasserdampf und/oder Gasen, vorzugsweise Sauerstoff, bevorzugt Sperrschichteigenschaften gegenüber Wasserdampf und Gasen, vorzugsweise Sauerstoff, aufweisen.

Durch die Sperrschichteigenschaften bzw. Barriereeigenschaften der Metallschicht erhält auch die erfindungsgemäße mehrschichtige Kunststofffolie als solche bzw. als Ganze die entsprechenden Sperrschicht- bzw. Barriereeigenschaften. Insbesondere ist zur Bereitstellung dieser Sperrschicht- bzw. Barriereeigenschaften keine weitere bzw. unterschiedliche Kunststoffsorte notwendig, welche die Rezyklierfähigkeit der erfindungsgemäßen mehrschichtigen Kunststofffolie beinträchtigen würde. Eine Beeinträchtigung der Rezyklierfähigkeit der Kunststofffolie durch die Metallschicht erfolgt gerade nicht.

Gemäß der vorliegenden Erfindung, wird die Metallschicht mittels Dünnschichttechniken, insbesondere mittels Gasphasenabscheidung, thermisches Spritzen oder Kunststoffgalvanisieren, bevorzugt mittels Gasphasenabscheidung, insbesondere mittels physikalischer Gasphasenabscheidung (PVC) oder chemischer Gasphasenabscheidung (CVD), erzeugt.

Die vorgenannten Techniken sind dem Fachmann grundsätzlich bekannt, wobei in diesem Zusammenhang, insbesondere im Hinblick auf die Gasphasenabscheidung, beispielsweise auf die Dokumente EP 1 936 004 A1, DE 196 12 345 C1, EP 1 132 197 A2 verwiesen werden kann.

Mit den zuvor genannten Techniken ist es insbesondere möglich, besonders dünne und gleichmäßige aber dennoch leistungsstarke Schichten bereitzustellen. Dies ist dem Fachmann hinlänglich bekannt.

Gemäß einer weiteren besonderen Ausführungsform der vorliegenden Erfindung kann die Metallschicht mittels Metallisierung und/oder mittels Metallisierungstechniken erzeugt sein. Diese Techniken sind dem Fachmann als solche bestens vertraut.

Im Rahmen der vorliegenden Erfindung kawird die Metallschicht innenseitig auf mindestens eine der äußeren Folien, insbesondere auf die erste äußere Folie, aufgebracht und/oder hieran befestigt.

Weiterhin kann es im Rahmen der vorliegenden Erfindung vorteilhaft sein, wenn die Metallschicht auf eine Innenseite der beiden äußeren Folien aufgebracht und/oder hieran befestigt ist.

Gemäß der vorliegenden Erfindung ist es vorgesehen, dass die Metallschicht auf der Innenseite der ersten äußeren Folie und/oder auf der der zweiten äußeren Folie zugewandten Seite der ersten äußeren Folie aufgebracht und/oder hieran befestigt ist.

In diesem Zusammenhang ist die innenseitige Anbringung insbesondere von Vorteil, da die Metallschicht vor Abnutzung bzw. Verschleiß bzw. Beschädigungen geschützt wird und somit die Barriereeigenschaften auch bei mechanischer Belastung nicht verringert werden.

In diesem Zusammenhang ist grundsätzlich aber auch eine außenseitige Anbringung möglich. Bei einer außenseitigen Anbringung der Metallschicht kann es insbesondere vorteilhaft sein, wenn zusätzlich ein Schutzlack oder eine zusätzliche Schutzfolie über der Metallschicht angeordnet ist, so dass die Metallschicht, wie zuvor ausgeführt, vor Abnutzung bzw. Verschleiß bzw. Beschädigungen geschützt wird.

In diesem Zusammenhang kann insbesondere die Folienseite, welche mit der Metallschicht versehen wird, vorbehandelt werden, insbesondere mittels Korona- oder Plasmabehandlung, so dass eine verbesserte Haftung der Metallschicht auf der entsprechenden Folienseite ermöglicht wird. Ein solches Vorgehen ist als solches dem Fachmann hinlänglich bekannt.

Gemäß der vorliegenden Erfindung, ist es vorgesehen, dass die Metallschicht auf der Innenseite der ersten äußeren Folie und/oder auf der der zweiten äußeren Folie zugewandten Seite der ersten äußeren Folie aufgebracht und/oder hieran befestigt ist, mittels Metallisierung und/oder Dünnschichttechnik, vorzugsweise mittels Gasphasenabscheidung, und mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, und insbesondere in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie, und/oder insbesondere als Aluminiumschicht.

Gemäß diesem Aspekt der vorliegenden Erfindung ist insbesondere Gegenstand der vorliegenden Erfindung eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, und mit Sperrschichteigenschaften (Barriereeigenschaften) gegenüber Wasserdampf und/oder Gasen, vorzugsweise Sauerstoff, bevorzugt mit Sperrschichteigenschaften (Barriereeigenschaften) gegenüber Wasserdampf und Gasen, vorzugsweise Sauerstoff, insbesondere eine mehrschichtige Kunststofffolie wie zuvor definiert, wobei die mehrschichtige Kunststofffolie einen Schichtverbund von mehreren, insbesondere mindestens drei, miteinander verbundenen Schichten umfasst, wobei die mehrschichtige Kunststofffolie und/oder der Schichtverbund eine erste äußere Folie (= Trägerfolie) und eine zweite äußere Folie (= Kaschier- oder Deckfolie) und eine zwischen der ersten äußeren Folie und der zweiten äußeren Folie angeordnete Metallschicht umfasst,
wobei die mehrschichtige Kunststofffolie einen Kunststoffrezyklat-Anteil von mindestens 80 Gew.-%, bezogen auf die mehrschichtige Kunststofffolie, aufweist und
wobei die Metallschicht auf der Innenseite der ersten äußeren Folie und/oder auf der der zweiten äußeren Folie zugewandten Seite der ersten äußeren Folie aufgebracht und/oder hieran befestigt ist;
wobei die Metallschicht mittels Metallisierung und/oder Dünnschichttechniken, vorzugsweise mittels Gasphasenabscheidung, erzeugt ist; und/oder
wobei die Metallschicht mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist;
insbesondere wobei die Metallschicht in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie, vorliegt;
insbesondere wobei die Metallschicht als Aluminiumschicht ausgebildet ist und/oder insbesondere wobei die Metallschicht zumindest im Wesentlichen aus Aluminium besteht oder hieraus gebildet ist, vorzugsweise wobei der Aluminiumanteil der Metallschicht, bezogen auf die Metallschicht, mindestens 95 Gew.-%, insbesondere mindestens 96 Gew.-%, vorzugsweise mindestens 97 Gew.-%, besonders bevorzugt mindestens 98 Gew.-%, ganz besonders bevorzugt mindestens 99 Gew.-%, beträgt.

Insbesondere weist eine solche erfindungsgemäße mehrschichtige Kunststofffolie hohe Sperrschicht- bzw. Barriereeigenschaften bei einer gleichzeitig geringen gute und individuelle einstellbare (d. h. maßschneiderbare) bzw. einem geringen Anteil der Metallschicht auf, sodass eine hohe Umweltkompatibilität und Rezyklierbarkeit vorliegt.

Im Rahmen der vorliegenden Erfindung kann es vorgesehen sein, dass die Metallschicht opak, insbesondere opak in Bezug auf den Wellenlängenbereich des sichtbaren Lichts, ausgebildet ist. Insbesondere weist die Metallschicht eine Opazität von mindestens 10 %, insbesondere von mindestens 20 %, vorzugsweise von mindestens 25 %, besonders bevorzugt von mindestens 30 %, insbesondere bestimmt gemäß DIN 53146, auf.

In diesem Zusammenhang kann es insbesondere vorgesehen sein, dass die Metallschicht eine optische Dichte im Bereich von 1 bis 5, insbesondere im Bereich von 1,5 bis 4, bevorzugt im Bereich von 2 bis 3, insbesondere bestimmt gemäß JIS K7605, aufweist.

Der Begriff der Opazität bezeichnet im Allgemeinen das Gegenteil bzw. den Kehrwert von Transparenz, also mangelnde Durchsichtigkeit bzw. mangelnde Durchlässigkeit. Der Begriff wird insbesondere in der Optik und mit Bezug auf Materialien verwendet. Die Opazität ist somit ein Maß für die Lichtundurchlässigkeit (Trübung) von transluzenten (streuend lichtdurchlässigen) Materialien und Schichten. Klare Materialien (mit geringer Streuung) sind dagegen transparent; ihre Licht(un)durchlässigkeit wird als optische Dichte (logarithmisch) bzw. Transmission (linear) angegeben. Die Opazität ist der Kehrwert der Transmission.

Die Opazität beschreibt also das Maß der Lichtundurchlässigkeit bzw. Blickdichtigkeit in Prozent. Insbesondere liegt die Opazität einer vollkommen lichtundurchlässigen Kunststofffolie bei 100 % und eine vollständig bzw. vollkommen transparente Kunststofffolie weist eine Opazität von 0 % auf.

In diesem Zusammenhang ist unter dem Begriff "opak" insbesondere die mangelnde Durchsichtigkeit bzw. die Lichtundurchlässigkeit, insbesondere die Blickdichtigkeit, zu verstehen. Insbesondere sind opake Kunststofffolien gerade nicht transparent im Wellenlängenbereich des sichtbaren Lichts. Der Wellenlängenbereich des sichtbaren Lichts bezieht sich insbesondere auf die elektromagnetische Strahlung im Wellenlängenbereich von 300 nm bis 780 nm.

Gemäß einer besonderen Ausführungsform der vorliegenden Erfindung kann es vorgesehen sein, dass die (summierten) Schichtdicken der äußeren Folien 60 % bis 99,9 %, insbesondere 70 % der 99,5 %, bevorzugt 80 % bis 99,5 %, besonders bevorzugt 85 % bis 99 %, der (Gesamt-)Schichtdicke der mehrschichtigen Kunststofffolie betragen.

Im Rahmen der vorliegenden Erfindung handelt es sich somit um eine mehrschichtige Kunststofffolie, welche als Hauptbestandteil Kunststoff aufweist. Weiterhin verleihen die äußeren Folien der erfindungsgemäßen mehrschichtigen Kunststofffolie ihre Stabilität, optischen Eigenschaften, haptischen Eigenschaften etc. Die Metallschicht verleiht der erfindungsgemäßen mehrschichtigen Kunststofffolie insbesondere Sperrschicht- bzw. Barriereeigenschaften, wobei in diesem Zusammenhang eine sehr geringe Schichtdicke ausreichend ist, um leistungsstarke Sperrschicht- bzw. Barriereeigenschaften bereitzustellen.

In diesem Zusammenhang kann es insbesondere vorgesehen sein, dass das Verhältnis der Schichtdicken von erster äußerer Folie / Metallschicht / zweiter äußerer Folie im Bereich von 50 - 90 : 0,5 - 20 : 30 - 60 variiert.

Im Rahmen der vorliegenden Erfindung verleiht insbesondere die erste äußere Folie, welche auch Trägerfolie genannt wird, der erfindungsgemäßen mehrschichtigen Kunststofffolie Stabilität und gegebenenfalls auch Opazität, und die Metallschicht verleiht der erfindungsgemäßen Kunststofffolie insbesondere Sperrschichteigenschaften und ein gewisses Maß an Opazität, während die zweite äußere Folie, welche auch Kaschier- oder Deckfolie genannt wird, ausreichend Schutz für das Metall bzw. die Metallschicht bereitstellt und weiterhin die Bedruckbarkeit der erfindungsgemäßen mehrschichtigen Kunststofffolie ermöglicht.

Gemäß der vorliegenden Erfindung ist es vorgesehen, dass die erste äußere Folie (= Trägerfolie) einen Schichtverbund von mindestens drei miteinander verbundenen, insbesondere mittels Koextrusion verbundenen und/oder koextrudierten, Folienschichten umfasst.

Weiterhin ist es gemäß der vorliegenden Erfindung vorgesehen, dass (auch) die zweite äußere Folie (= Kaschier- oder Deckfolie) einen Schichtverbund von mindestens drei miteinander verbundenen, insbesondere mittels Koextrusion verbundenen und/oder koextrudierten, Folienschichten umfasst oder aber dass die zweite äußere Folie als eine Einzelschichtfolie, insbesondere als Einzelschichtkunststofffolie vorzugsweise auf Basis von Kunststoffrezyklat oder als Einzelschichtlackfolie, ausgebildet ist. Vorzugsweise umfasst die zweite äußere Folie jedoch einen Schichtverbund von mindestens drei miteinander verbundenen, insbesondere mittels Koextrusion verbundenen und/oder koextrudierten, Folienschichten.

Gemäß diesem Aspekt der vorliegenden Erfindung ist insbesondere Gegenstand der vorliegenden Erfindung eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, und mit Sperrschichteigenschaften (Barriereeigenschaften) gegenüber Wasserdampf und/oder Gasen, vorzugsweise Sauerstoff, bevorzugt mit Sperrschichteigenschaften (Barriereeigenschaften) gegenüber Wasserdampf und Gasen, vorzugsweise Sauerstoff, insbesondere eine mehrschichtige Kunststofffolie wie zuvor definiert,
wobei die mehrschichtige Kunststofffolie einen Schichtverbund von mehreren, insbesondere mindestens drei, miteinander verbundenen Schichten umfasst,
wobei die mehrschichtige Kunststofffolie und/oder der Schichtverbund eine erste äußere Folie (= Trägerfolie) und eine zweite äußere Folie (= Kaschier- oder Deckfolie) und eine zwischen der ersten äußeren Folie und der zweiten äußeren Folie angeordnete Metallschicht umfasst,
wobei die mehrschichtige Kunststofffolie einen Kunststoffrezyklat-Anteil von mindestens 80 Gew.-%, bezogen auf die mehrschichtige Kunststofffolie, aufweist, wobei die erste äußere Folie einen Schichtverbund von mindestens drei miteinander verbundenen, insbesondere mittels Koextrusion verbundenen und/oder koextrudierten, Folienschichten umfasst,
wobei die zweite äußere Folie einen Schichtverbund von mindestens drei miteinander verbundenen, insbesondere mittels Koextrusion verbundenen und/oder koextrudierten, Folienschichten umfasst oder aber als eine Einzelschichtfolie, insbesondere als Einzelschichtkunststofffolie vorzugsweise auf Basis von Kunststoffrezyklat oder als Einzelschichtlackfolie, ausgebildet ist, vorzugsweise wobei die zweite äußere Folie einen Schichtverbund von mindestens drei miteinander verbundenen, insbesondere mittels Koextrusion verbundenen und/oder koextrudierten, Folienschichten umfasst, und
wobei die Metallschicht auf der Innenseite der ersten äußeren Folie und/oder auf der der zweiten äußeren Folie zugewandten Seite der ersten äußeren Folie aufgebracht und/oder hieran befestigt ist;
wobei die Metallschicht mittels Metallisierung und/oder Dünnschichttechniken, vorzugsweise mittels Gasphasenabscheidung, erzeugt ist; und
wobei die Metallschicht mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist;
insbesondere wobei die Metallschicht in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie, vorliegt; und/oder
insbesondere wobei die Metallschicht als Aluminiumschicht ausgebildet ist und/oder insbesondere wobei die Metallschicht zumindest im Wesentlichen aus Aluminium besteht oder hieraus gebildet ist, vorzugsweise wobei der Aluminiumanteil der Metallschicht, bezogen auf die Metallschicht, mindestens 95 Gew.-%, insbesondere mindestens 96 Gew.-%, vorzugsweise mindestens 97 Gew.-%, besonders bevorzugt mindestens 98 Gew.-%, ganz besonders bevorzugt mindestens 99 Gew.-%, beträgt.

Eine erfindungsgemäße Kunststofffolie, insbesondere mit den zuvor definierten koextrudierten Schichtverbunden als äußere Folien erlaubt ein verbessertes Maßschneidern bzw. eine genauere Anpassbarkeit der Endeigenschaften der erfindungsgemäßen Kunststofffolie.

Weiterhin ist gemäß diesem Aspekt der vorliegenden Erfindung insbesondere Gegenstand der vorliegenden Erfindung eine mehrschichtige Kunststofffolie, insbesondere eine mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, und mit Sperrschichteigenschaften (Barriereeigenschaften) gegenüber Wasserdampf und/oder Gasen, vorzugsweise Sauerstoff, bevorzugt mit Sperrschichteigenschaften (Barriereeigenschaften) gegenüber Wasserdampf und Gasen, vorzugsweise Sauerstoff, insbesondere eine mehrschichtige Kunststofffolie wie zuvor definiert,
wobei die mehrschichtige Kunststofffolie einen Schichtverbund von mehreren, insbesondere mindestens drei, miteinander verbundenen Schichten umfasst,
wobei die mehrschichtige Kunststofffolie und/oder der Schichtverbund eine erste äußere Folie (= Trägerfolie) und eine zweite äußere Folie (= Kaschier- oder Deckfolie) und eine zwischen der ersten äußeren Folie und der zweiten äußeren Folie angeordnete Metallschicht umfasst,
wobei die mehrschichtige Kunststofffolie einen Kunststoffrezyklat-Anteil von mindestens 80 Gew.-%, bezogen auf die mehrschichtige Kunststofffolie, aufweist,
wobei die äußeren Folien jeweils einen Schichtverbund von mindestens drei miteinander verbundenen, insbesondere mittels Koextrusion verbundenen und/oder koextrudierten, Folienschichten umfassen, und
wobei die Metallschicht auf der Innenseite der ersten äußeren Folie und/oder auf der der zweiten äußeren Folie zugewandten Seite der ersten äußeren Folie aufgebracht und/oder hieran befestigt ist;
wobei die Metallschicht mittels Metallisierung und/oder Dünnschichttechniken, vorzugsweise mittels Gasphasenabscheidung, erzeugt ist; und
wobei die Metallschicht mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist;
insbesondere wobei die Metallschicht in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie, vorliegt; und/oder
insbesondere wobei die Metallschicht als Aluminiumschicht ausgebildet ist und/oder
insbesondere wobei die Metallschicht zumindest im Wesentlichen aus Aluminium besteht oder hieraus gebildet ist, vorzugsweise wobei der Aluminiumanteil der Metallschicht, bezogen auf die Metallschicht, mindestens 95 Gew.-%, insbesondere mindestens 96 Gew.-%, vorzugsweise mindestens 97 Gew.-%, besonders bevorzugt mindestens 98 Gew.-%, ganz besonders bevorzugt mindestens 99 Gew.-%, beträgt.

Gemäß einer besonderen Ausführungsform der vorliegenden Erfindung kann es vorteilhaft sein, wenn die äußeren Folien jeweils einen Schichtverbund von mindestens drei miteinander verbundenen, insbesondere mittels Koextrusion verbundenen und/oder koextrudierten, Folienschichten umfassen.

Insbesondere können in diesem Zusammenhang die äußeren Folien jeweils eine erste äußere Folienschicht und eine zweite äußere Folienschicht und eine zwischen der ersten äußeren Folienschicht und der zweiten äußeren Folienschicht angeordnete mittlere Folienschicht umfassen.

Ein solcher mindestens dreischichtiger Aufbau der beiden äußeren Folien ist insbesondere vorteilhaft, da es durch die Ausbildung eines solchen Schichtverbunds möglich ist, die einzelnen Folienschichten unterschiedlich auszubilden, insbesondere mit unterschiedlichen Eigenschaften, so dass die Gesamteigenschaften der einzelnen äußere Folien individuell maßgeschneidert werden können. In diesem Zusammenhang können insbesondere die Oberflächeneigenschaften, wie zum Beispiel Rauhigkeit, oder aber auch die optischen Eigenschaften der einzelnen Folienschichten innerhalb der äußeren Folien variieren.

Gemäß der vorliegenden Erfindung ist es vorgesehen, dass die äußeren Folien jeweils einen Kunststoffrezyklat-Anteil von mindestens 80 Gew.-%, bezogen auf die jeweilige Folienschicht, aufweisen.

Gemäß der vorliegenden Erfindung ist es auch vorgesehen, dass die äußeren Folien und/oder die Folienschichten jeweils einen Kunststoffrezyklat-Anteil von mindestens 80 Gew.-%, bezogen auf die äußeren Folien und/oder auf die jeweilige Folienschicht, aufweisen.

So sollte nicht nur die erfindungsgemäße mehrschichtige Kunststofffolie als Ganzes bzw. insgesamt einen Kunststoffrezyklat-Anteil von mindestens 80 Gew.-% aufweisen, sondern auch jeweils die einzelnen äußeren Folien und die Folienschichten der äußeren Folien. Es basieren also sowohl die die Kunststofffolie ausbildenden Folien bzw. Folienschichten als auch die gesamte Kunststofffolie zumindest im Wesentlichen (d.h. wenigstens zu 80 Gew.-%) auf Kunststoffrezyklat. Es ist also nicht erforderlich, eine oder mehrere Schichten als Primärkunststoff in die erfindungsgemäße mehrschichtige Kunststofffolie zu integrieren, um im Wesentlichen gleichwertige bzw. vergleichbare Eigenschaften (z. B. mechanisch und/oder optische und/oder haptische etc. Eigenschaften) wie im Fall von Kunststoffen auf Basis von Primärkunststoffen zu erreichen.

Weiterhin ist vorgesehen, dass die äußeren Folien und/oder die Folienschichten jeweils ein in Bezug auf den das Kunststoffrezyklat ausbildenden Kunststoff gleiches und/oder gleichartiges Kunststoffrezyklat, insbesondere bezogen auf die das Kunststoffrezyklat ausbildende Kunststoffsorte gemäß DIN EN ISO 11469, aufweisen.

In diesem Zusammenhang ist es gleichermaßen vorgesehen, dass die äußeren Folien und/oder die Folienschichten jeweils eine in Bezug auf den das Kunststoffrezyklat ausbildenden Kunststoff gleiche und/oder gleichartige Kunststoffsorte, insbesondere gemäß DIN EN ISO 11469, aufweisen.

Die einzelnen äußeren Folien und die Folienschichten der erfindungsgemäßen Kunststofffolie sind somit insbesondere jeweils sortenrein und von daher auch für die erneute Rezyklierung geeignet.

Weiterhin ist diesbezüglich auch vorgesehen, dass die äußeren Folien und/oder die Folienschichten jeweils eine (Kunststoff-)Sortenreinheit, insbesondere Sortenreinheit der Kunststoffsorte gemäß DIN EN ISO 11469, von mindestens 90 Gew.-%, insbesondere mindestens 95 Gew.-%, bezogen auf den Kunststoff(anteil) der jeweiligen äußeren Folie und/oder der jeweiligen Folienschicht, aufweisen.

Darüber hinaus ist es erfindungsgemäß weiterhin vorgesehen, dass die äußeren Folien und/oder die Folienschichten jeweils zumindest im Wesentlichen (kunststoff-)sortenrein ausgebildet sind, wobei die äußeren Folien und/oder die Folien-schichten jeweils eine (Kunststoff-) Sortenreinheit, insbesondere Sortenreinheit der Kunststoffsorte gemäß DIN EN ISO 11469, von mindestens 90 Gew.-%, insbesondere mindestens 95 Gew.-%, bezogen auf den Kunststoff(anteil) der jeweiligen äußeren Folie und/oder der jeweiligen Folienschicht, aufweisen. Zugleich ist es auch erfindungsgemäß vorgesehen, dass die äußeren Folien und/oder die Folienschichten jeweils zumindest im Wesentlichen nur eine (einzige) Kunststoffsorte, insbesondere nur eine (einzige) Kunststoffsorte gemäß DIN EN ISO 11469, aufweisen, wobei die Kunststoffsorte jeweils mit einer (Sorten-) Reinheit von mindestens 90 Gew.-%, insbesondere mindestens 95 Gew.-%, bezogen auf den Kunststoff(anteil) der jeweiligen äußeren Folie und/oder der jeweiligen Folienschicht, vorliegt.

Ferner ist es vorgesehen, dass die äußeren Folien und/oder die Folienschichten jeweils zumindest im Wesentlichen nur sortenreinen Kunststoff aufweisen, wobei die (Kunststoff-)Sortenreinheit, insbesondere die Sortenreinheit der Kunststoffsorte gemäß DIN EN ISO 11469, jeweils mindestens 90 Gew.-%, insbesondere mindestens 95 Gew.-%, bezogen auf den Kunststoff(anteil) der jeweiligen äußeren Folie und/oder der jeweiligen Folienschicht, beträgt.

Weiterhin kann es gemäß einer bevorzugten Ausführungsform vorgesehen sein, dass die äußeren Folien und/oder die Folienschichten jeweils ein Kunststoffrezyklat auf Basis von Polyethylen (PE-Rezyklat) aufweisen, wobei die äußeren Folien und/oder die Folienschichten jeweils einen Kunststoffrezyklat-Anteil von mindestens 80 Gew.-%, bezogen auf die jeweilige äußere Folie und/oder die jeweilige Folienschicht, aufweisen.

Insbesondere kann es in diesem Zusammenhang bevorzugt sein, wenn das Kunststoffrezyklat auf Basis von Polyethylen (PE-Rezyklat) eine (Polyethylen-) Sortenreinheit von mindestens 90 Gew.-%, insbesondere mindestens 95 Gew.-%, bezogen auf das Kunststoffrezyklat auf Basis von Polyethylen, aufweist.

Insbesondere ist die Verwendung von Polyethylen als Kunststoff bzw. die Verwendung von polyethylenbasiertem Kunststoffrezyklat vorteilhaft, da Abfallprodukte auf Basis von Polyethylen in hohen Mengen verfügbar sind und Polyethylen sich sehr gut für die Rezyklierung eignet. Darüber hinaus ist Polyethylen gut verarbeitbar und für eine Vielzahl von Anwendungen geeignet. Darüber hinaus kann es insbesondere vorgesehen sein, dass die äußeren Folien und/oder die Folienschichten zusätzlich Primärpolyethylen (Polyethylen als und/oder in Form von Primärkunststoff) aufweisen insbesondere in Mengen im Bereich von 0,1 Gew.-% bis 15 Gew.-%, insbesondere in Mengen im Bereich von 0,5 Gew.-% bis 10 Gew.-%, vorzugsweise in Mengen im Bereich von 1 Gew.-% bis 9 Gew.-%, bezogen auf die jeweilige äußere Folie und/oder die jeweilige Folienschicht.

Durch die gezielte Zugabe von geringen Mengen an Primärpolyethylen können die Endeigenschaften der erfindungsgemäßen Kunststofffolie eingestellt werden. Insbesondere können in diesem Zusammenhang gezielt und abhängig von den gewünschten Eigenschaften bestimmte Polyethylentypen, wie beispielsweise Polyethylen mit einem bestimmten Molekulargewicht (z. B. UHMWPE, VLDPE etc.) und/oder Polyethylen mit einer bestimmten Dichte (z. B. HDPE, MDPE, LDPE, LLDPE etc.) zugegeben werden.

Die einzelnen Folienschichten und/oder äußeren Folien sind grundsätzlich in ihrer Herstellung bzw. Zusammensetzung und somit ihren Eigenschaften unabhängig voneinander, wobei es jedoch -wie zuvor ausgeführt- vorteilhaft ist bzw. vorgesehen sein kann, wenn alle Folien und/oder Folienschichten jeweils zumindest im Wesentlichen aus derselben Kunststoffsorte, vorzugsweise Polyethylen, bestehen und somit im Wesentlichen auf Kunststoffrezyklat basieren und optional allenfalls nur geringe Mengen Primärkunststoff und/oder andere Hilfsstoffe enthalten.

Gemäß einer besonderen Ausführungsform der vorliegenden Erfindung kann es vorgesehen sein, dass die Schichtdicke der mittlere Folienschicht jeweils 35 % bis 65 %, insbesondere 40 % bis 60 %, bevorzugt 45 % bis 55 %, besonders bevorzugt etwa 50 %, der (Gesamt-)Schichtdicke der jeweiligen äußeren Folie beträgt.

Auch kann es gemäß einer besonderen Ausführungsform der vorliegenden Erfindung vorgesehen sein, dass die (summierten) Schichtdicken der äußeren Folienschichten jeweils 35 % bis 65 %, insbesondere 40 % der 60 %, bevorzugt 45 % bis 55 %, besonders bevorzugt etwa 50 %, der (Gesamt-)Schichtdicke der jeweiligen äußeren Folie betragen.

In diesem Zusammenhang kann es insbesondere vorgesehen sein, dass das Verhältnis der Schichtdicken von erste äußere Folienschicht / mittlere Folienschicht / zweite äußere Folienschicht innerhalb der jeweiligen äußeren Folie jeweils im Bereich von 10 - 35 : 40 - 60 : 10 - 35, insbesondere im Bereich von 15 - 30 : 45 - 55 : 15 - 30, variiert.

Die mittlere Folienschicht verleiht den erfindungsgemäßen äußeren Folien jeweils maßgeblich ihre Stabilität, während die äußeren Folienschichten der jeweiligen äußeren Folien maßgeblich die optischen Eigenschaften, Haftung und Reibung, Haptik sowie die Veredelbarkeit, insbesondere Bedruckbarkeit und Beschichtbarkeit, bestimmen. Die spezifische Kombination von mittlerer Folienschicht und den beiden äußeren Folienschichten bestimmt die Dichtigkeit und Gleichmäßigkeit der Folie insgesamt. Durch die Anpassung der Schichtdickenanteile in der jeweiligen äußeren Folie können die Endeigenschaften, insbesondere optische Eigenschaften, Haftung und Reibung, Haptik, Bedruckbarkeit, Dichtigkeit, Gleichmäßigkeit sowie die Stabilität der entsprechenden äußeren Folie und auch der erfindungsgemäßen mehrschichtigen Kunststofffolie maßgeschneidert werden und entsprechend der Anwendung eingestellt werden.

Insbesondere können die äußeren Folien und/oder mindestens zwei der Folienschichten unterschiedliche Eigenschaften aufweisen.

In diesem Zusammenhang können die äußeren Folien und/oder mindestens zwei der Folienschichten unterschiedliche Schichtdicken aufweisen.

Darüber hinaus können die äußeren Folien und/oder mindestens zwei der Folienschichten unterschiedliche optische Eigenschaften, insbesondere unterschiedliche Opazitäten und/oder unterschiedliche Färbungen, aufweisen.

Des Weiteren können die äußeren Folien und/oder mindestens zwei der Folienschichten unterschiedliche Inhaltsstoffe, insbesondere wie zuvor definiert, aufweisen.

Außerdem können die äußeren Folien und/oder mindestens zwei der Folienschichten unterschiedliche mechanische Eigenschaften, insbesondere unterschiedliche Zugfestigkeiten in Längs- und/oder Querrichtung und/oder unterschiedliche Reißdehnungen in Längs- und/oder Querrichtung und/oder unterschiedliche dynamische Durchstoßfestigkeiten und/oder unterschiedliche Reibungskoeffizienten, aufweisen.

Durch die unterschiedlichen Eigenschaften der einzelnen Folienschichten (insbesondere zum Beispiel durch unterschiedliche Schichtdicken, unterschiedliche Opazitäten, bzw. Färbungen, unterschiedliche Inhaltsstoffe und/oder unterschiedliche mechanische Eigenschaften etc.) können die Eigenschaften der äußeren Folien und der (Gesamt-)Kunststofffolie eingestellt werden, so dass ein Maßschneidern der Eigenschaften der erfindungsgemäßen Kunststofffolie entsprechend ihrer Anwendung möglich ist. In diesem Zusammenhang können dadurch beispielsweise die beiden äußeren Folien unterschiedliche haptische und/oder optische Eigenschaften aufweisen.

Im Rahmen der vorliegenden Erfindung kann es vorteilhaft sein, wenn die erfindungsgemäße mehrschichtige Kunststofffolie zusätzlich eine Haftschicht und/oder Klebschicht aufweist.

Insbesondere kann die erfindungsgemäße mehrschichtige Kunststofffolie zusätzlich eine Haftschicht und/oder Klebschicht aufweisen.

Insbesondere kann es vorteilhaft sein, wenn die Haftschicht und/oder Klebschicht auf mindestens eine der äußeren Folien, vorzugsweise innenseitig, insbesondere auf die zweite äußere Folie, aufgebracht und/oder aufgetragen ist.

Darüber hinaus kann es vorgesehen sein, dass die Haftschicht und/oder Klebschicht auf eine Innenseite der beiden äußeren Folie aufgebracht und/oder aufgetragen ist.

Weiterhin kann es vorgesehen sein, dass die Haftschicht und/oder Klebschicht auf die Innenseite der zweiten äußeren Folie und/oder auf der der ersten äußeren Folie zugewandten Seite der zweiten äußeren Folie aufgebracht und/oder aufgetragen ist.

Insbesondere kann es vorteilhaft sein, wenn die Haftschicht und/oder Klebschicht zwischen der Metallschicht und der zweiten äußeren Folie angeordnet ist. Vorzugsweise ist die Haftschicht und/oder Klebschicht auf die Innenseite der zweiten äußeren Folie und/oder auf der der ersten äußeren Folie zugewandten Seite der zweiten äußeren Folie aufgebracht und/oder aufgetragen und mit der Metallschicht verbunden und/oder verklebt, insbesondere vollflächig verbunden und/oder verklebt.

Darüber hinaus kann es vorgesehen sein, dass die Haftschicht und/oder Klebschicht in einer Menge im Bereich von 1 g/m² bis 5 g/m², insbesondere im Bereich von 1,5 g/m² bis 4 g/m², vorzugsweise im Bereich von 1,75 g/m² bis 3,5 g/m², besonders bevorzugt im Bereich von 2 g/m² bis 3 g/m², ganz besonders bevorzugt von etwa 2,5 g/m², vorliegt.

Des Weiteren kann es vorteilhaft sein, wenn die Haftschicht und/oder Klebschicht zumindest im Wesentlichen aus reaktivem Polyurethan-Klebstoff gebildet ist.

In diesem Zusammenhang ist es insbesondere vorteilhaft, wenn die Folienseite, welche mit der Klebschicht und/oder Haftschicht versehen wird, vorbehandelt wird, insbesondere mittels Korona- oder Plasmabehandlung. Dieser Vorgang bzw. dieses Verfahren ist als solcher dem Fachmann hinlänglich bekannt.

Insbesondere ist auch Gegenstand der vorliegenden Erfindung gemäß diesem Erfindungsaspekt eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, und mit Sperrschichteigenschaften (Barriereeigenschaften) gegenüber Wasserdampf und/oder Gasen, vorzugsweise Sauerstoff, bevorzugt mit Sperrschichteigenschaften (Barriereeigenschaften) gegenüber Wasserdampf und Gasen, vorzugsweise Sauerstoff, insbesondere eine mehrschichtige Kunststofffolie wie zuvor definiert,
wobei die mehrschichtige Kunststofffolie einen Schichtverbund von mehreren, insbesondere mindestens drei, miteinander verbundenen Schichten umfasst,
wobei die mehrschichtige Kunststofffolie und/oder der Schichtverbund eine erste äußere Folie (= Trägerfolie) und eine zweite äußere Folie (= Kaschier- oder Deckfolie) und eine zwischen der ersten äußeren Folie und der zweiten äußeren Folie angeordnete Metallschicht umfasst,
wobei die mehrschichtige Kunststofffolie einen Kunststoffrezyklat-Anteil von mindestens 80 Gew.-%, bezogen auf die mehrschichtige Kunststofffolie, aufweist;
wobei die äußeren Folien jeweils einen Schichtverbund von mindestens drei miteinander verbundenen, insbesondere mittels Koextrusion verbundenen und/oder koextrudierten, Folienschichten umfassen;
wobei die mehrschichtige Kunststofffolie zusätzlich eine Haftschicht und/oder Klebschicht aufweist, insbesondere wobei die Haftschicht und/oder Klebschicht zwischen der Metallschicht und der zweiten äußeren Folie angeordnet ist, vorzugsweise wobei die Haftschicht und/oder Klebschicht auf die Innenseite der zweiten äußeren Folie und/oder auf der der ersten äußeren Folie zugewandten Seite der zweiten äußeren Folie aufgebracht und/oder aufgetragen und mit der Metallschicht verbunden und/oder verklebt, insbesondere vollflächig verbunden und/oder verklebt, ist; und
wobei die Metallschicht auf der Innenseite der ersten äußeren Folie und/oder auf der der zweiten äußeren Folie zugewandten Seite der ersten äußeren Folie aufgebracht und/oder hieran befestigt ist;
wobei die Metallschicht mittels Metallisierung und/oder Dünnschichttechniken, vorzugsweise mittels Gasphasenabscheidung, erzeugt ist; und
wobei die Metallschicht mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist;
insbesondere wobei die Metallschicht in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie, vorliegt; und/oder
insbesondere wobei die Metallschicht als Aluminiumschicht ausgebildet ist und/oder insbesondere wobei die Metallschicht zumindest im Wesentlichen aus Aluminium besteht oder hieraus gebildet ist, vorzugsweise wobei der Aluminiumanteil der Metallschicht, bezogen auf die Metallschicht, mindestens 95 Gew.-%, insbesondere mindestens 96 Gew.-%, vorzugsweise mindestens 97 Gew.-%, besonders bevorzugt mindestens 98 Gew.-%, ganz besonders bevorzugt mindestens 99 Gew.-%, beträgt.

Weiterhin ist insbesondere auch Gegenstand der vorliegenden Erfindung gemäß diesem Erfindungsaspekt eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, und mit Sperrschichteigenschaften (Barriereeigenschaften) gegenüber Wasserdampf und/oder Gasen, vorzugsweise Sauerstoff, bevorzugt mit Sperrschichteigenschaften (Barriereeigenschaften) gegenüber Wasserdampf und Gasen, vorzugsweise Sauerstoff, insbesondere eine mehrschichtige Kunststofffolie wie zuvor definiert, wobei die mehrschichtige Kunststofffolie einen Schichtverbund von mehreren, insbesondere mindestens drei, miteinander verbundenen Schichten umfasst, wobei die mehrschichtige Kunststofffolie und/oder der Schichtverbund eine erste äußere Folie (= Trägerfolie) und eine zweite äußere Folie (= Kaschier- oder Deckfolie) und eine zwischen der ersten äußeren Folie und der zweiten äußeren Folie angeordnete Metallschicht umfasst,
wobei die mehrschichtige Kunststofffolie einen Kunststoffrezyklat-Anteil von mindestens 80 Gew.-%, bezogen auf die mehrschichtige Kunststofffolie, aufweist; wobei die äußeren Folien jeweils einen Schichtverbund von mindestens drei miteinander verbundenen, insbesondere mittels Koextrusion verbundenen und/oder koextrudierten, Folienschichten umfassen, wobei die äußeren Folien und/oder die Folienschichten jeweils ein in Bezug auf den das Kunststoffrezyklat ausbildenden Kunststoff gleiches und/oder gleichartiges Kunststoffrezyklat, insbesondere bezogen auf die das Kunststoffrezyklat ausbildende Kunststoffsorte gemäß DIN EN ISO 11469, aufweisen;
wobei die mehrschichtige Kunststofffolie zusätzlich eine Haftschicht und/oder Klebschicht aufweist, insbesondere wobei die Haftschicht und/oder Klebschicht zwischen der Metallschicht und der zweiten äußeren Folie angeordnet ist, vorzugsweise wobei die Haftschicht und/oder Klebschicht auf die Innenseite der zweiten äußeren Folie und/oder auf der der ersten äußeren Folie zugewandten Seite der zweiten äußeren Folie aufgebracht und/oder aufgetragen und mit der Metallschicht verbunden und/oder verklebt, insbesondere vollflächig verbunden und/oder verklebt, ist; und
wobei die Metallschicht auf der Innenseite der ersten äußeren Folie und/oder auf der der zweiten äußeren Folie zugewandten Seite der ersten äußeren Folie aufgebracht und/oder hieran befestigt ist;
wobei die Metallschicht mittels Metallisierung und/oder Dünnschichttechniken, vorzugsweise mittels Gasphasenabscheidung, erzeugt ist; und
wobei die Metallschicht mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist;
insbesondere wobei die Metallschicht in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie, vorliegt; und/oder
insbesondere wobei die Metallschicht als Aluminiumschicht ausgebildet ist und/oder insbesondere wobei die Metallschicht zumindest im Wesentlichen aus Aluminium besteht oder hieraus gebildet ist, vorzugsweise wobei der Aluminiumanteil der Metallschicht, bezogen auf die Metallschicht, mindestens 95 Gew.-%, insbesondere mindestens 96 Gew.-%, vorzugsweise mindestens 97 Gew.-%, besonders bevorzugt mindestens 98 Gew.-%, ganz besonders bevorzugt mindestens 99 Gew.-%, beträgt.

Darüber hinaus ist weiterhin Gegenstand der vorliegenden Erfindung gemäß diesem Erfindungsaspekt eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, und mit Sperrschichteigenschaften (Barriereeigenschaften) gegenüber Wasserdampf und/oder Gasen, vorzugsweise Sauerstoff, bevorzugt mit Sperrschichteigenschaften (Barriereeigenschaften) gegenüber Wasserdampf und Gasen, vorzugsweise Sauerstoff, insbesondere eine mehrschichtige Kunststofffolie wie zuvor definiert, wobei die mehrschichtige Kunststofffolie einen Schichtverbund von mehreren, insbesondere mindestens drei, miteinander verbundenen Schichten umfasst, wobei die mehrschichtige Kunststofffolie und/oder der Schichtverbund eine erste äußere Folie (= Trägerfolie) und eine zweite äußere Folie (= Kaschier- oder Deckfolie) und eine zwischen der ersten äußeren Folie und der zweiten äußeren Folie angeordnete Metallschicht umfasst,
wobei die mehrschichtige Kunststofffolie einen Kunststoffrezyklat-Anteil auf Basis von Polyethylen (PE-Rezyklat) von mindestens 80 Gew.-%, bezogen auf die mehrschichtige Kunststofffolie, aufweist;
wobei die äußeren Folien jeweils einen Schichtverbund von mindestens drei miteinander verbundenen, insbesondere mittels Koextrusion verbundenen und/oder koextrudierten, Folienschichten umfassen, wobei die äußeren Folien und/oder die Folienschichten jeweils ein Kunststoffrezyklat auf Basis von Polyethylen (PE-Rezyklat) aufweisen;
wobei die mehrschichtige Kunststofffolie zusätzlich eine Haftschicht und/oder Klebschicht aufweist, wobei die Haftschicht und/oder Klebschicht zwischen der Metallschicht und der zweiten äußeren Folie angeordnet ist; und
wobei die Metallschicht auf der Innenseite der ersten äußeren Folie und/oder auf der der zweiten äußeren Folie zugewandten Seite der ersten äußeren Folie aufgebracht und/oder hieran befestigt ist, wobei die Metallschicht mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist und wobei die Metallschicht als Aluminiumschicht ausgebildet ist und/oder zumindest im Wesentlichen aus Aluminium besteht oder hieraus gebildet ist, insbesondere wobei der Aluminiumanteil der Metallschicht, bezogen auf die Metallschicht, mindestens 95 Gew.-% beträgt.

Eine derartige erfindungsgemäße mehrschichtige Kunststofffolie bzw. der Schichtverbund weist einen besonders starken Verbund, welcher auch bei starker mechanischer Belastung beständig ist, und darüber hinaus ausgezeichnete Sperrschichteigenschaften auf.

Im Rahmen der vorliegenden Erfindung sollte die erfindungsgemäße mehrschichtige Kunststofffolie eine Reihe von mechanischen Eigenschaften aufweisen, insbesondere damit sie für die Anwendung als Verpackungsfolie geeignet ist bzw. die Anforderung für die Verwendung als Verpackungsfolie erfüllt.

Typischerweise weist die erfindungsgemäße mehrschichtige Kunststofffolie eine Zugfestigkeit in Längsrichtung von mindestens 10 N/mm², insbesondere mindestens 15 N/mm², vorzugsweise mindestens 19 N/mm², insbesondere bestimmt gemäß DIN EN ISO 527, auf.

Vorteilhafter Weise weist die erfindungsgemäße mehrschichtige Kunststofffolie eine Zugfestigkeit in Querrichtung von mindestens 10 N/mm², insbesondere mindestens 12 N/mm², vorzugsweise mindestens 17 N/mm², insbesondere bestimmt gemäß DIN EN ISO 527, auf.

Bei der Zugfestigkeit (englisch: *tensile strength)* wird die maximale mechanische Zugspannung gemessen, welche die Kunststofffolie aushält, bevor sie zerreißt und wird als Kraft pro Fläche angegeben. Bei der Zugfestigkeit handelt es sich um eine sogenannte intensive Größe bzw. Eigenschaft, d.h. um eine Zustandsgröße, welche sich bei unterschiedlicher Größe des betrachteten Systems nicht ändert, wobei diese Zustandsgröße jedoch von dem Material, beispielsweise der Herstellung des Probenkörpers, abhängt.

Bevorzugt weist die erfindungsgemäße mehrschichtige Kunststofffolie eine Reißdehnung in Längsrichtung von mindestens 150 %, insbesondere mindestens 175 %, vorzugsweise mindestens 200 %, insbesondere bestimmt gemäß DIN EN ISO 527, auf.

Insbesondere weist die erfindungsgemäße mehrschichtige Kunststofffolie eine Reißdehnung in Querrichtung von mindestens 180 %, insbesondere mindestens 225 %, vorzugsweise mindestens 250 %, insbesondere bestimmt gemäß DIN EN ISO 527, auf.

Die Reißdehnung, synonym auch als Bruchdehnung (englisch: *tensile strain at break)* bezeichnet, gibt die verbleibende Verlängerung der Zugprobe nach dem Bruch an, bezogen auf die Anfangslänge, d.h. hierdurch wird die Verformungsfähigkeit bzw. Duktilität der Kunststofffolie bestimmt. Mit anderen Worten gibt die Reißdehnung bzw. Bruchdehnung das prozentuale Verhältnis der Längenänderung beim Bruch zur Ausgangslänge des Werkstoffs wider und entspricht somit der Fähigkeit eines Werkstoffs, Formänderungen oder Rissbildungen zu folgen.

Vorzugsweise weist die erfindungsgemäße mehrschichtige Kunststofffolie eine dynamische Durchstoßfestigkeit von mindestens 1,2 g/µm, insbesondere mindestens 1,5 g/µm, vorzugsweise mindestens 1,7 g/µm, insbesondere bestimmt gemäß ASTM D 1709-98 (Dart-Drop-Test), auf.

Die dynamische Durchstoßfestigkeit, synonym auch als Schlagfestigkeit bezeichnet, bewertet die Schlagfestigkeit oder Zähigkeit einer Kunststofffolie. Gemessen wird die dynamische Durchstoßfestigkeit insbesondere mittels des sogenannten Dart-Drop-Tests, bei welchem die Kunststofffolie zunächst faltenfrei und fest eingespannt wird und anschließend fällt ein Fallhammer mit variablem Gewicht aus einer definierten Höhe auf die Folie. Es wird das Gewicht des Fallhammers ermittelt, bei welchem bei 50 % der Falltests die Folie durchstoßen wird.

Auch das Reibungsverhalten, insbesondere der Reibungskoeffizient, der erfindungsgemäßen Kunststofffolie lässt sich anpassen bzw. maßschneidern.

Typischerweise weist die erfindungsgemäße (unbehandelte) mehrschichtige Kunststofffolie einen Reibungskoeffizienten (Coefficient of Friction bzw. COF) auf Metall von höchstens 0,45, insbesondere bestimmt gemäß DIN 53375, auf.

Insbesondere weist die erfindungsgemäße behandelte, insbesondere die mittels Plasma oder Korona behandelte mehrschichtige Kunststofffolie einen Reibungskoeffizienten (Coefficient of Friction bzw. COF) auf Metall von höchstens 0,55, insbesondere bestimmt gemäß DIN 53375, auf.

Der Reibungskoeffizient, synonym auch als Reibungszahl bezeichnet (oder aber auch als sogenannter "Coefficient of Friction" bzw. "COF" bezeichnet) ist das dimensionslose Maß für die Reibungskraft im Verhältnis zu einer Anpresskraft zwischen zwei Körpern. Der Reibungskoeffizient wird gemäß DIN 53375 ermittelt, indem ein mit der Kunststofffolie bespanntes Prüfgewicht über eine Oberfläche, in diesem Fall: Metall, gezogen wird, wobei die Kraft gemessen wir, bei welchem sich das Prüfgewicht zu bewegen beginnt (Haftreibung), und es wird darüber hinaus auch die erforderliche Kraft gemessen, um das Prüfgewicht in Bewegung zu halten (Gleitreibung).

Weiterhin sollte die erfindungsgemäße mehrschichtige Kunststofffolie eine Reihe von Sperrschicht- bzw. Barriereeigenschaften aufweisen, insbesondere damit sie für die Anwendung als Verpackungsfolie für feuchtigkeitsempfindliche und/oder geruchsintensive Produkte bzw. Substanzen geeignet ist bzw. die Anforderung für die Verwendung als eine solche Verpackungsfolie erfüllt.

Typischerweise weist die erfindungsgemäße mehrschichtige Kunststofffolie eine Wasserdampfdurch-lässigkeit bei 23 °C und 85 % relativer Luftfeuchtigkeit von höchstens 1 g / m² • d, insbesondere von höchstens 0,8 g / m² • d, vorzugsweise von höchstens 0,7 g / m² • d, besonders bevorzugt von höchstens 0,6 g / m² • d, ganz besonders bevorzugt von höchstens 0,5 g / m² • d, insbesondere bestimmt gemäß DIN EN ISO 15106, auf.

Vorteilhafterweise weist die erfindungsgemäße mehrschichtige Kunststofffolie eine Wasserdampfdurchlässigkeit bei 38 °C und 90 % relativer Luftfeuchtigkeit von höchstens 1,5 g / m² • d, insbesondere von höchstens 1,3 g / m² • d, vorzugsweise von höchstens 1,2 g m² • d, besonders bevorzugt von höchstens 1,1 g / m² • d, ganz besonders bevorzugt von höchstens 1 g / m² • d, insbesondere bestimmt gemäß DIN EN ISO 15106, auf.

Die Wasserdampfdurchlässigkeit oder Wasserdampfdiffusionsfähigkeit bezeichnet die Durchlässigkeit einer Beschichtung oder einer Folie für Wasserdampf, wobei je höher die Wasserdampfdurchlässigkeit ist, desto besser kann Feuchtigkeit transportiert werden. Die Wasserdampfdurchlässigkeit ist insbesondere ein wichtiger Faktor bei der Verpackung von feuchtigkeitsempfindlichen Produkten.

Bevorzugt weist die erfindungsgemäße mehrschichtige Kunststofffolie eine Sauerstoffdurchlässigkeit bei 23 °C und 50 % relativer Luftfeuchtigkeit von höchstens 50 cm³/m² • d • bar, insbesondere von höchstens 48 cm³/m² • d • bar, vorzugsweise von höchstens 45 cm³/m² • d • bar, besonders bevorzugt von höchstens 43 cm³/m² • d • bar, ganz besonders bevorzugt von höchstens 40 cm³/m² • d • bar, insbesondere bestimmt gemäß DIN EN ISO 53380, auf.

Die Gasdurchlässigkeit, insbesondere Sauerstoffdurchlässigkeit, bestimmt die Eigenschaft der Folie sich von Gasmolekülen, insbesondere Sauerstoffmolekülen, durchdringen zu lassen.

Insbesondere ist auch Gegenstand der vorliegenden Erfindung gemäß diesem Erfindungsaspekt eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, und mit Sperrschichteigenschaften (Barriereeigenschaften) gegenüber Wasserdampf und/oder Gasen, vorzugsweise Sauerstoff, bevorzugt mit Sperrschichteigenschaften (Barriereeigenschaften) gegenüber Wasserdampf und Gasen, vorzugsweise Sauerstoff, insbesondere eine mehrschichtige Kunststofffolie wie zuvor definiert, wobei die mehrschichtige Kunststofffolie einen Schichtverbund von mehreren, insbesondere mindestens drei, miteinander verbundenen Schichtenumfasst, wobei die mehrschichtige Kunststofffolie und/oder der Schichtverbund eine erste äußere Folie (= Trägerfolie) und eine zweite äußere Folie (= Kaschier- oder Deckfolie) und eine zwischen der ersten äußeren Folie und der zweiten äußeren Folie angeordnete Metallschichtumfasst,
wobei die mehrschichtige Kunststofffolie einen Kunststoffrezyklat-Anteil auf Basis von Polyethylen (PE-Rezyklat) von mindestens 80 Gew.-%, bezogen auf die mehrschichtige Kunststofffolie, aufweist;
wobei die äußeren Folien jeweils einen Schichtverbund von mindestens drei miteinander verbundenen, insbesondere mittels Koextrusion verbundenen und/oder koextrudierten, Folienschichten umfassen, wobei die äußeren Folien und/oder die Folienschichten jeweils ein Kunststoffrezyklat auf Basis von Polyethylen (PE-Rezyklat) aufweisen;
wobei die mehrschichtige Kunststofffolie zusätzlich eine Haftschicht und/oder Klebschicht aufweist, wobei die Haftschicht und/oder Klebschicht zwischen der Metallschicht und der zweiten äußeren Folie angeordnet ist; und
wobei die Metallschicht auf der Innenseite der ersten äußeren Folie und/oder auf der der zweiten äußeren Folie zugewandten Seite der ersten äußeren Folie aufgebracht und/oder hieran befestigt ist, wobei die Metallschicht mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist und wobei die Metallschicht als Aluminiumschicht ausgebildet ist und/oder zumindest im Wesentlichen aus Aluminium besteht oder hieraus gebildet ist, insbesondere wobei der Aluminiumanteil der Metallschicht, bezogen auf die Metallschicht, mindestens 95 Gew.-% beträgt;
wobei die mehrschichtige Kunststofffolie
   - eine Wasserdampfdurchlässigkeit bei 23 °C und 85 % relativer Luftfeuchtigkeit von höchstens 1 g / m² • d, insbesondere bestimmt gemäß DIN EN ISO 15106,
   - eine Wasserdampfdurchlässigkeit bei 38 °C und 90 % relativer Luftfeuchtigkeit von höchstens 1,5 g / m² • d, insbesondere bestimmt gemäß DIN EN ISO 15106, und
   - eine Sauerstoffdurchlässigkeit bei 23 °C und 50 % relativer Luftfeuchtigkeit von höchstens 50 cm³/m² • d • bar, insbesondere bestimmt gemäß DIN EN ISO 53380,
   aufweist.

Eine derartige erfindungsgemäße mehrschichtige Kunststofffolie, insbesondere mit den definierten Sperrschicht- bzw. Barriereeigenschaften, eignet sich besonders gut als Verpackungsfolie für feuchtigkeitsempfindliche und/oder geruchsintensive Produkte.

Die Oberfläche der erfindungsgemäßen mehrschichtigen Kunststofffolie kann insbesondere in weiteren Arbeitsschritten modifiziert werden bzw. mit weitern (Folien-)Schichten versehen werden (z.B. Lackierungen, Holzglanzeffekte, Bedruckungen etc.). Im Rahmen der vorliegenden Erfindung kann beispielsweise eine Versiegelung zum Schutz der Oberfläche aufgebracht werden (beispielsweise um die Oberfläche wasserundurchlässig zu machen).

Typischerweise kann die erfindungsgemäße mehrschichtige Kunststofffolie versiegelbar (siegelfähig) ausgebildet sein.

Insbesondere kann die erfindungsgemäße mehrschichtige Kunststofffolie veredelbar ausgebildet sein.

Vorzugsweise kann die erfindungsgemäße mehrschichtige Kunststofffolie beschichtbar ausgebildet sein.

Vorteilhafterweise kann die erfindungsgemäße mehrschichtige Kunststofffolie bedruckbar, insbesondere an mindestens einer ihrer äußeren Folienschichten bedruckbar, ausgebildet sein.

Bevorzugt kann die erfindungsgemäße mehrschichtige Kunststofffolie rauh und/oder aufgerauht, insbesondere an mindestens einer ihrer äußeren Folien, vorzugsweise an mindestens einer Außenseite ihrer äußeren Folien, rauh und/oder aufgerauht, ausgebildet sein, insbesondere mittels Plasma- oder Koronabehandlung.

Die Koronabehandlung ist ein elektrochemisches Verfahren zur Oberflächenmodifikation von Kunststoffen, bei welcher die Kunststofffolie einer elektrischen Hochspannungs-Entladung ausgesetzt wird, wodurch die Oberflächenspannung erhöht wird. Dieser Prozess kann beispielsweise zwischen einer geerdeten, polierten Walze aus Stahl oder Aluminium und einer eng anliegenden isolierten Elektrode durchgeführt werden, wobei auch isolierte Walzen und unisolierte Elektroden eingesetzt werden können. Die Kunststofffolie liegt auf der polierten Walze auf, so dass nur die der Elektrode zugewandten Seite behandelt wird, wobei die Rückseite mitbehandelt wird, wenn ein Luftschwall zwischen Walze und Kunststofffolie vorliegt. Alternativ zur Koronabehandlung kann auch ein Plasmaverfahren bzw. eine Plasmabehandlung der Oberfläche eingesetzt werden.

Darüber hinaus kann es im Rahmen der vorliegenden Erfindung vorgesehen sein, dass die erfindungsgemäße mehrschichtige Kunststofffolie an einer der äußeren Folien, insbesondere innenseitig, bedruckt, ist und/oder mit einer Bedruckung versehen ist.

In diesem Zusammenhang kann es weiterhin im Rahmen der vorliegenden Erfindung vorgesehen sein, dass die erfindungsgemäße mehrschichtige Kunststofffolie auf der Innenseite der zweiten äußeren Folie und/oder auf der der ersten äußeren Folie zugewandten Seite der zweiten äußeren Folie bedruckt ist und/oder mit einer Bedruckung versehen ist.

Durch die Bedruckung der erfindungsgemäßen Kunststofffolie an ihrer Innenseite, insbesondere an der Innenseite der zweiten äußeren Folie, welche vorteilhafterweise transparent ausgebildet sein sollte, wird der innenseitige Druck vor Abnutzung und/oder Verschleiß geschützt. Die zu bedruckende Seite der entsprechenden äußeren Folie sollte insbesondere vor Bedruckung durch eine Korona- oder Plasmabehandlung vorbehandelt werden, um ein sicheres Anhaften der Bedruckung zu gewährleisten.

Weiterhin kann es im Rahmen der vorliegenden Erfindung auch vorgesehen sein, dass die erfindungsgemäße mehrschichtige Kunststofffolie mit einem Identifizierungsmittel, vorzugsweise einer Markierung, insbesondere einem optisch und/oder elektronisch erfassbaren Identifizierungsmittel, einem Muster, einem Schriftzug und/oder einem Logo an einer der äußeren Folien, insbesondere innenseitig, versehen und/oder ausgerüstet ist.

Das Aufbringen eines Identifizierungsmittels, eines Musters, eines Schriftzugs und/oder eines Logos ermöglicht eine schnelle und eindeutige Identifizierung der Kunststofffolie an sich oder auch der in der Kunststofffolie verpackten Güter bzw. den Hersteller der in der Kunststofffolie verpackten Güter. In diesem Zusammenhang kann die Bedruckung beispielsweise Informationen bezüglich der Herkunft, der Rezyklierbarkeit, der (Produkt-)Haftung, der Inhaltsstoffe, erfolgter Qualitätskontrollen, der Mindesthaltbarkeit etc. enthalten.

Gemäß einer besonderen Ausführungsform der vorliegenden Erfindung kann die mehrschichtige Kunststofffolie in Form einer Flachfolie, Schlauchfolie oder Halbschlauchfolie ausgebildet sein.

Gemäß einer weiteren besonderen Ausführungsform kann die mehrschichtige Kunststofffolie für die Verwendung als Verpackung, insbesondere in Form von Umverpackungen, Schläuchen, Beuteln oder Tüten, ausgebildet sein.

Gemäß einer wiederum weiteren besonderen Ausführungsform kann die mehrschichtige Kunststofffolie für die Verpackung von Schüttgütern, insbesondere ausgewählt aus der Gruppe von (Pflanz-)Erden, Düngern, Mulch, Humus, Waschmitteln, Klebstoffen, Pellets, Granulaten, Pulvern, Hygieneartikeln, Haushaltsgütern und Haushaltswaren, oder aber für Hygieneanwendungen ausgebildet sein.

Weiterhin kann die erfindungsgemäße mehrschichtige Kunststofffolie für die Verwendung im Nichtlebensmittelbereich (Non-Food-Bereich), insbesondere als Verpackungsmaterial, ausgebildet sein.

Gemäß einer besonderen Ausführungsform der vorliegenden Erfindung kann es vorgesehen sein, dass die mehrschichtige Kunststofffolie, insbesondere der Schichtverbund der mehrschichtigen Kunststofffolie, weitere Schichten aufweist. Die weiteren Schichten können insbesondere ausgewählt werden aus der Gruppe von zusätzlichen und/oder weiteren Folienschichten, adhäsionsvermittelnden Schichten, Klebstoffschichten, Deckschichten, Farbschichten, Lackierungen sowie deren Kombinationen.

Durch die Anbringung weiterer Schichten, insbesondere weiterer der zuvor genannten Schichten, können die Eigenschaften der erfindungsgemäßen mehrschichtigen Kunststofffolie weitergehend eingestellt und entsprechend der Anwendungsanforderungen maßgeschneidert werden.

Insbesondere sind in diesem Zusammenhang die weiteren Schichten jeweils aus keinem andersartigen und/oder weiteren Kunststoffrezyklat, insbesondere aus keiner anderen und/oder weiteren Kunststoffsorte gemäß DIN EN ISO 11469, in Bezug auf die äußeren Schichten ausgebildet.

Weiterhin ist es bevorzugt, wenn die weiteren Schichten jeweils ein in Bezug auf den das Kunststoffrezyklat ausbildenden Kunststoff gleiches und/oder gleichartiges Kunststoffrezyklat, insbesondere bezogen auf die das Kunststoffrezyklat ausbildende Kunststoffsorte gemäß DIN EN ISO 11469, aufweisen.

Darüber hinaus ist es auch bevorzugt, wenn die weiteren Schichten jeweils eine in Bezug auf den das Kunststoffrezyklat ausbildenden Kunststoff gleiche und/oder gleichartige Kunststoffsorte, insbesondere gemäß DIN EN ISO 11469, aufweisen.

Da auch die möglichen weiteren Schichten die gleiche Kunststoffsorte wie das verwendete Kunststoffrezyklat aufweisen, ist die erfindungsgemäße Kunststofffolie auch bei dieser besonderen Ausführungsform weiterhin rezyklierbar.

Im Rahmen der vorliegenden Erfindung ist es bevorzugt, wenn die erfindungsgemäße mehrschichtige Kunststofffolie rezyklierfähig (recyclingfähig) und/oder wiederverwertbar ausgebildet ist.

Weiterhin ist es im Rahmen der vorliegenden Erfindung auch bevorzugt, wenn die erfindungsgemäße mehrschichtige Kunststofffolie nach ihrer Verwendung in Form ihres Kunststoffrezyklats für die Herstellung von kunststoffbasierten Produkten einsetzbar ist.

Insbesondere dadurch kann die auf Kunststoffrezyklat basierende erfindungsgemäße Kunststofffolie nach Gebrauch erneut zu Kunststoffrezyklat und anschließend zu einem neuen kunststoffbasierten Produkt verarbeitet werden. Somit entsteht ein nachhaltiger sowie langanhaltender Wertstoff- und Wirtschaftskreislauf.

Gemäß einer besonderen Ausführungsform kann es vorgesehen sein, dass die mehrschichtige Kunststofffolie und/oder mindestens eine äußere Folie, vorzugsweise die erste äußere Folie, opak, insbesondere opak in Bezug auf den Wellenlängenbereich des sichtbaren Lichts, ausgebildet ist.

Wie zuvor ausgeführt, bezeichnet der Begriff der Opazität im Allgemeinen das Gegenteil von Transparenz, also mangelnde Durchsichtigkeit bzw. mangelnde Durchlässigkeit. Für weitere Details wird auf die vorstehenden Ausführungen verwiesen.

Ein Vorteil einer opak ausgebildeten Kunststofffolie, insbesondere bei der Verwendung als oder für Verpackungsfolien, ist insbesondere die Tatsache, dass beispielsweise die darin enthaltenen Güter nicht erkennbar bzw. sichtbar sind. Weiterhin können die Güter vor UV-Strahlung geschützt werden, was beispielsweise organische Materialien vor Verkeimung, Algenbildung oder Schimmelbefall schützt.

Insbesondere kann es in diesem Zusammenhang vorgesehen sein, dass die mehrschichtige Kunststofffolie und/oder mindestens eine äußere Folie, vorzugsweise die erste äußere Folie, opak, insbesondere opak in Bezug auf den Wellenlängenbereich des sichtbaren Lichts, ausgebildet ist, wobei die opak ausgebildete mehrschichtige Kunststofffolie und/oder mindestens eine äußere Folie, vorzugsweise die erste äußere Folie, eine Opazität von mindestens 60 %, insbesondere von mindestens 70 %, vorzugsweise von mindestens 80 %, besonders bevorzugt von mindestens 90 %, ganz besonders bevorzugt von mindestens 95 %, noch weiter bevorzugt von mindestens 96 %, insbesondere bestimmt gemäß DIN 53146, aufweist.

Gemäß dieser besonderen Ausführungsform der vorliegenden Erfindung kann es vorgesehen sein, dass die opak ausgebildete mehrschichtige Kunststofffolie und/oder die opak ausgebildete mindestens eine äußere Folie, vorzugsweise die opak ausgebildete erste äußere Folie, farbig ausgebildet ist.

In diesem Zusammenhang sind unter "farbig" alle verfügbaren und/oder möglichen Farben, insbesondere im Wellenlängenbereich der elektromagnetischen Strahlung von 380 nm bis 780 nm, einschließlich der Farben "weiß", "schwarz" und "grau", zu verstehen.

Insbesondere kann die opak ausgebildete mehrschichtige Kunststofffolie und/oder die opak ausgebildete mindestens eine äußere Folie, vorzugsweise die opak ausgebildete erste äußere Folie, farbgebende Inhaltsstoffe, insbesondere ausgewählt aus Farbpigmenten, Farbstoffen, Färbemitteln und deren Kombinationen, aufweisen.

Weiterhin kann es gemäß dieser besondere Ausführungsform der vorliegenden Erfindung vorgesehen sein, dass die opak und/oder farbig ausgebildete mehrschichtige Kunststofffolie und/oder die opak und/oder farbig ausgebildete mindestens eine äußere Folie, vorzugsweise die opak und/oder farbig ausgebildete erste äußere Folie, mindestens zwei voneinander verschiedene Farben und/oder mindestens zwei voneinander verschiedene farbgebende Inhaltsstoffe aufweist.

Darüber hinaus kann es gemäß dieser besonderen Ausführungsform der vorliegenden Erfindung vorgesehen sein, dass mindestens zwei Folienschichten der opak und/oder farbig ausgebildeten mehrschichtige Kunststofffolie und/oder die opak und/oder farbig ausgebildete mindestens eine äußere Folie, vorzugsweise die opak und/oder farbig ausgebildete erste äußere Folie, voneinander verschiedene Farben und/oder voneinander verschiedene farbgebende Inhaltsstoffe aufweisen. Auch kann es gemäß dieser besonderen Ausführungsform der vorliegenden Erfindung vorgesehen sein, dass die opak und/oder farbig ausgebildete mehrschichtige Kunststofffolie und/oder die opak und/oder farbig ausgebildete mindestens eine äußere Folie, vorzugsweise die opak und/oder farbig ausgebildete erste äußere Folie, weiße, silberne und/oder schwarze Farbpigmente aufweist.

Geeignete Farbpigmente sind dem Fachmann wohlbekannt, wobei in diesem Zusammenhang als Weißpigment beispielsweise anorganisches Weißpigment, insbesondere ausgewählt aus der Gruppe von Titandioxid, Lithoponen, Bariumsulfat, Zinkoxid, Zinksulfid, Bleicarbonat, Aluminiumoxid, Siliciumdioxid, Calciumcarbonat, Bleiweiß, Cristobaltin, Kaolin, Kremserweiß, Marienglas, Calciumaluminatsulfat, Ton, Antimonweiß sowie deren Kombinationen, verwendet werden; als Metallfarben können insbesondere Metalleffektpigmente, wie beispielsweise Silberfarbenpigment, verwendetet werden; und als Schwarzpigment können insbesondere anorganische Metalleffektpigmente, insbesondere anorganisches Silberfarbenpigment, oder aber ein anorganisches Schwarzpigment, bevorzugt ein Metalleffektpigment, verwendet werden.

Insbesondere kann die opak und/oder farbig ausgebildete mehrschichtige Kunststofffolie und/oder die opak und/oder farbig ausgebildete mindestens eine äußere Folie, vorzugsweise die opak und/oder farbig ausgebildete erste äußere Folie, mindestens einen Stabilisator, insbesondere einen UV-Stabilisator, enthalten.

Typischerweise enthält die opak und/oder farbig ausgebildete mehrschichtige Kunststofffolie und/oder die opak und/oder farbig ausgebildete mindestens eine äußere Folie, vorzugsweise die opak und/oder farbig ausgebildete erste äußere Folie, mindestens einen Stabilisator, insbesondere einen UV-Stabilisator, vorzugsweise in Mengen im Bereich von 0,01 bis 5 Gew.-%, bevorzugt 0,1 bis 3 Gew.-%, bezogen auf die mehrschichtige Kunststofffolie und/oder die mindestens eine äußere Folie.

Gemäß einer alternativen Ausführungsform kann es vorgesehen sein, dass die mehrschichtige Kunststofffolie und/oder mindestens eine äußere Folie, vorzugsweise die zweite äußere Folie, transparent, insbesondere transparent in Bezug auf den Wellenlängenbereich des sichtbaren Lichts, ausgebildet ist.

In diesem Zusammenhang ist unter "transparent" die Durchsichtigkeit bzw. Durchlässigkeit zu verstehen, insbesondere sind transparente Kunststofffolien durchlässig in Bezug auf den Wellenlängenbereich des sichtbaren Lichts. Der Wellenlängenbereich des sichtbaren Lichts bezieht sich insbesondere auf die elektromagnetische Strahlung im Wellenlängenbereich von 350 nm bis 780 nm.

Transparenz bezeichnet in der Physik insbesondere die Fähigkeit von Materie, elektromagnetische Wellen hindurchzulassen (Transmission). Im Allgemeinen wird der Begriff meist auf sichtbares Licht, also auf den für den Menschen sichtbaren Spektralbereich elektromagnetischer Strahlung, bezogen. Transparenz ist also eine optische Eigenschaft eines Materials; andere optische Eigenschaften sind beispielsweise die Reflektivität und das Absorptionsvermögen.

Ein wesentlicher Vorteil einer transparent ausgebildeten erfindungsgemäßen Kunststofffolie, insbesondere bei der Verwendung als oder für Verpackungsfolien, ist die Tatsache, dass beispielsweise die darin enthaltenen Güter erkennbar bzw. sichtbar sind, was beispielsweise für die Qualitätskontrolle genutzt werden kann.

Wie zuvor ausgeführt, kann gemäß dieser alternativen besonderen Ausführungsform die mehrschichtige Kunststofffolie und/oder mindestens eine äußere Folie, vorzugsweise die zweite äußere Folie, transparent, insbesondere transparent in Bezug auf den Wellenlängenbereich des sichtbaren Lichts, ausgebildet sein.

Insbesondere kann es in diesem Zusammenhang vorgesehen sein, dass die transparent ausgebildete mehrschichtige Kunststofffolie und/oder die transparent ausgebildete mindestens eine äußere Folie, vorzugsweise die transparent ausgebildete zweite äußere Folie, eine Transparenz von mindestens 70 %, insbesondere von mindestens 75 %, vorzugsweise von mindestens 80 %, besonders bevorzugt von mindestens 85 %, ganz besonders bevorzugt von mindestens 90 %, noch mehr bevorzugt von mindestens 95 %, insbesondere bestimmt gemäß DIN EN ISO 13468, aufweist.

Die Transparenz ist in diesem Zusammenhang das Maß der Lichtdurchlässigkeit in Prozent und ist somit der Kehrwert der Opazität. Insbesondere liegt die Transparenz einer vollkommen lichtdurchlässigen Kunststofffolie bei 100 %, und eine vollkommen lichtundurchlässige Kunststofffolie weist eine Transparenz von 0 % auf (d.h. 100 % Opazität).

Auch kann es gemäß dieser besonderen Ausführungsform der vorliegenden Erfindung vorgesehen sein, dass die transparent ausgebildete mehrschichtige Kunststofffolie und/oder die transparent ausgebildete mindestens eine äußere Folie, vorzugsweise die transparent ausgebildete zweite äußere Folie, eine Opazität von höchstens 30 %, insbesondere von höchstens 25 %, vorzugsweise von höchstens 20 %, besonders bevorzugt von höchstens 15 %, ganz besonders bevorzugt von höchstens 10 %, noch mehr bevorzugt von höchstens 5 %, insbesondere bestimmt gemäß DIN 53146, aufweist.

Weiterhin kann es auch vorgesehen sein, dass die transparent ausgebildete mehrschichtige Kunststofffolie und/oder die transparent ausgebildete mindestens eine äußere Folie, vorzugsweise die transparent ausgebildete zweite äußere Folie, eine Trübung (Haze-Wert) von höchstens 30 %, insbesondere von höchstens 25 %, vorzugsweise von höchstens 20 %, besonders bevorzugt von höchstens 15 %, ganz besonders bevorzugt von höchstens 10 %, noch mehr bevorzugt von höchstens 5 %, insbesondere bestimmt gemäß ASTM D-1003, aufweist.

Der Haze-Wert ist in diesem Zusammenhang insbesondere ein Maß für die Trübung von transparenten Proben bzw. Kunststofffolien und beschreibt den Anteil des transmittierten Lichts, welcher von der durchstrahlten Probe bzw. Kunststofffolie nach vorne gestreut wird; d.h. also der Haze-Wert quantifiziert Materialfehler in der Oberfläche oder der Struktur, welche die klare Durchsicht stören.

Gemäß dieser besonderen Ausführungsform der vorliegenden Erfindung kann es darüber hinaus auch vorgesehen sein, dass die transparent ausgebildete mehrschichtige Kunststofffolie und/oder die transparent ausgebildete mindestens eine äußere Folie, vorzugsweise die transparent ausgebildete zweite äußere Folie, Primärkunststoff(e) der gleichen Kunststoffsorte gemäß DIN EN ISO 11469 wie das Kunststoffrezyklat enthält, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%, bezogen auf die mehrschichtige Kunststofffolie und/oder die mindestens eine äußere Folie.

Im Rahmen der vorliegenden Erfindung ist es insbesondere bevorzugt, wenn die erste äußere Folie opak ausgebildet ist, insbesondere wobei die erste äußere Folie weiße, silberne und/oder schwarze Farbpigmente aufweist, und die zweite äußere Folie transparent ausgebildet ist.

Insbesondere ist auch Gegenstand der vorliegenden Erfindung gemäß diesem Erfindungsaspekt eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, und mit Sperrschichteigenschaften (Barriereeigenschaften) gegenüber Wasserdampf und/oder Gasen, vorzugsweise Sauerstoff, bevorzugt mit Sperrschichteigenschaften (Barriereeigenschaften) gegenüber Wasserdampf und Gasen, vorzugsweise Sauerstoff, insbesondere eine mehrschichtige Kunststofffolie wie zuvor definiert, wobei die mehrschichtige Kunststofffolie einen Schichtverbund von mehreren, insbesondere mindestens drei, miteinander verbundenen Schichten umfasst, wobei die mehrschichtige Kunststofffolie und/oder der Schichtverbund eine erste äußere Folie (= Trägerfolie) und eine zweite äußere Folie (= Kaschier- oder Deckfolie) und eine zwischen der ersten äußeren Folie und der zweiten äußeren Folie angeordnete Metallschicht umfasst,
wobei die mehrschichtige Kunststofffolie einen Kunststoffrezyklat-Anteil von mindestens 80 Gew.-%, bezogen auf die mehrschichtige Kunststofffolie, aufweist,
wobei die äußeren Folien jeweils einen Schichtverbund von mindestens drei miteinander verbundenen, insbesondere mittels Koextrusion verbundenen und/oder koextrudierten, Folienschichten umfassen, wobei die erste äußere Folie opak ausgebildet ist, insbesondere wobei der erste äußere Folie weiße, silberne und/oder schwarze Farbpigmente aufweist, und die zweite äußere Folie transparent ausgebildet ist; und
wobei die Metallschicht auf der Innenseite der ersten äußeren Folie und/oder auf der der zweiten äußeren Folie zugewandten Seite der ersten äußeren Folie aufgebracht und/oder hieran befestigt ist, wobei die Metallschicht mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist und wobei die Metallschicht als Aluminiumschicht ausgebildet ist und/oder zumindest im Wesentlichen aus Aluminium besteht oder hieraus gebildet ist, vorzugsweise wobei der Aluminiumanteil der Metallschicht, bezogen auf die Metallschicht, mindestens 95 Gew.-%, insbesondere mindestens 96 Gew.-%, vorzugsweise mindestens 97 Gew.-%, besonders bevorzugt mindestens 98 Gew.-%, ganz besonders bevorzugt mindestens 99 Gew.-%, beträgt.

Weiterhin ist insbesondere auch Gegenstand der vorliegenden Erfindung gemäß diesem Erfindungsaspekt eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, und mit Sperrschichteigenschaften (Barriereeigenschaften) gegenüber Wasserdampf und/oder Gasen, vorzugsweise Sauerstoff, bevorzugt mit Sperrschichteigenschaften (Barriereeigenschaften) gegenüber Wasserdampf und Gasen, vorzugsweise Sauerstoff, insbesondere eine mehrschichtige Kunststofffolie wie zuvor definiert,
wobei die mehrschichtige Kunststofffolie einen Schichtverbund von mehreren, insbesondere mindestens drei, miteinander verbundenen Schichten umfasst,
wobei die mehrschichtige Kunststofffolie und/oder der Schichtverbund eine erste äußere Folie (= Trägerfolie) und eine zweite äußere Folie (= Kaschier- oder Deckfolie) und eine zwischen der ersten äußeren Folie und der zweiten äußeren Folie angeordnete Metallschicht umfasst,
wobei die mehrschichtige Kunststofffolie einen Kunststoffrezyklat-Anteil auf Basis von Polyethylen (PE-Rezyklat) von mindestens 80 Gew.-%, bezogen auf die mehrschichtige Kunststofffolie, aufweist;
wobei die äußeren Folien jeweils einen Schichtverbund von mindestens drei miteinander verbundenen, insbesondere mittels Koextrusion verbundenen und/oder koextrudierten, Folienschichten umfassen, wobei die äußeren Folien und/oder die Folienschichten jeweils ein Kunststoffrezyklat auf Basis von Polyethylen (PE-Rezyklat) aufweisen, und wobei die erste äußere Folie opak ausgebildet ist, insbesondere wobei der erste äußere Folie weiße, silberne und/oder schwarze Farbpigmente aufweist, und die zweite äußere Folie transparent ausgebildet ist;
wobei die mehrschichtige Kunststofffolie zusätzlich eine Haftschicht und/oder Klebschicht aufweist, wobei die Haftschicht und/oder Klebschicht zwischen der Metallschicht und der zweiten äußeren Folie angeordnet ist; und
wobei die Metallschicht auf der Innenseite der ersten äußeren Folie und/oder auf der der zweiten äußeren Folie zugewandten Seite der ersten äußeren Folie aufgebracht und/oder hieran befestigt ist, wobei die Metallschicht mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist und wobei die Metallschicht als Aluminiumschicht ausgebildet ist und/oder zumindest im Wesentlichen aus Aluminium besteht oder hieraus gebildet ist, insbesondere wobei der Aluminiumanteil der Metallschicht, bezogen auf die Metallschicht, mindestens 95 Gew.-% beträgt;
wobei die mehrschichtige Kunststofffolie
   - eine Wasserdampfdurchlässigkeit bei 23 °C und 85 % relativer Luftfeuchtigkeit von höchstens 1 g / m² • d, insbesondere bestimmt gemäß DIN EN ISO 15106,
   - eine Wasserdampfdurchlässigkeit bei 38 °C und 90 % relativer Luftfeuchtigkeit von höchstens 1,5 g / m² • d, insbesondere bestimmt gemäß DIN EN ISO 15106, und
   - eine Sauerstoffdurchlässigkeit bei 23 °C und 50 % relativer Luftfeuchtigkeit von höchstens 50 cm³/m² • d • bar, insbesondere bestimmt gemäß DIN EN ISO 53380,
   aufweist.

Zur Herstellung der erfindungsgemäßen mehrschichtigen Kunststofffolie wird Kunststoffrezyklat bzw. Recyclingkunststoff verwendet, welches auf Kunststoffabfällen basiert. Die Gewinnung eines Kunststoffrezyklats, welches sich zur Herstellung der erfindungsgemäßen mehrschichtigen Kunststofffolie eignet, kann beispielsweise wie folgt erfolgen:
Zunächst werden die Kunststoffabfälle im Haushalt durch den Verbraucher vorsortiert, insbesondere in Deutschland im Zusammenhang mit dem Abfallsammel- und Verwertungssystem *"Grüner Punkt*", gemäß welchem die Kunststoffabfälle im gelben Sack oder der gelben Tonne gesammelt bzw. vom Verbraucher entsorgt werden. Anschließend kommen diese im Haushalt durch den Verbraucher vorsortierten Kunststoffabfälle in eine Sortieranlage, welche, vorzugsweise automatisch, die Kunststoffabfälle in einem mehrstufigen Prozess trennt. Zunächst werden die Abfälle nach Größe sortiert, damit das weitere Trennverfahren vereinfacht wird. Anschließend werden beispielsweise in einem Windsichter leichte Materialien, wie z. B. Folien, aussortiert, so dass die anschließende weitere Sortierung des Hartplastiks nach der entsprechenden Kunststoffsorte (d.h. Kunststoffsorte gemäß DIN EN ISO 11469) erfolgen kann. Das Hartplastik kann zu diesem Zweck in einem nächsten Schritt durch einen Scanner, z. B. einen Nahinfrarotscanner, schrittweise nach Kunststoffsorte (d. h. beispielsweise PE, PP, PET etc.) sortiert werden, wobei im Anschluss an die automatische Sortierung eine Handnachsortierung erfolgen kann. Weiterhin kann auch noch eine weiterführende Sortierung z. B. nach Dichte oder Farbe erfolgen. Die auf diese Weise erhältlichen, zumindest im Wesentlichen sortenreinen Kunststoffabfälle werden üblicherweise in einem nächsten Schritt zerkleinert, insbesondere geschreddert, und dann typischerweise einer Reinigung (üblicherweise einer Wäsche) mit anschließender Trocknung unterzogen. Diese zumindest im Wesentlichen sortenreinen, zerkleinerten und gereinigten Kunststoffabfälle können anschließend auch noch einer weiterführenden Nachsortierung nach ihrer Kunststoffsorte unterzogen werden, optional gefolgt von einer vorzugsweise automatischen Farbsortierung (sofern eine Farbsortierung nicht bereits vorab erfolgt ist, z. B. vor der Zerkleinerung oder aber nach der Reinigung etc.). Der nunmehr zumindest im Wesentlichen sortenreine, insbesondere auch farbengleiche, zerkleinerte und gereinigte Kunststoffabfall wird beispielsweise in einem Extruder aufgeschmolzen, anschließend mittels eines Filters einer letzten Reinigung unterzogen und zu Granulat verarbeitet. Dieses letztendlich erhaltene Granulat entspricht dem im Rahmen der vorliegenden Erfindung eingesetzten Kunststoffrezyklat.

Die Herstellung der erfindungsgemäßen mehrschichtigen Kunststofffolie auf Basis eines solchen Kunststoffrezyklats kann beispielsweise folgendermaßen erfolgen: Zunächst wird das Kunststoffrezyklat beispielsweise in einem Extruder aufgeschmolzen, wobei der resultierenden Schmelze mögliche bzw. optionale weitere Inhaltsstoffe, wie beispielsweise Stabilisatoren, Farbstoffe bzw. Farbpigmente, Primärkunststoffe, Antihaftmittel etc., zugesetzt werden. Diese resultierende Schmelze wird dann, bevorzugt unter Druck, kontinuierlich aus einer formgebenden Öffnung bzw. Düse herausgepresst. Vorzugsweise eignet sich zur Herstellung der erfindungsgemäßen mehrschichtigen Kunststofffolie, insbesondere eines entsprechenden Folienschlauchs, die sogenannte Blasfolienextrusion, bei welcher die Schmelze aus einer Ringdüse (aus welcher die einzelnen Folienschichten unmittelbar als Koextrudat und somit bereits als Folienschichtverbund austreten) in Form eines koextrudierten mehrschichtigen Folienschlauchs austritt und im Allgemeinen nach oben abgeführt wird. Da es sich erfindungsgemäß um eine mehrschichtige Kunststofffolie handelt, auch Koex(trusions)-Folie genannt, werden dem Blasverfahren Schmelzen aus mehreren Extrudern zugeführt, welche über eine Mehrschichtringdüse zu einer gemeinsamen Folie vereinigt, insbesondere koextrudiert, werden. Entsprechend dieser Technik können sowohl Schlauchfolien als auch hieraus wiederum (durch Aufschneiden der Schlauchfolie) Halbschlauchfolien sowie Flachfolien hergestellt werden, wobei jedoch die spezielle Ausbildung der Düse je nach herzustellender Folie (d. h. Flach-, Schlauch- oder Halbschlauchfolie) variieren können. Alternativ können speziell im Fall von mehrschichtigen Flachfolien auch schlitzförmige Auslassdüsen, insbesondere schlitzförmige Mehrschichtauslassdüsen, zum Einsatz kommen; auch können (erfindungsgemäß allerdings weniger bevorzugt) im Fall von mehrschichtigen Flachfolien die Einzelschichten zunächst separat extrudiert und nachfolgend laminiert werden. Die Schichtdicke der hergestellten mehrschichtigen Kunststofffolien kann durch eine Vielzahl von Herstellungsparametern, beispielsweise durch den Extrusionsdruck, die Düsenform und Düsenschlitzgröße, die bei der Blasfolienextrusion eingetragenen Luftmenge, die Granulatmenge, die bei der Extrusion angewandte Austritts- oder Abzugsgeschwindigkeit, Abquetschdruck etc., variiert werden.

Auf die zuvor beschriebene Weise lassen sich die erste äußere Folie (Trägerfolie) einerseits und die zweite äußere Folie (Kaschier- oder Deckfolie) andererseits der erfindungsgemäßen mehrschichtigen Kunststofffolie herstellen. Bevorzugt werden beiden äußeren Folien jeweils als mehrschichtige, insbesondere dreischichtige, koextrudierte Verbundfolien hergestellt, bevorzugt jeweils als Flachfolie. Durch optionale Zugabe von farbgebenden Substanzen, wie zuvor beschrieben, kann eine der beiden äußeren Folien farbig bzw. opak ausgebildet werden, während die andere äußere Folie dagegen transparent oder aber gleichermaßen farbig bzw. opak ausgebildet werden kann.

Die als erste äußere Folie (Trägerfolie) zu verwendende koextrudierte mehrschichtige Flachfolie kann mittels Korona- oder Plasmabehandlung an einer ihrer Außenseiten vorbehandelt bzw. aufgerauht werden, gefolgt von einer Metallisierung, typischerweise mit Aluminium, bevorzugt mittels Gasphasenabscheidung (wie zuvor beschrieben). Die metallisierte Außenseite der ersten äußeren Folie wird im Gesamtschichtverbund der erfindungsgemäßen mehrschichtigen Kunststofffolie typischerweise innenseitig (d. h. der zweiten äußeren Folie zugewandt) angeordnet.

Mittels eines geeigneten Klebstoffs bzw. Haftmittels, insbesondere eines reaktiven Klebstoffs bzw. Haftmittels (bevorzugt reaktiven Polyurethan-Klebstoffs), welcher vollflächig auf eine Außenseite der zweiten äußeren Folie aufgetragen werden kann (nämlich diejenige Außenseite, welche im Gesamtschichtverbund der erfindungsgemäßen mehrschichtigen Kunststofffolie typischerweise innenseitig, d. h. der ersten äußeren Folie zugewandt, angeordnet ist). Falls eine Bedruckung gewünscht ist, wird diese bevorzugt vor der Auftragung des Klebstoffs bzw. Haftmittels auf diese Außenseite aufgebracht, um die Bedruckung im Benutzungsfall der erfindungsgemäßen Kunststofffolie gegen Verschleiß und/oder Beschädigung zu schützen.

Die zweite äußere Folie wird im noch reaktiven Zustand des Klebstoffs bzw. Haftmittels über die Metallschicht der ersten äußeren Folie dann mit der ersten äußeren Folie laminiert, sodass ein stabiler Mehrschichtverbund, d. h. im Ergebnis also eine mehrschichtige Kunststofffolie nach der vorliegenden Erfindung, resultiert.

Die zuvor beschriebene Herstellung einer mehrschichtigen Kunststofffolie nach der vorliegenden Erfindung ist rein beispielhaft und nicht beschränkend in Bezug auf eine typische Ausführungsform beschrieben.

Die zuvor in ihren Grundzügen beschriebene Herstellung von mehrschichtigen Kunststofffolien mittels Extrusion, insbesondere Koextrusion, ist dem Fachmann als solche bzw. an sich hinlänglich bekannt (ebenso wie die Metallisierung von Kunststofffolien als solche), sodass bezüglich weiterer betreffender Einzelheiten auf das allgemeine Fachwissen verwiesen werden kann.

Weiterer Gegenstand der vorliegenden Erfindung - gemäß einem **zweiten** Aspekt der vorliegenden Erfindung - ist die Verwendung einer mehrschichtigen Kunststofffolie, wie zuvor definiert, zur Herstellung von Verpackungsmaterial und/oder als Verpackungsmaterial.

Insbesondere ist es gemäß diesem Aspekt der vorliegenden Erfindung bevorzugt, wenn die mehrschichtige Kunststofffolie in Form einer Flachfolie, Schlauchfolie oder Halbschlauchfolie verwendet wird.

Weiterhin kann es gemäß einer besonderen Ausführungsform gemäß diesem Aspekt der vorliegenden Erfindung vorgesehen sein, dass die mehrschichtige Kunststofffolie in Form von Umverpackungen, Schläuchen, Beuteln oder Tüten verwendet wird.

Entsprechend einer bevorzugten Ausführungsform gemäß diesem Erfindungsaspekt ist es vorgesehen, dass die erfindungsgemäße mehrschichtige Kunststofffolie über automatisierte Abfüll- und/oder Verpackungsanlagen (z. B. FFS- oder VFFS-Anlagen), bevorzugt als sogenannte Rollenware, verarbeitet wird, insbesondere zu der gewünschten Endverpackung.

Im Rahmen der erfindungsgemäßen Verwendung wird die erfindungsgemäße mehrschichtige Kunststofffolie bevorzugt als sogenannte PCR-Kunststofffolie eingesetzt.

Darüber hinaus kann es gemäß einer weiteren besonderen Ausführungsform dieses Aspekts der vorliegenden Erfindung vorgesehen sein, dass die mehrschichtige Kunststofffolie für die Verpackung von Schüttgütern, insbesondere ausgewählt aus der Gruppe von (Pflanz-)Erden, Düngern, Mulch, Humus, Waschmitteln, Klebstoffen, Pellets, Granulaten, Pulvern, Hygieneprodukten, Haushaltsgütern und Haushaltswaren, oder aber für Hygieneanwendungen verwendet wird.

Gemäß diesem Aspekt der vorliegenden Erfindung kann es insbesondere vorgesehen sein, dass die mehrschichtige Kunststofffolie zu Verpackungszwecken und/oder als Verpackungsmaterial im Nichtlebensmittelbereich (Non-Food-Bereich) verwendet wird.

Bezüglich weiterer Einzelheiten zur erfindungsgemäßen Verwendung einer mehrschichten Kunststofffolie nach der Erfindung wird auf die vorstehenden Ausführungen in Bezug auf die erfindungsgemäße mehrschichtige Kunststofffolie verwiesen, welche entsprechend auch für diesen Aspekt der vorliegenden Erfindung gelten.

Darüber hinaus ist auch Gegenstand der vorliegenden Erfindung - gemäß einem **dritten** Aspekt der vorliegenden Erfindung - ein Verpackungsmaterial, umfassend mindestens eine mehrschichtige Kunststofffolie, wie zuvor definiert.

Insbesondere ist es gemäß diesem Aspekt der vorliegenden Erfindung bevorzugt, wenn das Verpackungsmaterial und/oder die mehrschichtige Kunststofffolie in Form von Umverpackungen, Schläuchen, Beuteln oder Tüten ausgebildet ist/sind.

Gemäß einer besonderen Ausführungsform dieses Erfindungsaspektes kann es insbesondere vorgesehen sein, dass das Verpackungsmaterial und/oder die mehrschichtige Kunststofffolie für die Verpackung von Schüttgütern, insbesondere ausgewählt aus der Gruppe von (Pflanz-)Erden, Düngern, Mulch, Humus, Waschmitteln, Klebstoffen, Pellets, Granulaten, Pulvern, Hygieneprodukten, Haushaltsgütern und Haushaltswaren, oder aber für Hygieneanwendungen ausgebildet ist/sind.

Gemäß einer weiteren besonderen Ausführungsform dieses Erfindungsaspekts kann es gleichermaßen vorgesehen sein, dass das Verpackungsmaterial und/oder die mehrschichtige Kunststofffolie zur Verpackungszwecken und/oder als Verpackungsmaterial im Nichtlebensmittelbereich (Non-Food-Bereich) ausgebildet ist/sind.

Bezüglich weiterer Einzelheiten zu dem erfindungsgemäßen Verpackungsmaterial wird auf die vorstehenden Ausführungen in Bezug auf die erfindungsgemäße mehrschichtige Kunststofffolie und dessen Verwendung verwiesen, die entsprechend auch für diesen Aspekt der vorliegenden Erfindung gelten.

Die vorliegende Erfindung wird anhand der nachfolgenden Ausführungsbeispiele veranschaulicht, welche die vorliegende Erfindung jedoch keinesfalls beschränken sollen, sondern lediglich die beispielhafte und nichtlimitierende Durchführungsweise und Ausgestaltung der vorliegenden Erfindung erläutern sollen.

Im Folgenden wird die Erfindung anhand von lediglich typischen Ausführungsformen darstellenden Figuren näher erläutert. In den Figurendarstellung zeigt:
- Fig. 1: eine schematische Querschnittsdarstellung einer mehrschichtigen Kunststofffolie gemäß einer besonderen Ausführungsform der vorliegenden Erfindung, bei welcher die beiden äußeren Folien jeweils einschichtig bzw. einlagig ausgebildet sind;
- Fig. 2: eine schematische Querschnittsdarstellung einer mehrschichtigen Kunststofffolie gemäß einer weiteren besonderen Ausführungsform der vorliegenden Erfindung, bei welcher die die beiden äußeren Folien jeweils einschichtig bzw. einlagig ausgebildet sind und eine zusätzliche Haftschicht bzw. Klebstoffschicht vorgesehen ist;
- Fig. 3: eine schematische Querschnittsdarstellung einer mehrschichtigen Kunststofffolie gemäß einer wiederum weiteren besonderen Ausfüh-rungsform der vorliegenden Erfindung, bei welcher die beiden äußeren Folien jeweils dreischichtig bzw. dreilagig ausgebildet sind.

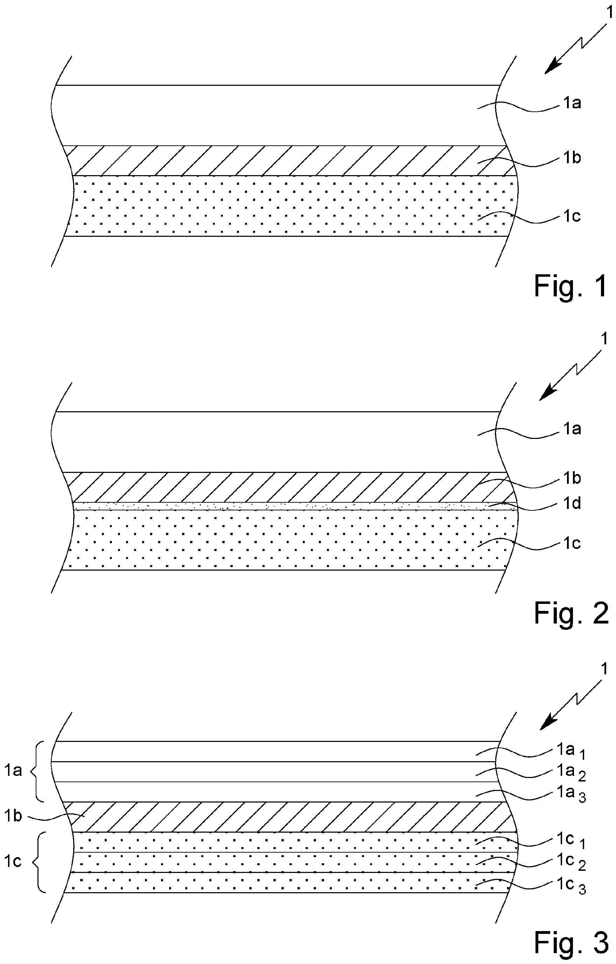

Im Folgenden wird die Erfindung anhand von drei Figurendarstellungen (Figs. 1 bis 3) näher erläutert. Die Figuren zeigen jeweils unterschiedliche schematische Querschnittsdarstellungen verschiedener mehrschichtiger Kunststofffolien gemäß besonderen Ausführungsformen der vorliegenden Erfindung.

Fig. 1 zeigt eine mehrschichtige Kunststofffolie 1 gemäß einer besonderen Ausführungsform der vorliegenden Erfindung, wobei die Kunststofffolie 1 einen Schichtverbund von drei miteinander verbundenen Schichten 1a, 1b, 1c umfasst, wobei die Kunststofffolie 1 bzw. der Schichtverbund eine erste äußere Folie 1a und eine zweite äußere Folie 1c sowie eine zwischen der ersten äußeren Folie 1a und der zweiten äußeren Folie 1c angeordnete Metallschicht 1b umfasst. Fig. 1 zeigt auch, dass die beiden äußeren Folien 1a, 1c im Verhältnis zur Metallschicht 1b, jeweils eine höhere Schichtdicke aufweisen. Typischerweise ist die Metallschicht 1b mittels Gasphasenabscheidung, wie zuvor geschildert, auf die Innenseite einer der beiden äußeren Folien 1a, 1c aufgebracht und mit der jeweils anderen äußeren Folie 1a, 1c über deren Innenseite verbunden bzw. verklebt.

Weiterhin zeigt Fig. 2 eine mehrschichtige Kunststofffolie 1 gemäß einer weiteren besonderen Ausführungsform der vorliegenden Erfindung, wobei die Kunststofffolie 1 einen Schichtverbund von vier miteinander verbundenen Schichten 1a, 1b, 1c, 1d umfasst, wobei die Kunststofffolie 1 bzw. der Schichtverbund eine erste äußere Schicht 1a und eine zweite äußere Schicht 1c umfasst, wobei zwischen den äußeren Schichten 1a und 1c eine Metallschicht 1b und eine Haftschicht bzw. Klebschicht (Klebstoffschicht) 1d angeordnet sind. In diesem Zusammenhang ist die Metallschicht 1b auf der Innenseite der ersten äußeren Folie 1a bzw. auf der der zweiten äußeren Folie 1c zugewandten Seite der ersten äußeren Folie 1a aufgebracht bzw. hieran befestigt und die Haftschicht bzw. Klebschicht 1d ist auf der Innenseite der zweiten äußeren Folie 1c bzw. auf der der ersten äußeren Folie 1a zugewandten Seite der zweiten äußeren Folie 1c aufgebracht bzw. hieran befestigt. Die erste äußere Folie 1a ist über ihre Metallschicht 1b mittels der Haftschicht 1d mit der zweiten äußeren Folie 1c verbunden bzw. laminiert.

Es versteht sich von selbst, dass auch bei dieser Ausführungsform die äußeren Folien 1a, 1c jeweils als mehrschichtige, insbesondere dreischichtige, koextrudierte Folien ausgebildet sein können (nicht dargestellt), wie in der nachfolgend beschriebenen Fig. 3 explizit dargestellt und auch in den Ausführungsbeispielen noch weiterführend beschrieben.

Ein solcher Schichtverbund bzw. eine solche mehrschichtige Kunststofffolie, wie in Fig. 2 dargestellt, resultiert in einem besonders stabilen und strapazierfähigen Schichtverbund.

Darüber hinaus zeigt Fig. 3 eine mehrschichtige Kunststofffolie 1 gemäß einer wiederum weiteren besonderen Ausführungsform der vorliegenden Erfindung, wobei die Kunststofffolie 1 einen Schichtverbund von drei miteinander verbundenen Schichten 1a, 1b, 1c umfasst, wobei die Kunststofffolie 1 bzw. der Schichtverbund eine erste äußere Schicht 1a und eine zweite äußere Schicht 1c und eine zwischen der ersten äußeren Schicht 1a und der zweiten äußeren Schicht 1c angeordnete Metallschicht 1b umfasst, und wobei die äußeren Folien 1a, 1c jeweils einen Schichtverbund von drei miteinander verbundenen Folienschichten 1a₁, 1a₂, 1a₃, 1c₁, 1c₂, 1c₃ umfassen. Insgesamt weist die Kunststofffolie 1 gemäß Fig. 3 somit sieben Schichten auf, wobei jeweils die äußeren drei Folienschichten eine äußere Folie darstellen. Die Verwendung von äußeren Folien 1a, 1c, welche jeweils selbst einen Schichtverbund von drei miteinander verbundenen Folienschichten 1a₁, 1a₂, 1a₃, 1c₁, 1c₂, 1c₃ umfassen, ermöglicht ein spezifisches und anwendungsbezogenes Maßschneidern der Kunststofffolie 1 auf ihre entsprechende Anwendung; insbesondere können bereits die Eigenschaften der äußeren Folien 1a, 1c maßgeschneidert werden.

Es versteht sich von selbst, dass auch bei dieser Ausführungsform die äußeren Folien 1a, 1c, insbesondere die Metallschicht 1b und die zweite äußere Folie 1c mittels einer Haftschicht bzw. Kleb(stoff)schicht miteinander verbunden sein können (nicht dargestellt). Diesbezüglich kann aber grundsätzlich auf die obige Figurenbeschreibung zu Fig. 2 verwiesen werden.

Bezüglich weiterer Einzelheiten wird auf die vorstehenden Ausführungen verwiesen, welche bezüglich der Figurendarstellungen entsprechend gelten.

Weitere Ausgestaltungen, Abwandlungen und Variationen der vorliegenden Erfindung sind für den Fachmann beim Lesen der Beschreibung ohne Weiteres erkennbar oder realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen, sondern lediglich die beispielhafte und nicht limitierende Durchführungsweise und Ausgestaltung der vorliegenden Erfindung erläutern sollen.

### AUSFÜHRUNGSBEISPIELE:

### Verwendete Abkürzungen

| | |
|---|---|
| • PE-Rezyklat: | Kunststoffrezyklat auf Basis von Polyethylen, insbesondere mit einer Sortenreinheit von mindestens 90 Gew.-% |
| • Primär-PE: | aus fossilen Rohstoffen neu hergestelltes Polyethylen |
| • AMF 715: | Gleitmittel; POLYBATCH^{®} AMF 715 HF-IP, Firma A. Schulman / LyondellBasell |
| • weiß 8750 ES: | weiße Farbe; POLYWHITE^{®} 8570 ES, Firma A. Schulman / LyondellBasell |
| • silber 7030: | silberne Farbe; POLYBATCH^{®} 7030, Firma A. Schulman / LyondellBasell |
| • schwarz 2723 | schwarze Farbe; POLYBLACK^{®} 2723 Pm, Firma A. Schulman / LyondellBasell |
| • UV-Stabilisator: | POLYBATCH^{®} UV 1952, Firma A. Schulman / LyondellBasell |
| • Klebstoff/ Haftmittel: | Zweikomponenten-Polyurethan-Klebstoff; Purbinder MP 985, Firma Bostik |

### Herstellung erfindungsgemäßer Kunststofffolien

Zur Herstellung mehrschichtiger Kunststofffolien nach der vorliegenden Erfindung (d. h. PCR-Kunststofffolien) mit einem Kunststoffrezyklat-Anteil jeweils von mindestens 80 Gew.-%, bezogen auf die Kunststofffolie, gemäß besonderer Ausführungsformen der vorliegenden Erfindung, wobei die äußeren Folien jeweils dreischichtige koextrudierte Kunststofffolien darstellen und eine Aluminiumschicht zwischen den beiden äußeren Folien vorliegt, wird wie folgt vorgegangen:
In einer zuvor im Rahmen der Beschreibung offenbarten Weise wird zunächst PEsortenreiner, zerkleinerter und gereinigter PE-Kunststoffabfall aufbereitet und erhalten (PE-Sortenreinheit im Sinne von DIN EN ISO 11469 von mindestens 95 Gew.-%, bezogen auf das PE-Kunststoffabfall), welcher nachfolgend in an sich bekannter Weise zu einem polyethylenbasierten Kunststoffrezyklat in Form eines Granulats verarbeitet wird (PE-Rezyklat mit PE-Sortenreinheit ≥ 95 Gew.-%, bezogen auf das PE-Rezyklat).

Anschließend wird dieses granulatförmige PE-Rezyklat (polyethylenbasiertes PCR-Kunststoffrezyklat) unter Zugabe weiterer gewünschter Inhaltsstoffe (z. B. Stabilisatoren, insbesondere UV-Stabilisatoren, Farbpigmente und optional auch Gleitmittel im Fall opak bzw. farbig ausgebildeter Kunststofffolien bzw. Primärpolyethylen und Antihaftmittel im Fall transparent ausgebildeter Kunststofffolien etc.) in an sich bekannter, zuvor im Rahmen der Beschreibung offenbarten Weise mittels Blasfolienextrusion unter Verwendung einer Mehrschichtringdüse zu den entsprechenden dreischichtigen äußeren Folien in Form von PE-Rezyklatfolien (PE-Rezyklat-Anteil bzw. PCR-Anteil auf Basis von PE jeweils ≥ 80 Gew.-%, bezogen auf die Kunststofffolie) verarbeitet. Die erhaltenen Schlauchfolien werden in an sich bekannter Weise zu Flachfolien weiterverarbeitet.

Die dreischichtige Kunststofffolie für die erste äußere Folienschicht (= Trägerfolie; d. h. Folie 1a in den Figurendarstellungen) wird durch Zusatz entsprechender Farbpigmente opak ausgebildet, insbesondere weiß, silberfarben oder schwarz (vgl. noch nachfolgende Ausführungen); die Innenseite der Trägerfolie wird anschließend einer Korona- oder Plasmabehandlung unterzogen, um ein späteres Anhaften der Metallschicht zu gewährleisten.

Die opake 3-Schicht-Trägerfolie weist folgenden schematisierten Aufbau auf:
erste äußere Folienschicht (PE) (weiß eingefärbt) / mittlere Folienschicht (PE) (weiß eingefärbt) / zweite äußere Folienschicht (PE) (silber oder schwarz eingefärbt)

Die dreischichtige Kunststofffolie für die zweite äußere Folienschicht (= Kaschier-oder Deckfolie; d. h. Folie 1c in den Figurendarstellungen) wird dagegen transparent ausgebildet (vgl. noch nachfolgende Ausführungen); die Innenseite der Kaschier- oder Deckfolie wird anschließend einer Korona- oder Plasmabehandlung unterzogen, um ein späteres Bedrucken bzw. ein späteres Anhaften einer Bedruckung zu gewährleisten.

Die transparente 3-Schicht-Kaschierfolie weist folgenden schematisierten Aufbau auf:
erste äußere Folienschicht (PE) (transparent) / mittlere Folienschicht (PE) (transparent) / zweite äußere Folienschicht (PE) (transparent)

Anschließend wird durch Dünnschichttechnik, nämlich mittels Gasphasenabscheidung, eine dünne Aluminiumschicht (z. B. 5 µm; Metallschicht 1b in den Figurendarstellungen) auf die zuvor durch Korona- oder Plasmabehandlung behandelte Innenseite der ersten äußeren Folie (Trägerfolie) aufgebracht (vgl. Metallisierung bzw. Vakuumbeschichtung in sauerstofffreier Atmosphäre, z. B. entsprechend dem Prinzip gemäß EP 1 936 004 B1); es resultiert eine metallisierte dreischichtige Trägerfolie.

Des Weiteren wird die zuvor durch Korona- oder Plasmabehandlung behandelte Innenseite der zweiten äußeren Folie bedruckt (z. B. Farbdruck mit Produktbezeichnung des zu verpackenden Produkts).

Nachfolgend werden dann die erste äußere Folie und die zweite äußere Folie über ihre jeweilige Innenseite mittels eines geeigneten Haftmittels bzw. Klebstoffs (hier: reaktiver Polyurethanklebstoff, z. B. Purbinder MP 985 von Bostik) vollflächig miteinander verbunden bzw. laminiert, so dass die erste äußere Folie über ihre Metallschicht mittels der Klebstoffschicht mit der bedruckten Innenseite der zweiten äußeren Folie vollflächig verbunden bzw. laminiert wird. Zu diesem Zweck kann der noch nicht reagierte bzw. aktive Klebstoff zunächst auf die auf die Innenseite der bedruckten zweiten äußeren Folie (d. h. auf die Bedruckung) aufgebracht werden (z. B. mittels Rakeln, Aufsprühen etc.) und anschließend die erste äußere Folie (d. h. die metallisierte bzw. aluminisierte erste äußere Folie) mit ihrer Metallschicht hieran zum Haften gebracht werden.

Es resultiert ein inniger mehrschichtiger Folienverbund gemäß der vorliegenden Erfindung mit folgendem schematisiertem Aufbau:
opake 3-Schicht-Trägerfolie / Metallschicht / Klebstoffschicht / Bedruckung / transparente 3-Schicht-Kaschierfolie

Bei der Verwendung zu Verpackungszwecken bildet die opake 3-Schicht-Trägerfolie die Innenseite der Verpackung, welche mit dem zu verpackenden Produkt in Kontakt steht, wohingegen die transparente 3-Schicht-Kaschierfolie die Außenseite der Verpackung bildet.

Die auf diese Weise erhaltenen mehrschichtigen Kunststofffolien nach der vorliegenden Erfindung sowie deren Zusammensetzung und Eigenschaften sind nachfolgend beschrieben. Aufgrund ihrer hohen Umweltkompatibilität, insbesondere aufgrund des hohen PE-Rezyklat-Anteils von jeweils ≥ 80 %, können die erfindungsgemäßen Kunststofffolien bei ihrer Verwendung entsprechend gekennzeichnet und beworben werden (z. B. in Deutschland mit dem Umweltzeichen *"Blauer Engel*")*.*

Es werden erfindungsgemäße Kunststofffolien mit Foliendicken im Bereich von 30 µm bis 150 µm hergestellt.

### 1. Transparente Flachfolie (= Kaschier- oder Deckfolie)

Im Rahmen des zuvor beschriebenen Verfahrens wird zunächst eine transparente 3-Schicht-Flachfolie zur Verwendung als zweite äußere Folie (= Kaschier- oder Deckfolie) mit einer Gesamtschichtdicke von 40 µm mit der in Tabelle 1 beschriebenen Zusammensetzung hergestellt. Die Flachfolie weist ein Verhältnis der Schichtdicken von erster äußerer Folienschicht / mittlerer Folienschicht / zweiter äußerer Folienschicht von 10 : 20 : 10 auf.

**Tabelle 1: Zusammensetzung der Schichten einer erfindungsgemäßen transparenten Flachfolien (zweite äußere Folie = Kaschier- oder Deckfolie)**

| **Rohstoff** | **erste äußere Folienschicht** | **Mittlere Folienschicht** | **zweite äußere Folienschicht** |
|---|---|---|---|
| **PE-Rezyklat** | 90,5 % | 91,0 % | 90,5 % |
| **Primär-PE** | 9,0 % | 9,0 % | 9,0 % |
| **AMF 715** | 0,5 % | - | 0,5 % |

### 2.1 weiß/weiß/silberne Flachfolie (opake Folie = Trägerfolie)

Im Rahmen des zuvor beschriebenen Verfahrens wird auch eine opake 3-Schicht-Kunststofffolie mit einer weißen ersten äußeren Folienschicht und einer silbernen zweiten äußeren Folienschicht und einer weißen mittleren Folienschicht zur Verwendung als erste äußere Folie (= Trägerfolie) mit einer Gesamtschichtdicke von 80 µm mit der in Tabelle 2 beschriebenen Zusammensetzung hergestellt. Die Flachfolie weist ein Verhältnis der Schichtdicken von erster äußerer Folienschicht / mittlerer Folienschicht / zweiter äußerer Folienschicht von 22,4 : 40 : 17,6 auf.

**Tabelle 2: Zusammensetzung der Schichten einer erfindungsgemäßen weiß/weiß/ silbernen Flachfolien (erste äußere Folie = Trägerfolie)**

| **Rohstoff** | **erste äußere Folienschicht** | **Mittlere Folienschicht** | **zweite äußere Folienschicht** |
|---|---|---|---|
| **PE-Rezyklat** | 93,0 % | 88,0 % | 88,0 % |
| **weiß 8750 ES** | 5,0 % | 10,0 % | - |
| **silber 7030** | - | - | 10,0 % |
| **UV-Stabilisator** | 2,0 % | 2,0 % | 2,0 % |

### 2.2. weiß/weiß/schwarze Flachfolien (opake Folie = Trägerfolie)

Im Rahmen des zuvor beschriebenen Verfahrens wird auch eine opake 3-Schicht-Kunststofffolie mit einer weißen ersten äußeren Folienschicht und einer schwarzen zweiten äußeren Folienschicht und einer weißen mittleren Folienschicht zur Verwendung als erste äußere Folie (= Trägerfolie) mit einer Gesamtschichtdicke von 80 µm mit der in Tabelle 3 beschriebenen Zusammensetzung hergestellt. Die Flachfolie weist ein Verhältnis der Schichtdicken von erster äußerer Folienschicht / mittlerer Folienschicht / zweiter äußerer Folienschicht von 22,4 : 40 : 17,6 auf.

**Tabelle 3: Zusammensetzung der Schichten einer erfindungsgemäßen weiß/weiß/ schwarzen Flachfolien (erste äußere Folie = Trägerfolie)**

| **Rohstoff** | **erste äußere Folienschicht** | **Mittlere Folienschicht** | **zweite äußere Folienschicht** |
|---|---|---|---|
| **PE-Rezyklat** | 93,0 % | 88,0 % | 88,0 % |
| **weiß 8750 ES** | 5,0 % | 10,0 % | - |
| **schwarz 2723** | - | - | 10,0 % |
| **UV-Stabilisator** | 2,0 % | 2,0 % | 2,0 % |

### 3. Metallisierung (Aufbringen der Metallschicht) und Bedruckung

Anschließend wird die opake 3-Schicht-Folie (= erste äußere Folie bzw. Trägerfolie) mittels Koronabehandlung (alternativ mittels Plasmabehandlung) an ihrer Innenseite (d. h. an der silbernen bzw. schwarzen Folienschicht) aufgerauht. Auf diese aufgerauhte Oberfläche wird mittels Gasphasenabscheidung (vgl. obige Ausführungen) eine dünne Aluminiumschicht (Metallisierung) mit einer Schichtdicke von etwa 5 µm aufgebracht.

Zum anderen wird die transparente 3-Schicht-Folie (zweite äußere Folie bzw. Kaschier-/Deckfolie) mittels Koronabehandlung (alternativ Plasmabehandlung) aufgerauht. Diese aufgerauhte Oberfläche wird anschließend bedruckt.

### 4. Zusammenbringen/Laminieren bzw. Verkleben der äußeren Folien

Zum Verkleben bzw. Laminieren (d. h. Zusammenbringen bzw. Zusammenfügen) der metallisierten ersten äußeren Folie und der bedruckten zweiten äußeren Folie wird Klebstoff auf die Bedruckung der zweiten äußeren Folie aufgebracht; anschließend wird die metallisierte erste äußere Folie mit der Metallschicht auf die bedruckte und mit Klebstoff (reaktiver PUR-Klebstoff) versehene zweite äußere Folie gebracht und hiermit laminiert. Insgesamt wird eine Klebstoffmenge von ca. 2,5 g/m² eingesetzt. Nach einer fünftägigen Lagerung bei Raumtemperatur ist der Klebstoff vollständig ausgehärtet.

### Mechanische und optische Eigenschaften sowie Barriereeigenschaften

Die mechanischen Eigenschaften, insbesondere die Zugfestigkeit in Längs- und Querrichtung, die Reißdehnung in Längs- und Querrichtung, die dynamische Durchstoßfestigkeit sowie die Reibungskoeffizienten der unbehandelten und der aufgerauhten Folien, der hergestellten mehrschichtigen Kunststofffolien werden getestet. Darüber hinaus wird die optische Dichte der mehrschichtigen Kunststofffolien gemessen. Weiterhin werden die Barriereeigenschaften der hergestellten mehrschichtigen Kunststofffolien gegenüber Wasserdampf und Sauerstoff gemessen.

In diesem Zusammenhang werden die folgenden Testverfahren zur Messung der Eigenschaften verwendet:
- Zugfestigkeit: Zugversuch gemäß EN ISO 527
- Reißdehnung: Zugversuch gemäß EN ISO 527
- Dynamische Durchstoßfestigkeit: *Dart-Drop Test* gemäß ASTM D 1709
- Reibungskoeffizienten: Reibungsversuch an Metall gemäß DIN 53375, wobei das gegebenenfalls notwendige Aufrauhen der Folien mittels Koronabehandlung erfolgt
- Optische Dichte gemäß JIS-K7605
- Opazität: Blickdichtigkeitsmessung gemäß DIN 53146
- Sauerstoffdurchlässigkeit gemäß DIN 53380
- Wasserdampfdurchlässigkeit gemäß DIN EN ISO 15106

Die hergestellten mehrschichtigen Kunststofffolien erfüllen alle geforderten Mindestanforderungen:

| Mechanische Eigenschaft | Mindestanforderungen | |
|---|---|---|
| Zugfestigkeit in Längsrichtung | | 19 N/mm² |
| Zugfestigkeit in Querrichtung | | 17 N/mm2 |
| Reißdehnung in Längsrichtung | | 200 % |
| Reißdehnung in Querrichtung | | 250 % |
| dynamische Durchstoßfestigkeit | | 1,7 g/µm |
| Transparenz (nur bei transparenten Folien) | | 85 % |
| Optische Dichte | | 2 bis 3 |

Darüber hinaus weisen die hergestellten und unbehandelten mehrschichtigen Kunststofffolien, entsprechend den Anforderungen für die Verwendung als Verpackungsfolie, einen Reibungskoeffizienten auf Metall von höchstens 0,45 auf. Weiterhin weisen die hergestellten mehrschichtigen Kunststofffolien nach einer Koronabehandlung, entsprechend den Anforderungen für die Verwendung als Verpackungsfolie, einen Reibungskoeffizienten auf Metall von höchstens 0,45 auf.

Auch weisen die hergestellten mehrschichtigen Kunststofffolien, entsprechend den Anforderungen für die Verwendung als Verpackungsfolien von feuchtigkeitsempfindlichen und/oder geruchsintensiven Waren, eine Sauerstoffdurchlässigkeit bei 23 °C und 50 % relativer Luftfeuchtigkeit von höchstens 40 cm³ / m² • d • bar, eine Wasserdampfdurchlässigkeit bei 23 °C und 85 % relativer Luftfeuchtigkeit von höchstens 0,5 g/m² • d und eine Sauerstoffdurchlässigkeit bei 38 °C und 90 % relativer Luftfeuchtigkeit von höchstens 1 g / m² • d auf.

Insgesamt erfüllen somit die hergestellten erfindungsgemäßen mehrschichtigen Kunststofffolien die Anforderungen für die Verwendung als oder in Verpackungsmaterialien, insbesondere für feuchtigkeitsempfindliche und/oder geruchsintensive Waren. Weiterhin weisen alle Kunststofffolien einen Kunststoffrezyklat-Anteil von über 80 Gew.-%, bezogen auf die Kunststofffolie, auf.

Trotz der Verwendung eines hohen Kunststoffrezyklat-Anteils von über 80 Gew.-% resultieren leistungsstarke mehrschichtige PE-Mehrschichtfolien, welche auch den Anforderungen für die Verwendung als Verpackungsfolien genügen und darüber hinaus infolge der zusätzlichen Metallisierung (Aluminiumschicht) weiterhin hohe Sperrschicht- bzw. Barriereeigenschaften aufweisen und zudem eine ausgezeichnete Siegelfähigkeit besitzen.

### Bezugszeichenliste:

- 1: mehrschichte Kunststofffolie
- 1a: erste äußere Folie (Trägerfolie)
- 1b: Metallschicht
- 1c: zweite äußere Folie (Kaschierfolie oder Deckfolie)
- 1d: Haftschicht und/oder Klebschicht (Klebstoffschicht)
- 1a₁, 1a₂, 1a₃: Folienschichten der ersten äußeren Folie 1a
- 1c₁, 1c₂, 1c₃: Folienschichten der zweiten äußeren Folie 1c

## Patentansprüche

1. Mehrschichtige Kunststofffolie (1), insbesondere mehrschichtige Kunststoffverbundfolie, auf Basis von Kunststoffrezyklat (Recyclingkunststoff) und mit Sperrschichteigenschaften gegenüber Wasserdampf und/oder Gasen,
wobei die mehrschichtige Kunststofffolie (1) einen Schichtverbund von mehreren, insbesondere mindestens drei, miteinander verbundenen Schichten (1a, 1b, 1c) umfasst,
wobei die mehrschichtige Kunststofffolie (1) eine erste äußere Folie (1a) und eine zweite äußere Folie (1c) und eine zwischen der ersten äußeren Folie (1a) und der zweiten äußeren Folie (1c) angeordnete Metallschicht (1b) umfasst,
wobei die mehrschichtige Kunststofffolie (1) einen Kunststoffrezyklat-Anteil von mindestens 80 Gew.-%, bezogen auf die mehrschichtige Kunststofffolie (1), aufweist,
wobei die mehrschichtige Kunststofffolie (1) zumindest im Wesentlichen nur eine einzige Kunststoffsorte gemäß DIN EN ISO 11469 aufweist, wobei die Kunststoffsorte mit einer Sortenreinheit von mindestens 90 Gew.-%, bezogen auf den Kunststoffanteil der mehrschichtigen Kunststofffolie (1), vorliegt,
wobei die erste äußere Folie (1a) einen Schichtverbund von mindestens drei miteinander verbundenen, insbesondere mittels Koextrusion verbundenen und/oder koextrudierten, Folienschichten (1a₁, 1a₂, 1a₃) umfasst,
wobei die zweite äußere Folie (1c) einen Schichtverbund von mindestens drei miteinander verbundenen, insbesondere mittels Koextrusion verbundenen und/oder koextrudierten, Folienschichten (1c₁, 1c₂, 1c₃) umfasst oder aber als eine Einzelschichtfolie ausgebildet ist,
wobei die Metallschicht (1b) auf der Innenseite der ersten äußeren Folie (1a) und/oder auf der der zweiten äußeren Folie (1c) zugewandten Seite der ersten äußeren Folie (1a) aufgebracht und/oder hieran befestigt ist,
wobei die Metallschicht (1b) mittels Metallisierung und/oder Dünnschichttechniken, vorzugsweise mittels Gasphasenabscheidung, erzeugt ist und
wobei die Metallschicht (1b) mit einer Schichtdicke im Bereich von 0,001 µm bis 50 µm ausgebildet ist.

2. Mehrschichtige Kunststofffolie nach Anspruch 1,
wobei die mehrschichtige Kunststofffolie (1) nur Kunststoffrezyklat(e) einer (einzigen) Kunststoffsorte, insbesondere Kunststoffrezyklat(e) einer (einzigen) Kunststoffsorte gemäß DIN EN ISO 11469, aufweist; und/oder
wobei die mehrschichtige Kunststofffolie (1) außer dem Kunststoffrezyklat und der Metallschicht (1b) zumindest im Wesentlichen nur Inhaltsstoffe aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Klebstoffen, Primärkunststoffen der gleichen Kunststoffsorte gemäß DIN EN ISO 11469 wie das Kunststoffrezyklat, Hilfsstoffen und Additiven sowie deren Mischungen und Kombinationen aufweist; und/oder
wobei die mehrschichtige Kunststofffolie (1) kein andersartiges und/oder weiteres und/oder zusätzliches Kunststoffrezyklat aufweist; und/oder
wobei die mehrschichtige Kunststofffolie (1) keine andersartige und/oder weitere und/oder zusätzliche Kunststoffsorte, insbesondere keine andersartige und/oder weitere und/oder zusätzliche Kunststoffsorte gemäß DIN EN ISO 11469, aufweist.

3. Mehrschichtige Kunststofffolie nach Anspruch 1 oder Anspruch 2,
wobei die mehrschichtige Kunststofffolie (1) einen (Gesamt-)Kunststoffanteil im Bereich von 80 Gew.-% bis 99,95 Gew.-%, insbesondere im Bereich von 82,5 Gew.-% bis 99,5 Gew.-%, vorzugsweise im Bereich von 85 Gew.-% bis 99 Gew.-%, besonders bevorzugt im Bereich von 87 Gew.-% bis 98 Gew.-%, bezogen auf die mehrschichtige Kunststofffolie (1), aufweist; und/oder
wobei die mehrschichtige Kunststofffolie (1) einen Metallanteil, insbesondere in Form der Metallschicht (1b), in Mengen im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie (1), aufweist; und/oder wobei die mehrschichtige Kunststofffolie (1) Inhaltsstoffe, ausgewählt aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Klebstoffen, Hilfsstoffen und Additiven sowie deren Mischungen und Kombinationen, in Mengen im Bereich von 0,1 Gew.-% bis 20 Gew.-%, insbesondere im Bereich von 0,2 Gew.-% bis 17,5 Gew.-%, vorzugsweise im Bereich von 0,2 Gew.-% bis 15 Gew.-%, bezogen auf die mehrschichtige Kunststofffolie (1), aufweist.

4. Mehrschichtige Kunststofffolie nach einem der vorangehenden Ansprüche,
wobei die mehrschichtige Kunststofffolie (1) aufweist oder hieraus besteht, wobei die nachfolgenden Gewichtsprozentangaben jeweils auf die mehrschichtige Kunststofffolie (1) bezogen sind und derart zu kombinieren und/oder auszuwählen sind, dass 100 Gew.-% resultieren:
- Kunststoffrezyklat in Mengen im Bereich von 80 Gew.-% bis 97 Gew.-%, insbesondere in Mengen im Bereich von 82 Gew.-% bis 96 Gew.-%, vorzugsweise in Mengen im Bereich von 84 Gew.-% bis 95 Gew.-%;
- gegebenenfalls Primärkunststoff(e) der gleichen Kunststoffsorte gemäß DIN EN ISO 11469 wie das Kunststoffrezyklat, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%;
- Metall(e), insbesondere in Form der Metallschicht (1b), in Mengen im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%,
- Inhaltsstoffe, ausgewählt aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Klebstoffen, Hilfsstoffen und Additiven sowie deren Mischungen und Kombinationen, in Mengen im Bereich von 0,1 Gew.-% bis 20 Gew.-%, insbesondere im Bereich von 0,2 Gew.-% bis 17,5 Gew.-%, vorzugsweise im Bereich von 0,2 Gew.-% bis 15 Gew.-%.

5. Mehrschichtige Kunststofffolie nach einem der vorangehenden Ansprüche,
wobei die mehrschichtige Kunststofffolie (1) eine Schichtdicke im Bereich von 10 µm bis 300 µm, insbesondere im Bereich von 15 µm bis 200 µm, bevorzugt im Bereich von 20 µm bis 180 µm, besonders bevorzugt im Bereich von 25 µm bis 175 µm, aufweist; und/oder
wobei die mehrschichtige Kunststofffolie (1) eine Schichtdicke von mindestens 10 µm, insbesondere mindestens 15 µm, bevorzugt mindestens 20 µm, besonders bevorzugt mindestens 25 µm, aufweist; und/oder
wobei die mehrschichtige Kunststofffolie (1) eine Schichtdicke von bis zu 300 µm, insbesondere bis zu 200 µm, bevorzugt bis zu 180 µm, besonders bevorzugt bis zu 175 µm, aufweist.

6. Mehrschichtige Kunststofffolie nach einem der vorangehenden Ansprüche,
wobei die Metallschicht (1b) und/oder das Metall der Metallschicht (1b) ausgewählt ist aus der Gruppe von reinen Metallen einer Metallsorte, Legierungen von Metallen, Mischungen von Metallen, Metallverbindungen, insbesondere Metalloxiden, und Mischungen von Metallverbindungen sowie deren Kombinationen, bevorzugt aus der Gruppe von reinen Metallen einer Metallsorte, Legierungen von Metallen, Mischungen von Metallen sowie deren Kombinationen, besonders bevorzugt aus reinen Metallen einer Metallsorte; und/oder
wobei die Metallschicht (1b) zumindest im Wesentlichen aus einem reinen Metall einer Metallsorte besteht oder hieraus gebildet ist, insbesondere einem Übergangsmetall oder einem Leichtmetall, vorzugsweise Aluminium; und/oder
wobei die Metallschicht (1b) zumindest im Wesentlichen aus Aluminium besteht oder hieraus gebildet ist, insbesondere wobei der Aluminiumanteil der Metallschicht (1b), bezogen auf die Metallschicht (1b), mindestens 95 Gew.-%, insbesondere mindestens 96 Gew.-%, vorzugsweise mindestens 97 Gew.-%, besonders bevorzugt mindestens 98 Gew.-%, ganz besonders bevorzugt mindestens 99 Gew.-%, beträgt; und/oder
wobei die Metallschicht (1b) eine Schichtdicke im Bereich von 0,0015 µm bis 35 µm, bevorzugt im Bereich von 0,002 µm bis 20 µm, besonders bevorzugt im Bereich von 0,003 µm bis 10 µm, aufweist; und/oder
wobei die Metallschicht (1b) eine Schichtdicke von mindestens 0,0015 µm, bevorzugt von mindestens 0,002 µm, besonders bevorzugt von mindestens 0,003 µm, aufweist; und/oder
wobei die Metallschicht (1b) eine Schichtdicke von bis zu 20 µm, besonders bevorzugt von bis zu 10 µm, aufweist; und/oder
wobei das Metall der Metallschicht (1b), bezogen auf die mehrschichtige Kunststofffolie (1), in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, vorliegt; und/oder
wobei das Metall der Metallschicht (1b), bezogen auf die mehrschichtige Kunststofffolie (1), in Mengen und/oder mit einem Anteil von mindestens 0,05 Gew.-%, insbesondere von mindestens 0,1 Gew.-%, vorzugsweise von mindestens 0,2 Gew.-%, besonders bevorzugt von mindestens 0,3 Gew.-%, vorliegt; und/oder
wobei das Metall der Metallschicht (1b), bezogen auf die mehrschichtige Kunststofffolie (1), in Mengen und/oder mit einem Anteil von bis zu 20 Gew.-%, insbesondere von bis zu 15 Gew.-%, vorzugsweise von bis zu 10 Gew.-%, besonders bevorzugt von bis zu 5 Gew.-%, vorliegt; und/oder
wobei die Metallschicht (1b) als eine zumindest im Wesentlichen vollflächige Schicht und/oder als eine zumindest im Wesentlichen durchgängige Schicht und/oder als eine zumindest im Wesentlichen kontinuierliche Schicht und/oder als eine zumindest im Wesentlichen unterbrechungsfreie Schicht und/oder als eine zumindest im Wesentlichen zusammenhängende Schicht ausgebildet ist; und/oder
wobei die Metallschicht (1b) zumindest im Wesentlichen ohne Lücken und/oder zumindest im Wesentlichen lückenfrei ausgebildet ist; und/oder
wobei die Metallschicht (1b) Sperrschichteigenschaften (Barriereeigenschaften) gegenüber Wasserdampf und/oder Gasen, vorzugsweise Sauerstoff, bevorzugt Sperrschichteigenschaften gegenüber Wasserdampf und Gasen, vorzugsweise Sauerstoff, aufweist; und/oder
wobei die Metallschicht (1b) mittels Dünnschichttechniken, insbesondere mittels Gasphasenabscheidung, thermisches Spritzen oder Kunststoffgalvanisieren, bevorzugt mittels Gasphasenabscheidung, insbesondere mittels physikalischer Gasphasenabscheidung (PVC) oder chemischer Gasphasenabscheidung (CVD), erzeugt ist; und/oder
wobei die Metallschicht (1b) mittels Metallisierung und/oder mittels Metallisierungstechniken erzeugt ist; und/oder
wobei die Metallschicht (1b) auf der Innenseite der ersten äußeren Folie (1a) und/oder auf der der zweiten äußeren Folie (1c) zugewandten Seite der ersten äußeren Folie (1a) aufgebracht und/oder hieran befestigt ist, insbesondere mittels Metallisierung und/oder Dünnschichttechnik, vorzugsweise mittels Gasphasenabscheidung, und/oder insbesondere mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, und/oder insbesondere in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie (1), und/oder insbesondere als Aluminiumschicht.

7. Mehrschichtige Kunststofffolie nach einem der vorangehenden Ansprüche,
wobei die Metallschicht (1b) opak, insbesondere opak in Bezug auf den Wellenlängenbereich des sichtbaren Lichts, ausgebildet ist, insbesondere wobei die Metallschicht (1b) eine Opazität von mindestens 10 %, insbesondere von mindestens 20 %, vorzugsweise von mindestens 25 %, besonders bevorzugt von mindestens 30 %, insbesondere bestimmt gemäß DIN 53146, aufweist; und/oder
wobei die Metallschicht (1b) eine optische Dichte im Bereich von 1 bis 5, insbesondere im Bereich von 1,5 bis 4, bevorzugt im Bereich von 2 bis 3, insbesondere bestimmt gemäß JIS K7605, aufweist; und/oder
wobei die (summierten) Schichtdicken der äußeren Folien (1a, 1c) 60 % bis 99,9 %, insbesondere 70 % der 99,5 %, bevorzugt 80 % bis 99,5 %, besonders bevorzugt 85 % bis 99 %, der (Gesamt-)Schichtdicke der mehrschichtigen Kunststofffolie (1) betragen; und/oder
wobei das Verhältnis der Schichtdicken von erster äußerer Folie (1a) / Metallschicht (1b) / zweiter äußerer Folie (1c) im Bereich von 50-90: 0,5 - 20 : 30 - 60 variiert; und/oder
wobei die erste äußere Folie (1a) einen Schichtverbund von mindestens drei miteinander verbundenen, insbesondere mittels Koextrusion verbundenen und/oder koextrudierten, Folienschichten (1a₁, 1a₂, 1a₃) umfasst; und/oder
wobei die zweite äußere Folie (1c) einen Schichtverbund von mindestens drei miteinander verbundenen, insbesondere mittels Koextrusion verbundenen und/oder koextrudierten, Folienschichten (1c₁, 1c₂, 1c₃) umfasst oder aber als eine Einzelschichtfolie, insbesondere als Einzelschichtkunststofffolie vorzugsweise auf Basis von Kunststoffrezyklat oder als Einzelschichtlackfolie, ausgebildet ist; vorzugsweise wobei die zweite äußere Folie (1c) einen Schichtverbund von mindestens drei miteinander verbundenen, insbesondere mittels Koextrusion verbundenen und/oder koextrudierten, Folienschichten (1c₁, 1c₂, 1c₃) umfasst.

8. Mehrschichtige Kunststofffolie (1), insbesondere mehrschichtige Kunststoffverbundfolie, auf Basis von Kunststoffrezyklat (Recyclingkunststoff) und mit Sperrschichteigenschaften gegenüber Wasserdampf und/oder Gasen nach einem der vorangehenden Ansprüche,
wobei die mehrschichtige Kunststofffolie (1) einen Schichtverbund von mehreren, insbesondere mindestens drei, miteinander verbundenen Schichten (1a, 1b, 1c) umfasst,
wobei die mehrschichtige Kunststofffolie (1) eine erste äußere Folie (1a) und eine zweite äußere Folie (1c) und eine zwischen der ersten äußeren Folie (1a) und der zweiten äußeren Folie (1c) angeordnete Metallschicht (1b) umfasst,
wobei die mehrschichtige Kunststofffolie (1) einen Kunststoffrezyklat-Anteil von mindestens 80 Gew.-%, bezogen auf die mehrschichtige Kunststofffolie (1), aufweist,
wobei die äußeren Folien (1a, 1c) jeweils einen Schichtverbund von mindestens drei miteinander verbundenen, insbesondere mittels Koextrusion verbundenen und/oder koextrudierten, Folienschichten (1a₁, 1a₂, 1a₃, 1c1, 1c₂, 1c₃) umfassen, und
wobei die Metallschicht (1b) auf der Innenseite der ersten äußeren Folie (1a) und/oder auf der der zweiten äußeren Folie (1c) zugewandten Seite der ersten äußeren Folie (1a) aufgebracht und/oder hieran befestigt ist;
wobei die Metallschicht (1b) mittels Metallisierung und/oder Dünnschichttechniken, vorzugsweise mittels Gasphasenabscheidung, erzeugt ist; und/oder
wobei die Metallschicht (1b) mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist; und/oder
insbesondere wobei die Metallschicht (1b) in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie (1), vorliegt; und/oder
insbesondere wobei die Metallschicht (1b) als Aluminiumschicht ausgebildet ist und/oder insbesondere wobei die Metallschicht (1b) zumindest im Wesentlichen aus Aluminium besteht oder hieraus gebildet ist, vorzugsweise wobei der Aluminiumanteil der Metallschicht (1b), bezogen auf die Metallschicht (1b), mindestens 95 Gew.-%, insbesondere mindestens 96 Gew.-%, vorzugsweise mindestens 97 Gew.-%, besonders bevorzugt mindestens 98 Gew.-%, ganz besonders bevorzugt mindestens 99 Gew.-%, beträgt.

9. Mehrschichtige Kunststofffolie (1), insbesondere mehrschichtige Kunststoffverbundfolie, auf Basis von Kunststoffrezyklat (Recyclingkunststoff) und mit Sperrschichteigenschaften gegenüber Wasserdampf und/oder Gasen nach einem der vorangehenden Ansprüche,
wobei die mehrschichtige Kunststofffolie (1) einen Schichtverbund von mehreren, insbesondere mindestens drei, miteinander verbundenen Schichten (1a, 1b, 1c) umfasst,
wobei die mehrschichtige Kunststofffolie (1) eine erste äußere Folie (1a) und eine zweite äußere Folie (1c) und eine zwischen der ersten äußeren Folie (1a) und der zweiten äußeren Folie (1c) angeordnete Metallschicht (1b) umfasst,
wobei die mehrschichtige Kunststofffolie (1) einen Kunststoffrezyklat-Anteil von mindestens 80 Gew.-%, bezogen auf die mehrschichtige Kunststofffolie (1), aufweist;
wobei die äußeren Folien (1a, 1c) jeweils einen Schichtverbund von mindestens drei miteinander verbundenen, insbesondere mittels Koextrusion verbundenen und/oder koextrudierten, Folienschichten (1a₁, 1a₂, 1a₃, 1c1, 1c₂, 1c₃) umfassen;
wobei die mehrschichtige Kunststofffolie (1) zusätzlich eine Haftschicht und/oder Klebschicht (1d) aufweist, insbesondere wobei die Haftschicht und/oder Klebschicht (1d) zwischen der Metallschicht (1b) und der zweiten äußeren Folie (1c) angeordnet ist, vorzugsweise wobei die Haftschicht und/oder Klebschicht (1d) auf die Innenseite der zweiten äußeren Folie (1c) und/oder auf der der ersten äußeren Folie (1a) zugewandten Seite der zweiten äußeren Folie (1c) aufgebracht und/oder aufgetragen und mit der Metallschicht (1b) verbunden und/oder verklebt, insbesondere vollflächig verbunden und/oder verklebt, ist; und
wobei die Metallschicht (1b) auf der Innenseite der ersten äußeren Folie (1a) und/oder auf der der zweiten äußeren Folie (1c) zugewandten Seite der ersten äußeren Folie (1a) aufgebracht und/oder hieran befestigt ist;
wobei die Metallschicht (1b) mittels Metallisierung und/oder Dünnschichttechniken, vorzugsweise mittels Gasphasenabscheidung, erzeugt ist; und/oder
wobei die Metallschicht (1b) mit einer Schichtdicke im Bereich von 0,001 µm bis 50 µm, insbesondere im Bereich von 0,0015 µm bis 35 µm, bevorzugt im Bereich von 0,002 µm bis 20 µm, besonders bevorzugt im Bereich von 0,003 µm bis 10 µm, ausgebildet ist; und/oder
insbesondere wobei die Metallschicht (1b) in Mengen und/oder mit einem Anteil im Bereich von 0,05 Gew.-% bis 20 Gew.-%, insbesondere im Bereich von 0,1 Gew.-% bis 15 Gew.-%, vorzugsweise im Bereich von 0,2 Gew.-% bis 10 Gew.-%, besonders bevorzugt im Bereich von 0,3 Gew.-% bis 5 Gew.-%, bezogen auf die mehrschichtige Kunststofffolie (1), vorliegt; und/oder
insbesondere wobei die Metallschicht (1b) als Aluminiumschicht ausgebildet ist und/oder insbesondere wobei die Metallschicht (1b) zumindest im Wesentlichen aus Aluminium besteht oder hieraus gebildet ist, vorzugsweise wobei der Aluminiumanteil der Metallschicht (1b), bezogen auf die Metallschicht (1b), mindestens 95 Gew.-%, insbesondere mindestens 96 Gew.-%, vorzugsweise mindestens 97 Gew.-%, besonders bevorzugt mindestens 98 Gew.-%, ganz besonders bevorzugt mindestens 99 Gew.-%, beträgt.

10. Verwendung einer mehrschichtigen Kunststofffolie gemäß einem der vorangehenden Ansprüche zur Herstellung von Verpackungsmaterial und/oder als Verpackungsmaterial;
insbesondere wobei die mehrschichtige Kunststofffolie in Form einer Flachfolie, Schlauchfolie oder Halbschlauchfolie verwendet wird; und/oder
insbesondere wobei die mehrschichtige Kunststofffolie in Form von Umverpackungen, Schläuchen, Beuteln oder Tüten verwendet wird; und/oder
insbesondere wobei die mehrschichtige Kunststofffolie für die Verpackung von Schüttgütern, insbesondere ausgewählt aus der Gruppe von (Pflanz-)Erden, Düngern, Mulch, Humus, Waschmitteln, Klebstoffen, Pellets, Granulaten, Pulvern, Hygieneprodukten, Haushaltsgütern und Haushaltswaren, oder aber für Hygieneanwendungen verwendet wird; und/oder
insbesondere wobei die mehrschichtige Kunststofffolie zu Verpackungszwecken und/oder als Verpackungsmaterial im Nichtlebensmittelbereich (Non-Food-Bereich) verwendet wird.

11. Verpackungsmaterial, umfassend mindestens eine mehrschichtige Kunststofffolie gemäß einem der vorangehenden Ansprüche;
insbesondere wobei das Verpackungsmaterial und/oder die mehrschichtige Kunststofffolie in Form einer Flachfolie, Schlauchfolie oder Halbschlauchfolie ausgebildet ist/sind; und/oder
insbesondere wobei das Verpackungsmaterial und/oder die mehrschichtige Kunststofffolie in Form von Umverpackungen, Schläuchen, Beuteln oder Tüten ausgebildet ist/sind; und/oder
insbesondere wobei das Verpackungsmaterial und/oder die Kunststofffolie für die Verpackung von Schüttgütern, insbesondere ausgewählt aus der Gruppe von (Pflanz-) Erden, Düngern, Mulch, Humus, Waschmitteln, Klebstoffen, Pellets, Granulaten, Pulvern, Hygieneprodukten, Haushaltsgütern und Haushaltswaren, oder aber für Hygieneanwendungen ausgebildet ist/sind; und/oder
insbesondere wobei das Verpackungsmaterial und/oder die mehrschichtige Kunststofffolie zur Verpackungszwecken und/oder als Verpackungsmaterial im Nichtlebensmittelbereich (Non-Food-Bereich) ausgebildet ist/sind.

## Claims

1. Multilayer plastic film (1), in particular multilayer plastic composite film, based on plastic recyclate (recycled plastic) and having barrier layer properties to water vapor and/or gases,
wherein the multilayer plastic film (1) comprises a layered composite of several, in particular at least three, interconnected layers (1a, 1b, 1c),
wherein the multilayer plastic film (1) comprises a first outer film (1a) and a second outer film (1c) and a metal layer (1b) arranged between the first outer film (1a) and the second outer film (1c),
wherein the multilayer plastic film (1) has a plastic recyclate content of at least 80 % by weight based on the multilayer plastic film (1),
wherein the multilayer plastic film (1) comprises at least substantially only one single plastic grade according to DIN EN ISO 11469, said plastic grade having a grade purity of at least 90 % by weight, based on the plastic content of the multilayer plastic film (1),
wherein the first outer film (1a) comprises a laminate of at least three film layers (1a₁, 1a₂, 1a₃) bonded to one another, in particular bonded and/or coextruded by means of coextrusion,
wherein the second outer film (1c) comprises a layer composite of at least three film layers (1c₁, 1c₂, 1c₃) bonded to one another, in particular bonded and/or coextruded by means of coextrusion, or is in the form of a single-layer film,
wherein the metal layer (1b) is applied to the inner side of the first outer film (1a) and/or to the side of the first outer film (1a) facing the second outer film (1c) and/or is attached thereto,
wherein the metal layer (1b) is produced by means of metallization and/or thin-film techniques (thin-layer techniques), preferably by means of gas phase deposition, and
wherein the metal layer (1b) is formed with a layer thickness in the range from 0.001 µm to 50 µm.

2. Multilayer plastic film according to claim 1,
wherein the multilayer plastic film (1) comprises only plastic recyclate(s) of a (single) plastic grade, in particular plastic recyclate(s) of a (single) plastic grade according to DIN EN ISO 11469; and/or
wherein the multilayer plastic film (1), apart from the plastic recyclate and the metal layer (1b), comprises at least substantially only ingredients from the group of fillers, colorants, color pigments, fragrances, anti-blocking agents, lubricants, stabilizers, plasticizers and plasticizing agents, binders, adhesives, primary plastics of the same plastic grade according to DIN EN ISO 11469 as the plastic recyclate, auxiliary substances and additives as well as mixtures and combinations thereof; and/or
wherein the multilayer plastic film (1) does not comprise a different and/or further and/or additional plastic recyclate; and/or
wherein the multilayer plastic film (1) does not comprise a different and/or further and/or additional plastic grade, in particular a different and/or further and/or additional plastic grade according to DIN EN ISO 11469.

3. Multilayer plastic film according to claim 1 or claim 2,
wherein the multilayer plastic film (1) has a (total) plastic content in the range from 80 % by weight (wt.%) to 99.95 % by weight, in particular in the range from 82.5 % by weight to 99.5 % by weight, preferably in the range from 85 % by weight to 99 % by weight, particularly preferably in the range from 87 % by weight to 98 % by weight, based on the multilayer plastic film (1); and/or
wherein the multilayer plastic film (1) has a metal content, in particular in the form of the metal layer (1b), in amounts in the range from 0.05 % by weight to 20 % by weight, in particular in the range from 0.1 % by weight to 15 % by weight, preferably in the range from 0.2 % by weight to 10 % by weight, particularly preferably in the range from 0.3 % by weight to 5 % by weight, based on the multilayer plastic film (1); and/or
wherein the multilayer plastic film (1) comprises ingredients selected from the group of fillers, dyes, color pigments, fragrances, antiblocking agents, lubricants, stabilizers, plasticizers and plasticizing agents, binders, adhesives, auxiliaries and additives, as well as mixtures and combinations thereof, in amounts in the range of 0.1 % by weight to 20 % by weight, in particular in the range from 0.2 % by weight to 17.5 % by weight, preferably in the range from 0.2 % by weight to 15 % by weight, based on the multilayer plastic film (1).

4. Multilayer plastic film according to any one of the preceding claims,
wherein the multilayer plastic film (1) comprises or consists of, wherein the following weight percentages are each related to the multilayer plastic film (1) and are to be combined and/or selected such that 100 % by weight results:
- plastic recyclate in amounts in the range from 80 % by weight to 97 % by weight, in particular in amounts in the range from 82 % by weight to 96 % by weight, preferably in amounts in the range from 84 % by weight to 95 % by weight;
- optionally primary plastic(s) of the same grade of plastic according to DIN EN ISO 11469 as the plastic recyclate, in particular in amounts in the range from 0.1 % by weight to 15 % by weight, preferably in amounts in the range from 0.5 % by weight to 10 % by weight, preferably in amounts in the range from 1 % by weight to 9 % by weight;
- metal(s), in particular in the form of the metal layer (1b), in amounts ranging from 0.05 % by weight to 20 % by weight, in particular ranging from 0.1 % by weight to 15 % by weight, preferably ranging from 0.2 % by weight to 10 % by weight, more preferably ranging from 0.3 % by weight to 5 % by weight,
- ingredients selected from the group consisting of fillers, dyes, color pigments, fragrances, antiblocking agents, slip agents, stabilizers, plasticizers and plasticizing agents, binders, adhesives, auxiliaries and additives, and mixtures and combinations thereof, in amounts in the range from 0.1 % by weight to 20 % by weight, in particular in the range from 0.2 % by weight to 17.5 % by weight, preferably in the range from 0.2 % by weight to 15 % by weight.

5. Multilayer plastic film according to any one of the preceding claims,
wherein the multilayer plastic film (1) has a layer thickness in the range from 10 µm to 300 µm, in particular in the range from 15 µm to 200 µm, preferably in the range from 20 µm to 180 µm, particularly preferably in the range from 25 µm to 175 µm; and/or
wherein the multilayer plastic film (1) has a layer thickness of at least 10 µm, in particular at least 15 µm, preferably at least 20 µm, particularly preferably at least 25 µm; and/or
wherein the multilayer plastic film (1) has a layer thickness of up to 300 µm, in particular up to 200 µm, preferably up to 180 µm, particularly preferably up to 175 µm.

6. Multilayer plastic film according to one of the preceding claims,
wherein the metal layer (1b) and/or the metal of the metal layer (1b) is selected from the group of pure metals of one metal type, alloys of metals, mixtures of metals, metal compounds, in particular metal oxides, and mixtures of metal compounds as well as combinations thereof, preferably from the group of pure metals of one metal type, alloys of metals, mixtures of metals as well as combinations thereof, particularly preferably from pure metals of one metal type; and/or
wherein the metal layer (1b) at least substantially consists of or is formed from a pure metal of a metal type, in particular a transition metal or a light metal, preferably aluminum; and/or
wherein the metal layer (1b) at least substantially consists of or is formed from aluminum, in particular wherein the aluminum content of the metal layer (1b), based on the metal layer (1b), is at least 95 % by weight, in particular at least 96 % by weight, preferably at least 97 % by weight, particularly preferably at least 98 % by weight, very particularly preferably at least 99 % by weight; and/or
wherein the metal layer (1b) has a layer thickness in the range from 0.0015 µm to 35 µm, preferably in the range from 0.002 µm to 20 µm, particularly preferably in the range from 0.003 µm to 10 µm; and/or
wherein the metal layer (1b) has a layer thickness of at least 0.0015 µm, preferably of at least 0.002 µm, particularly preferably of at least 0.003 µm; and/or
wherein the metal layer (1b) has a layer thickness of up to 20 µm, particularly preferably of up to 10 µm; and/or
wherein the metal of the metal layer (1b) is present, relative to the multilayer plastic film (1), in amounts and/or in a proportion in the range from 0.05 % by weight to 20 % by weight, in particular in the range from 0.1 % by weight to 15 % by weight, preferably in the range from 0.2 % by weight to 10 % by weight, particularly preferably in the range from 0.3 % by weight to 5 % by weight; and/or
wherein the metal of the metal layer (1b), relative to the multilayer plastic film (1), is present in amounts and/or in a proportion of at least 0.05 % by weight, in particular of at least 0.1 % by weight, preferably of at least 0.2 % by weight, particularly preferably of at least 0.3 % by weight; and/or
wherein the metal of the metal layer (1b), relative to the multilayer plastic film (1), is present in amounts and/or in a proportion of up to 20 % by weight, in particular of up to 15 % by weight, preferably of up to 10 % by weight, particularly preferably of up to 5 % by weight; and/or
wherein the metal layer (1b) is formed as an at least substantially full-surface layer and/or as an at least substantially continuous layer and/or as an at least substantially uninterrupted layer and/or as an at least substantially continuous layer; and/or
wherein the metal layer (1b) is formed at least substantially without gaps and/or at least substantially without gaps; and/or
wherein the metal layer (1b) has barrier layer properties (barrier properties) with respect to water vapor and/or gases, preferably oxygen, preferably barrier layer properties with respect to water vapor and gases, preferably oxygen; and/or wherein the metal layer (1b) is produced by means of thin-film techniques, in particular by means of vapor deposition, thermal spraying or plastic electroplating, preferably by means of vapor deposition, in particular by means of physical vapor deposition (PVC) or chemical vapor deposition (CVD); and/or
wherein the metal layer (1b) is produced by means of metallization and/or by means of metallization techniques; and/or
wherein the metal layer (1b) is applied to the inner side of the first outer foil (1a) and/or to the side of the first outer foil (1a) facing the second outer foil (1c) and/or is attached thereto, in particular by means of metallization and/or thin-film techniques, preferably by means of vapor phase deposition, and/or in particular with a layer thickness in the range from 0.001 µm to 50 µm, in particular in the range from 0.0015 µm to 35 µm, preferably in the range from 0.002 µm to 20 µm, particularly preferably in the range from 0.003 µm to 10 µm, and/or in particular in quantities and/or with a proportion in the range from 0.05 % by weight to 20 % by weight, in particular in the range from 0.1 % by weight to 15 % by weight, preferably in the range from 0.2 % by weight to 10 % by weight, particularly preferably in the range from 0.3 % by weight to 5 % by weight, based on the multilayer plastic film (1), and/or in particular as an aluminum layer.

7. Multilayer plastic film according to one of the preceding claims,
wherein the metal layer (1b) is opaque, in particular opaque with respect to the wavelength range of visible light, in particular wherein the metal layer (1b) has an opacity of at least 10 %, in particular of at least 20 %, preferably of at least 25 %, particularly preferably of at least 30 %, in particular determined in accordance with DIN 53146; and/or
wherein the metal layer (1b) has an optical density in the range from 1 to 5, in particular in the range from 1.5 to 4, preferably in the range from 2 to 3, in particular determined according to JIS K7605; and/or
wherein the (summed) layer thicknesses of the outer films (1a, 1c) are 60 % to 99.9 %, in particular 70 % of 99.5 %, preferably 80 % to 99.5 %, particularly preferably 85 % to 99 %, of the (total) layer thickness of the multilayer plastic film (1); and/or
wherein the ratio of the layer thicknesses of first outer film (1a) / metal layer (1b) / second outer film (1c) varies in the range of 50 90 : 0.5 20 : 30 - 60; and/or
wherein the first outer film (1a) comprises a laminate of at least three film layers (1a₁, 1a₂, 1a₃) bonded to one another, in particular bonded and/or coextruded by means of coextrusion; and/or
wherein the second outer film (1c) comprises a layered composite of at least three film layers (1c₁, 1c₂, 1c₃) bonded to one another, in particular bonded and/or coextruded by means of coextrusion, or is formed as a single-layer film, in particular as a single-layer plastic film preferably based on plastic recyclate or as a single-layer lacquer film; preferably wherein the second outer film (1c) comprises a laminated composite of at least three film layers (1c₁, 1c₂, 1c₃) bonded to one another, in particular bonded and/or coextruded by means of coextrusion.

8. Multilayer plastic film (1), in particular multilayer plastic composite film, based on plastic recyclate (recycled plastic) and having barrier layer properties to water vapor and/or gases according to one of the preceding claims,
wherein the multilayer plastic film (1) comprises a layered composite of several, in particular at least three, interconnected layers (1a, 1b, 1c),
wherein the multilayer plastic film (1) comprises a first outer film (1a) and a second outer film (1c) and a metal layer (1b) arranged between the first outer film (1a) and the second outer film (1c),
wherein the multilayer plastic film (1) has a plastic recyclate content of at least 80 % by weight based on the multilayer plastic film (1),
wherein the outer films (1a, 1c) each comprise a layer composite of at least three film layers (1a₁, 1a₂, 1a₃, 1c₁, 1c₂, 1c₃) bonded to one another, in particular bonded and/or coextruded by means of coextrusion, and
wherein the metal layer (1b) is applied to the inner side of the first outer film (1a) and/or to the side of the first outer film (1a) facing the second outer film (1c) and/or is attached thereto;
wherein the metal layer (1b) is produced by means of metallization and/or thin-film techniques, preferably by means of vapor deposition; and/or
wherein the metal layer (1b) is formed with a layer thickness in the range of 0.001 µm to 50 µm, in particular in the range of 0.0015 µm to 35 µm, preferably in the range of 0.002 µm to 20 µm, particularly preferably in the range of 0.003 µm to 10 µm; and/or
in particular wherein the metal layer (1b) is present in quantities and/or in a proportion in the range from 0.05 % by weight to 20 % by weight, in particular in the range from 0.1 % by weight to 15 % by weight, preferably in the range from 0.2 % by weight to 10 % by weight, particularly preferably in the range from 0.3 % by weight to 5 % by weight, relative to the multilayer plastic film (1); and/or
in particular wherein the metal layer (1b) is formed as an aluminum layer and/or in particular wherein the metal layer (1b) consists at least substantially of aluminum or is formed therefrom, preferably wherein the aluminum content of the metal layer (1b), based on the metal layer (1b), is at least 95 % by weight, in particular at least 96 % by weight, preferably at least 97 % by weight, particularly preferably at least 98 % by weight, very particularly preferably at least 99 % by weight.

9. Multilayer plastic film (1), in particular multilayer plastic composite film, based on plastic recyclate (recycled plastic) and having barrier layer properties to water vapor and/or gases according to one of the preceding claims,
wherein the multilayer plastic film (1) comprises a layered composite of several, in particular at least three, interconnected layers (1a, 1b, 1c),
wherein the multilayer plastic film (1) comprises a first outer film (1a) and a second outer film (1c) and a metal layer (1b) arranged between the first outer film (1a) and the second outer film (1c),
wherein the multilayer plastic film (1) has a plastic recyclate content of at least 80 % by weight based on the multilayer plastic film (1);
wherein the outer films (1a, 1c) each comprise a layer composite of at least three film layers (1a₁, 1a₂, 1a₃, 1c₁, 1c₂, 1c₃) bonded to one another, in particular bonded and/or coextruded by means of coextrusion;
wherein the multilayer plastic film (1) additionally comprises an adhesive layer and/or adhesive layer (1d), in particular wherein the adhesive layer and/or adhesive layer (1d) is arranged between the metal layer (1b) and the second outer film (1c), preferably wherein the adhesive layer and/or adhesive layer (1d) is applied and/or applied to the inner side of the second outer foil (1c) and/or to the side of the second outer foil (1c) facing the first outer foil (1a) and is bonded and/or adhered to the metal layer (1b), in particular is bonded and/or adhered over the entire surface thereof and
wherein the metal layer (1b) is applied and/or bonded to the inner side of the first outer foil (1a) and/or to the side of the first outer foil (1a) facing the second outer foil (1c);
wherein the metal layer (1b) is produced by means of metallization and/or thin-film techniques, preferably by means of vapor deposition; and/or
wherein the metal layer (1b) is formed with a layer thickness in the range of 0.001 µm to 50 µm, in particular in the range of 0.0015 µm to 35 µm, preferably in the range of 0.002 µm to 20 µm, particularly preferably in the range of 0.003 µm to 10 µm; and/or
in particular wherein the metal layer (1b) is present in quantities and/or in a proportion in the range from 0.05 % by weight to 20 % by weight, in particular in the range from 0.1 % by weight to 15 % by weight, preferably in the range from 0.2 % by weight to 10 % by weight, particularly preferably in the range from 0.3 % by weight to 5 % by weight, relative to the multilayer plastic film (1); and/or
in particular wherein the metal layer (1b) is formed as an aluminum layer and/or in particular wherein the metal layer (1b) consists at least substantially of aluminum or is formed therefrom, preferably wherein the aluminum content of the metal layer (1b), based on the metal layer (1b), is at least 95 % by weight, in particular at least 96 % by weight, preferably at least 97 % by weight, particularly preferably at least 98 % by weight, very particularly preferably at least 99 % by weight.

10. Use of a multilayer plastic film according to any one of the preceding claims for the production of packaging material and/or as packaging material;
in particular wherein the multilayer plastic film is used in the form of a flat film, tubular film or semi-tubular film; and/or
in particular wherein the multilayer plastic film is used in the form of outer packaging, tubes, bags or pouches; and/or
in particular wherein the multilayer plastic film is used for the packaging of bulk goods, in particular selected from the group of (plant) soils, fertilizers, mulch, humus, detergents, adhesives, pellets, granulates, powders, hygiene products, household goods and household products, or else for hygiene applications; and/or
in particular wherein the multilayer plastic film is used for packaging purposes and/or as packaging material in the non-food sector.

11. Packaging material comprising at least one multilayer plastic film according to any one of the preceding claims;
in particular wherein the packaging material and/or the multilayer plastic film is/are in the form of a flat film, tubular film or semi-tubular film; and/or
in particular wherein the packaging material and/or the multilayer plastic film is/are formed in the form of outer packaging, tubes, bags or pouches; and/or
in particular wherein the packaging material and/or the plastic film is/are designed for the packaging of bulk goods, in particular selected from the group of (plant) soils, fertilizers, mulch, humus, detergents, adhesives, pellets, granulates, powders, hygiene products, household goods and household products, or else for hygiene applications; and/or
in particular wherein the packaging material and/or the multilayer plastic film is/are designed for packaging purposes and/or as packaging material in the non-food sector.

## Revendications

1. Film plastique multicouche (1), en particulier film plastique composite multicouche, à base de matière plastique recyclée (plastique recyclé) et ayant des propriétés de barrière à la vapeur d'eau et/ou aux gaz,
le film plastique multicouche (1) comprenant un composite de plusieurs couches (1a, 1b, 1c), en particulier au moins trois, reliées entre elles,
le film plastique multicouche (1) comprenant une première feuille extérieure (1a) et une deuxième feuille extérieure (1c) et une couche métallique (1b) disposée entre la première feuille extérieure (1a) et la deuxième feuille extérieure (1c),
le film plastique multicouche (1) présentant une proportion de matière plastique recyclée d'au moins 80 % en poids, par rapport au film plastique multicouche (1),
le film plastique multicouche (1) présentant au moins essentiellement une seule sorte de plastique selon la norme DIN EN ISO 11469, la sorte de plastique étant présente avec une pureté de sorte d'au moins 90 % en poids, par rapport à la part de plastique du film plastique multicouche (1),
le premier film extérieur (1a) comprenant un assemblage de couches d'au moins trois couches de film (1a₁, 1a₂, 1a₃) reliées entre elles, en particulier reliées et/ou coextrudées par coextrusion,
la deuxième feuille extérieure (1c) comprenant un assemblage de couches d'au moins trois couches de feuilles (1c₁, 1c₂, 1c₃) reliées entre elles, en particulier reliées par coextrusion et/ou coextrudées, ou étant conçue comme une feuille à couche unique,
la couche métallique (1b) étant appliquée sur la face intérieure de la première feuille extérieure (1a) et/ou sur la face de la première feuille extérieure (1a) tournée vers la deuxième feuille extérieure (1c) et/ou y étant fixée,
la couche métallique (1b) étant produite par métallisation et/ou par des techniques à couche mince, de préférence par dépôt en phase vapeur, et
la couche métallique (1b) étant formée avec une épaisseur de couche comprise entre 0,001 µm et 50 µm.

2. Film plastique multicouche selon la revendication 1,
le film plastique multicouche (1) ne présentant qu'un ou des recyclats de plastique d'une (seule) sorte de plastique, en particulier un ou des recyclats de plastique d'une (seule) sorte de plastique selon DIN EN ISO 11469; et/ou
le film plastique multicouche (1) présentant, outre le recyclat de matière plastique et la couche métallique (1b), au moins essentiellement uniquement des ingrédients du groupe des charges, colorants, pigments colorés, parfums, agents anti-blocage, lubrifiants, stabilisants, plastifiants et agents plastifiants, liants, colles, matières plastiques primaires du même type de matière plastique selon DIN EN ISO 11469 que le recyclat de matière plastique, adjuvants et additifs ainsi que leurs mélanges et combinaisons; et/ou
le film plastique multicouche (1) ne présentant pas de matière plastique recyclée d'un autre type et/ou supplémentaire et/ou additionnelle; et/ou le film plastique multicouche (1) ne présentant pas de type de plastique différent et/ou autre et/ou supplémentaire, en particulier pas de type de plastique différent et/ou autre et/ou supplémentaire selon la norme DIN EN ISO 11469.

3. Film plastique multicouche selon la revendication 1 ou la revendication 2,
le film plastique multicouche (1) présentant une proportion (totale) de matière plastique dans la plage de 80 % en poids à 99,95 % en poids, en particulier dans la plage de 82,5 % en poids à 99,5 % en poids, de préférence dans la plage de 85 % en poids à 99 % en poids, de manière particulièrement préférée dans la plage de 87 % en poids à 98 % en poids, par rapport au film plastique multicouche (1); et/ou
le film plastique multicouche (1) présentant une part de métal, en particulier sous la forme de la couche métallique (1b), en quantités de l'ordre de 0,05 % à 20 % en poids, en particulier de l'ordre de 0,1 % à 15 % en poids, de préférence de l'ordre de 0,2 % à 10 % en poids, de manière particulièrement préférée de l'ordre de 0,3 % à 5 % en poids, par rapport au film plastique multicouche (1); et/ou
le film plastique multicouche (1) contenant des ingrédients choisis dans le groupe des charges, colorants, pigments colorés, parfums, agents anti-blocage, lubrifiants, stabilisants, plastifiants et agents plastifiants, liants, adhésifs, adjuvants et additifs ainsi que leurs mélanges et combinaisons, en quantités comprises entre 0,1 % et 20 % en poids. %, en particulier dans la plage de 0,2 % en poids à 17,5 % en poids, de préférence dans la plage de 0,2 % en poids à 15 % en poids, par rapport au film plastique multicouche (1).

4. Film plastique multicouche selon l'une des revendications précédentes,
le film plastique multicouche (1) présentant ou étant constitué de, les indications de pourcentage en poids suivantes se rapportant à chaque fois au film plastique multicouche (1) et devant être combinées et/ou sélectionnées de telle sorte qu'il en résulte 100 % en poids:
- du recyclat de plastique en quantités de l'ordre de 80 % en poids à 97 % en poids, en particulier en quantités de l'ordre de 82 % en poids à 96 % en poids, de préférence en quantités de l'ordre de 84 % en poids à 95 % en poids;
- le cas échéant, matière(s) plastique(s) primaire(s) du même type de matière plastique selon la norme DIN EN ISO 11469 que le recyclat de matière plastique, en particulier en quantités de l'ordre de 0,1 % à 15 % en poids, de préférence en quantités de l'ordre de 0,5 % à 10 % en poids, de préférence en quantités de l'ordre de 1 % à 9 % en poids;
- métal(s), en particulier sous la forme de la couche métallique (1b), en quantités de l'ordre de 0,05 % en poids à 20 % en poids, en particulier de l'ordre de 0,1 % en poids à 15 % en poids, de préférence de l'ordre de 0,2 % en poids à 10 % en poids, de manière particulièrement préférée de l'ordre de 0,3 % en poids à 5 % en poids,
- ingrédients choisis dans le groupe des charges, colorants, pigments colorés, parfums, agents anti-blocage, lubrifiants, stabilisateurs, plastifiants et agents plastifiants, liants, adhésifs, adjuvants et additifs ainsi que leurs mélanges et combinaisons, en quantités comprises entre 0,1 % et 20 % en poids, en particulier entre 0,2 % et 17,5 % en poids, de préférence entre 0,2 % et 15 % en poids.

5. Film plastique multicouche selon l'une quelconque des revendications précédentes,
le film plastique multicouche (1) présentant une épaisseur de couche dans la plage de 10 µm à 300 µm, en particulier dans la plage de 15 µm à 200 µm, de préférence dans la plage de 20 µm à 180 µm, de manière particulièrement préférée dans la plage de 25 µm à 175 µm et/ou
le film plastique multicouche (1) présentant une épaisseur de couche d'au moins 10 µm, en particulier d'au moins 15 µm, de préférence d'au moins 20 µm, de manière particulièrement préférée d'au moins 25 µm et/ou
le film plastique multicouche (1) présentant une épaisseur de couche allant jusqu'à 300 µm, en particulier jusqu'à 200 µm, de préférence jusqu'à 180 µm, de manière particulièrement préférée jusqu'à 175 µm.

6. Film plastique multicouche selon l'une des revendications précédentes,
la couche métallique (1b) et/ou le métal de la couche métallique (1b) étant choisis dans le groupe des métaux purs d'un type de métal, des alliages de métaux, des mélanges de métaux, des composés métalliques, en particulier des oxydes métalliques, et des mélanges de composés métalliques ainsi que leurs combinaisons, de préférence dans le groupe des métaux purs d'un type de métal, des alliages de métaux, des mélanges de métaux ainsi que leurs combinaisons, de manière particulièrement préférée des métaux purs d'un type de métal; et/ou
la couche métallique (1b) étant constituée au moins essentiellement d'un métal pur d'une sorte de métal ou formée à partir de celui-ci, en particulier d'un métal de transition ou d'un métal léger, de préférence de l'aluminium; et/ou
la couche métallique (1b) étant constituée au moins essentiellement d'aluminium ou formée à partir de celui-ci, en particulier la proportion d'aluminium de la couche métallique (1b), par rapport à la couche métallique (1b), étant d'au moins 95 % en poids, en particulier d'au moins 96 % en poids, de préférence d'au moins 97 % en poids, de manière particulièrement préférée d'au moins 98 % en poids, de manière tout particulièrement préférée d'au moins 99 % en poids; et/ou
la couche métallique (1b) présentant une épaisseur de couche de l'ordre de 0,0015 µm à 35 µm, de préférence de l'ordre de 0,002 µm à 20 µm, de manière particulièrement préférée de l'ordre de 0,003 µm à 10 µm et/ou
la couche métallique (1b) présentant une épaisseur de couche d'au moins 0,0015 µm, de préférence d'au moins 0,002 µm, de manière particulièrement préférée d'au moins 0,003 µm et/ou
la couche métallique (1b) ayant une épaisseur de couche allant jusqu'à 20 µm, de préférence jusqu'à 10 µm; et/ou
le métal de la couche métallique (1b) étant présent, par rapport au film plastique multicouche (1), en quantités et/ou avec une proportion de l'ordre de 0,05 % en poids à 20 % en poids, en particulier de l'ordre de 0,1 % en poids à 15 % en poids, de préférence de l'ordre de 0,2 % en poids à 10 % en poids, de manière particulièrement préférée de l'ordre de 0,3 % en poids à 5 % en poids; et/ou
le métal de la couche métallique (1b) étant présent, par rapport au film plastique multicouche (1), en quantités et/ou avec une proportion d'au moins 0,05 % en poids, en particulier d'au moins 0,1 % en poids, de préférence d'au moins 0,2 % en poids, de manière particulièrement préférée d'au moins 0,3 % en poids; et/ou le métal de la couche métallique (1b) étant présent, par rapport au film plastique multicouche (1), en quantités et/ou avec une proportion allant jusqu'à 20 % en poids, en particulier jusqu'à 15 % en poids, de préférence jusqu'à 10 % en poids, de manière particulièrement préférée jusqu'à 5 % en poids; et/ou
la couche métallique (1b) étant réalisée sous la forme d'une couche au moins sensiblement pleine et/ou d'une couche au moins sensiblement continue et/ou d'une couche au moins sensiblement continue et/ou d'une couche au moins sensiblement ininterrompue et/ou d'une couche au moins sensiblement contiguë; et/ou
la couche métallique (1b) étant réalisée au moins essentiellement sans lacunes et/ou au moins essentiellement sans lacunes; et/ou
la couche métallique (1b) présentant des propriétés de couche barrière (propriétés de barrière) vis-à-vis de la vapeur d'eau et/ou des gaz, de préférence de l'oxygène, de préférence des propriétés de couche barrière vis-à-vis de la vapeur d'eau et des gaz, de préférence de l'oxygène; et/ou
la couche métallique (1b) étant produite au moyen de techniques de dépôt en couche mince, en particulier au moyen d'un dépôt en phase gazeuse, d'une pulvérisation thermique ou d'une galvanisation de plastique, de préférence au moyen d'un dépôt en phase gazeuse, en particulier au moyen d'un dépôt physique en phase gazeuse (PVC) ou d'un dépôt chimique en phase gazeuse (CVD); et/ou
la couche métallique (1b) étant produite par métallisation et/ou par des techniques de métallisation; et/ou
la couche métallique (1b) étant appliquée sur la face intérieure de la première feuille extérieure (1a) et/ou sur la face de la première feuille extérieure (1a) tournée vers la deuxième feuille extérieure (1c) et/ou y étant fixée, en particulier au moyen d'une métallisation et/ou d'une technique à couche mince, de préférence au moyen d'un dépôt en phase gazeuse, et/ou en particulier avec une épaisseur de couche de l'ordre de 0,001 µm à 50 µm, en particulier de l'ordre de 0,0015 µm à 35 µm, de préférence de l'ordre de 0,002 µm à 20 µm, de manière particulièrement préférée de l'ordre de 0,003 µm à 10 µm, et/ou en particulier en quantités et/ou avec une proportion de l'ordre de 0,05 % en poids. - % à 20 % en poids, en particulier dans la plage de 0,1 % à 15 % en poids, de préférence dans la plage de 0,2 % à 10 % en poids, de manière particulièrement préférée dans la plage de 0,3 % à 5 % en poids, par rapport au film plastique multicouche (1), et/ou en particulier comme couche d'aluminium.

7. Film plastique multicouche selon l'une des revendications précédentes,
la couche métallique (1b) étant opaque, en particulier opaque par rapport à la plage de longueurs d'onde de la lumière visible, en particulier la couche métallique (1b) présentant une opacité d'au moins 10 %, en particulier d'au moins 20 %, de préférence d'au moins 25 %, de manière particulièrement préférée d'au moins 30 %, en particulier déterminée selon DIN 53146; et/ou
la couche métallique (1b) présentant une densité optique dans la plage de 1 à 5, en particulier dans la plage de 1,5 à 4, de préférence dans la plage de 2 à 3, déterminée en particulier selon JIS K7605; et/ou
les épaisseurs de couche (cumulées) des films extérieurs (1a, 1c) représentant 60 % à 99,9 %, en particulier 70 % à 99,5 %, de préférence 80 % à 99,5 %, de manière particulièrement préférée 85 % à 99 %, de l'épaisseur de couche (totale) du film plastique multicouche (1); et/ou
le rapport des épaisseurs de couche du premier film extérieur (1a) / de la couche métallique (1b) / du deuxième film extérieur (1c) variant dans la plage de 50 - 90 : 0,5 - 20 : 30 - 60; et/ou
la première feuille extérieure (1a) comprenant un assemblage de couches d'au moins trois couches de feuilles (1a₁, 1a₂, 1a₃) reliées entre elles, en particulier reliées et/ou coextrudées par coextrusion; et/ou
le deuxième film extérieur (1c) comprenant un assemblage de couches d'au moins trois couches de film (1c1, 1c2, 1c3) reliées entre elles, en particulier reliées et/ou coextrudées par coextrusion, ou étant conçu comme un film à couche unique, en particulier comme un film plastique à couche unique, de préférence à base de matière plastique recyclée, ou comme un film de vernis à couche unique; de préférence, le deuxième film extérieur (1c) comprenant un assemblage de couches d'au moins trois couches de film (1c₁, 1c₂, 1c₃) reliées entre elles, en particulier reliées et/ou coextrudées par coextrusion.

8. Film plastique multicouche (1), en particulier film plastique multicouche composite, à base de plastique recyclé (plastique recyclé) et présentant des propriétés de barrière à la vapeur d'eau et/ou aux gaz selon l'une des revendications précédentes,
le film plastique multicouche (1) comprenant un composite de plusieurs couches (1a, 1b, 1c), en particulier au moins trois, reliées entre elles,
le film plastique multicouche (1) comprenant un premier film extérieur (1a) et un deuxième film extérieur (1c) et une couche métallique (1b) disposée entre le premier film extérieur (1a) et le deuxième film extérieur (1c),
le film plastique multicouche (1) présentant une proportion de matière plastique recyclée d'au moins 80 % en poids, par rapport au film plastique multicouche (1),
les films extérieurs (1a, 1c) comprenant chacun un assemblage de couches d'au moins trois couches de film (1a₁, 1a₂, 1a₃, 1c₁, 1c₂, 1c₃) reliées entre elles, en particulier reliées par coextrusion et/ou coextrudées, et
la couche métallique (1b) étant appliquée sur la face intérieure de la première feuille extérieure (1a) et/ou sur la face de la première feuille extérieure (1a) tournée vers la deuxième feuille extérieure (1c) et/ou y étant fixée;
la couche métallique (1b) étant produite au moyen de techniques de métallisation et/ou de couches minces, de préférence par dépôt en phase vapeur; et/ou
la couche métallique (1b) étant formée avec une épaisseur de couche de l'ordre de 0,001 µm à 50 µm, en particulier de l'ordre de 0,0015 µm à 35 µm, de préférence de l'ordre de 0,002 µm à 20 µm, de manière particulièrement préférée de l'ordre de 0,003 µm à 10 µm et/ou
en particulier la couche métallique (1b) étant présente en quantités et/ou avec une proportion dans la plage de 0,05 % en poids à 20 % en poids, en particulier dans la plage de 0,1 % en poids à 15 % en poids, de préférence dans la plage de 0,2 % en poids à 10 % en poids, de manière particulièrement préférée dans la plage de 0,3 % en poids à 5 % en poids, par rapport au film plastique multicouche (1); et/ou
en particulier la couche métallique (1b) étant réalisée sous forme de couche d'aluminium et/ou en particulier la couche métallique (1b) étant constituée au moins essentiellement d'aluminium ou étant formée à partir d'aluminium, de préférence la proportion d'aluminium de la couche métallique (1b), par rapport à la couche métallique (1b), étant d'au moins 95 % en poids, en particulier d'au moins 96 % en poids, de préférence d'au moins 97 % en poids, de manière particulièrement préférée d'au moins 98 % en poids, de manière tout particulièrement préférée d'au moins 99 % en poids.

9. Film plastique multicouche (1), en particulier film plastique composite multicouche, à base de plastique recyclé (plastique recyclé) et présentant des propriétés de barrière à la vapeur d'eau et/ou aux gaz selon l'une des revendications précédentes,
le film plastique multicouche (1) comprenant un composite de plusieurs couches (1a, 1b, 1c), en particulier au moins trois, reliées entre elles,
le film plastique multicouche (1) comprenant un premier film extérieur (1a) et un deuxième film extérieur (1c) et une couche métallique (1b) disposée entre le premier film extérieur (1a) et le deuxième film extérieur (1c),
le film plastique multicouche (1) présentant une proportion de matière plastique recyclée d'au moins 80 % en poids, par rapport au film plastique multicouche (1);
les films extérieurs (1a, 1c) comprenant chacun un assemblage de couches d'au moins trois couches de film (1a₁, 1a₂, 1a₃, 1c₁, 1c₂, 1c₃) reliées entre elles, en particulier reliées et/ou coextrudées par coextrusion;
le film plastique multicouche (1) présentant en outre une couche adhésive et/ou une couche de collage (1d), en particulier la couche adhésive et/ou la couche de collage (1d) étant disposée entre la couche métallique (1b) et le deuxième film extérieur (1c), de préférence, la couche d'adhérence et/ou la couche adhésive (1d) étant appliquée et/ou déposée sur la face intérieure de la deuxième feuille extérieure (1c) et/ou sur la face de la deuxième feuille extérieure (1c) tournée vers la première feuille extérieure (1a) et étant reliée et/ou collée à la couche métallique (1b), en particulier reliée et/ou collée sur toute la surface; et
la couche métallique (1b) étant appliquée sur la face intérieure de la première feuille extérieure (1a) et/ou sur la face de la première feuille extérieure (1a) tournée vers la deuxième feuille extérieure (1c) et/ou y étant fixée;
la couche métallique (1b) étant produite au moyen de techniques de métallisation et/ou de couches minces, de préférence par dépôt en phase vapeur; et/ou
la couche métallique (1b) étant formée avec une épaisseur de couche de l'ordre de 0,001 µm à 50 µm, en particulier de l'ordre de 0,0015 µm à 35 µm, de préférence de l'ordre de 0,002 µm à 20 µm, de manière particulièrement préférée de l'ordre de 0,003 µm à 10 µm et/ou
en particulier la couche métallique (1b) étant présente en quantités et/ou avec une proportion dans la plage de 0,05 % en poids à 20 % en poids, en particulier dans la plage de 0,1 % en poids à 15 % en poids, de préférence dans la plage de 0,2 % en poids à 10 % en poids, de manière particulièrement préférée dans la plage de 0,3 % en poids à 5 % en poids, par rapport au film plastique multicouche (1); et/ou
en particulier la couche métallique (1b) étant réalisée sous forme de couche d'aluminium et/ou en particulier la couche métallique (1b) étant constituée au moins essentiellement d'aluminium ou étant formée à partir d'aluminium, de préférence la proportion d'aluminium de la couche métallique (1b), par rapport à la couche métallique (1b), étant d'au moins 95 % en poids, en particulier d'au moins 96 % en poids, de préférence d'au moins 97 % en poids, de manière particulièrement préférée d'au moins 98 % en poids, de manière tout particulièrement préférée d'au moins 99 % en poids.

10. Utilisation d'un film plastique multicouche selon l'une des revendications précédentes pour la fabrication de matériau d'emballage et/ou comme matériau d'emballage;
en particulier où le film plastique multicouche est utilisé sous la forme d'un film plat, d'un film tubulaire ou d'un film semi-tubulaire; et/ou
en particulier où le film plastique multicouche est utilisé sous la forme de suremballages, de tubes, de sacs ou de sachets; et/ou
en particulier où le film plastique multicouche est utilisé pour l'emballage de produits en vrac, notamment choisis dans le groupe des terreaux (de plantation), des engrais, du paillis, de l'humus, des détergents, des colles, des granulés, des poudres, des produits d'hygiène, des produits ménagers et des articles de ménage, ou pour des applications d'hygiène; et/ou
en particulier où le film plastique multicouche est utilisé à des fins d'emballage et/ou comme matériau d'emballage dans le domaine non-alimentaire.

11. Matériau d'emballage comprenant au moins un film plastique multicouche selon l'une quelconque des revendications précédentes;
en particulier où le matériau d'emballage et/ou le film plastique multicouche se présente(nt) sous la forme d'un film plat, d'un film tubulaire ou d'un film semi-tubulaire; et/ou
en particulier où le matériau d'emballage et/ou le film plastique multicouche est/sont réalisé(s) sous la forme de suremballages, de tubes, de sachets ou de sacs; et/ou
en particulier où le matériau d'emballage et/ou le film plastique est/sont conçu(s) pour l'emballage de produits en vrac, en particulier choisis dans le groupe des terreaux (de plantation), des engrais, du paillis, de l'humus, des détergents, des colles, des granulés, des poudres, des produits d'hygiène, des produits ménagers et des articles de ménage, ou encore pour des applications d'hygiène; et/ou
en particulier où le matériau d'emballage et/ou le film plastique multicouche est/sont conçu(s) à des fins d'emballage et/ou comme matériau d'emballage dans le domaine non-alimentaire (non-food).
